(19) Europäisches Patentamt
European Patent Office
Office européen des brevets

(11) **EP 3 403 392 B1**

(12) **EUROPÄISCHE PATENTSCHRIFT**

(45) Veröffentlichungstag und Bekanntmachung des Hinweises auf die Patenterteilung:
**06.12.2023  Patentblatt 2023/49**

(21) Anmeldenummer: **16819571.7**

(22) Anmeldetag: **22.12.2016**

(51) Internationale Patentklassifikation (IPC):
**H04N 23/63** *(2023.01)*

(52) Gemeinsame Patentklassifikation (CPC):
**H04N 13/239; H04N 23/45; H04N 23/55; H04N 23/698**

(86) Internationale Anmeldenummer:
**PCT/EP2016/082478**

(87) Internationale Veröffentlichungsnummer:
**WO 2017/121609 (20.07.2017 Gazette 2017/29)**

(54) **MULTIAPERTURABBILDUNGSVORRICHTUNG, ABBILDUNGSSYSTEM UND VERFAHREN ZUM ERFASSEN EINES OBJEKTBEREICHS**

MULTI APERTURE CAMERA AND METHOD FOR DRIVING THE SAME

DÉTECTEUR OPTIQUE À OUVERTURES MULTIPLES ET METHODE DE DÉTECTION DE SIGNAUX OPTIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.01.2016  DE 102016200285**

(43) Veröffentlichungstag der Anmeldung:
**21.11.2018  Patentblatt 2018/47**

(73) Patentinhaber: **Fraunhofer-Gesellschaft zur Förderung
der angewandten Forschung e.V.
80686 München (DE)**

(72) Erfinder:
• **WIPPERMANN, Frank
98617 Meiningen (DE)**

• **BRÜCKNER, Andreas
07743 Jena (DE)**
• **REIMANN, Andreas
07745 Jena (DE)**

(74) Vertreter: **König, Andreas Rudolf
Schoppe, Zimmermann, Stöckeler
Zinkler, Schenk & Partner mbB
Patentanwälte
Radlkoferstraße 2
81373 München (DE)**

(56) Entgegenhaltungen:
**EP-A2- 0 710 039        WO-A2-2009/125304
WO-A2-2011/045324**

EP 3 403 392 B1

**Beschreibung**

Die vorliegende Erfindung bezieht sich auf eine Multiaperturabbildungsvorrichtung, auf ein Abbildungssystem mit einer Multiaperturabbildungsvorrichtung, beispielsweise ein Mobiltelefon, und auf ein Verfahren zum Erfassen eines Objektbereichs. Die vorliegende Erfindung bezieht sich ferner auf eine Multiaperturabbildungsvorrichtung und ein Abbildungssystem mit kanalweiser Nutzung mehrerer nicht zusammenhängender Bildbereiche.

Konventionelle Kameras übertragen in einem Kanal des gesamte Gesichtsfeld und sind in ihrer Miniaturisierung begrenzt. In Smartphones werden zwei Kameras genutzt, die in und entgegen dem Richtungssinn der Flächennormalen des Displays orientiert sind. In bekannten Multiaperturabbildungssystemen ist jedem Kanal ein zusammenhängender Teilobjektbereich zugeordnet, die in einen zusammenhängenden Teilbildbereich transformiert wird.

In WO 2011/045324 A2 ist eine optische Vorrichtung zur Abbildung, umfassend mindestens ein Mikrolinsenfeld mit mindestens zwei Mikrolinsen und einen Bildsensor mit mindestens zwei Bilddetektormatrizen beschrieben.

Wünschenswert wäre demnach ein Konzept, das eine miniaturisierte Vorrichtung zum Erfassen eines Gesamtgesichtsfeldes unter Gewährleistung einer hohen Bildqualität ermöglicht.

Diese Aufgabe wird durch den Gegenstand der unabhängigen Patentansprüche gelöst.

Ein Kerngedanke der vorliegenden Erfindung besteht darin, erkannt zu haben, dass ein optischer Kanal, der zumindest eine Optik aufweist, gleichzeitig voneinander verschiedene und disjunkte Teilobjektbereiche eines zu erfassenden Objektbereichs abbildet. Das bedeutet, dass zum Erfassen eines Bildes die voneinander verschiedenen Teilobjektbereiche durch eine gemeinsame Optik auf voneinander verschiedene Bildsensorbereiche eines Bildsensors abgebildet werden. Dies ermöglicht eine gemeinsame Nutzung einer Optik zur Abbildung unterschiedlicher Teilobjektbereiche, eine reduzierte Anzahl von Abbildungsoptiken und somit eine Miniaturisierung eines Optik-Arrays, das für die Abbildung des Objektbereichs genutzt wird.

Gemäß einem Ausführungsbeispiel umfasst eine Multiaperturabbildungsvorrichtung zumindest einem Bildsensor; und ein Array von nebeneinander angeordneten optischen Kanälen, wobei jeder optische Kanal eine Optik zur Abbildung zumindest eines Teilbereichs eines Objektbereichs auf einen Bildsensorbereich des Bildsensors aufweist. Eine erste Optik eines ersten optischen Kanals ist konfiguriert, um durch eine gemeinsame Linse einen ersten Teilbereich des Objektbereichs auf einen ersten Bildsensorbereich und einen zweiten Teilbereich des Objektbereichs auf einen zweiten Bildsensorbereich abzubilden, der von dem ersten Bildsensorbereich verschieden ist und der benachbart zu dem ersten Bildsensorbereich angeordnet ist, wobei eine zweite Optik eines zweiten optischen Kanals konfiguriert ist, um zumindest einen dritten Teilbereich des Objektbereichs auf einen dritten Bildsensorbereich (58c) abzubilden. Der erste Teilbereich und der zweite Teilbereich in dem Objektbereich sind disjunkt und weisen eine Bildlücke dazwischen auf, und wobei der dritte Teilbereich mit dem ersten Teilbereich unvollständig überlappt. Eine Gesamtzahl der optischen Kanäle ist konfiguriert, um den Objektbereich vollständig zu übertragen. Der dritte Teilbereich ist in dem Objektbereich zwischen dem ersten Teilbereich und dem zweiten Teilbereich angeordnet. Zwischen dem ersten Bildsensorbereich und dem zweiten Bildsensorbereich ist eine bautechnische Lücke angeordnet ist. Der erste Bildsensorbereich ist unmittelbar benachbart zu dem zweiten Bildsensorbereich angeordnet, und der dritte Bildsensorbereich ist unmittelbar benachbart zu dem ersten oder zweiten Bildsensorbereich angeordnet. Vorteilhaft an diesem Ausführungsbeispiel ist eine mögliche Reduktion der Anzahl erforderlicher optischer Kanäle in dem Array und somit der Optiken (Linsen). Dies führt zu einer vereinfachten und preiswertigen Fertigung in Folge eingesparter Material- und Integrationskosten sowie einer Reduktion der Breite des Aufbaus, somit zu einer Miniaturisierung des Aufbaus. Die Breite bezieht sich bspw. auf eine Zeilenerstreckungsrichtung des Arrays, entlang der die optischen Kanäle angeordnet ) sind. Zusätzlich tritt zwischen dem ersten und zweiten Teilbereich keine objektabhängige Disparität, also laterale Verschiebung der Bildpositionen auf, da dieselbe Optik genutzt wird und mithin keine Parallaxe zu verzeichnen ist. Gemäß einer Weiterbildung überlappt der dritte Teilbereich auch mit dem zweiten Teilbereich unvollständig, so dass ein zusammenhängender Objektbereich erfasst wird.

Gemäß einem weiteren Ausführungsbeispiel umfasst ein Abbildungssystem eine derartige Multiaperturabbildungsvorrichtung. Ausführungsformen eines Abbildungssystems umfassen zumindest eine erste und eine zweite Multiaperturabbildungsvorrichtung, so dass der Objektbereich stereoskop oder mit einer höheren Ordnung erfassbar ist. Dies ermöglicht sowohl 3D-Aufnahmen des Objektbereichs als auch eine höher auflösende Bildaufnahme durch Ausnutzung der Superresolution.

Gemäß einem weiteren Ausführungsbeispiel umfasst ein Verfahren zum Erfassen eines Objektbereichs ein Abbilden des Objektbereichs mit einem Array von nebeneinander angeordneten optischen Kanälen, durch Abbilden zumindest eines Teilbereichs des Objektbereichs mit jedem optischen Kanal durch eine Optik des optischen Kanals auf einen Bildsensorbereich eines Bildsensors. Das Abbilden des Objektbereichs erfolgt so, dass ein erster Teilbereich des Objektbereichs auf einen ersten Bildsensorbereich und ein zweiter Teilbereich des Objektbereichs auf einen zweiten Bildsensorbereich durch eine gemeinsame Linse des ersten optischen Kanals abgebildet werden. Ein dritter Teilbereich des Objektbereichs wird durch eine zweite Optik eines zweiten optischen Kanals abgebildet, so dass der erste Teilbereich und der zweite Teilbereich in dem Objektbereich disjunkt sind und eine Bildlücke dazwischen aufweisen, und so dass der dritte Teilbereich mit dem ersten Teilbereich unvollständig überlappt. Das Abbilden wird ausgeführt, so dass eine Gesamtzahl der optischen Kanäle konfiguriert ist, um das Objektbereich vollständig zu übertragen, so dass der dritte Teilbereich in dem Objektbereich zwischen dem ersten Teilbereich und dem zweiten Teilbereich angeordnet ist, so dass zwischen dem ersten Bildsensorbereich und dem zweiten Bildsensorbereich eine bautechnische Lücke angeordnet ist, und so dass der erste Bildsensorbereich unmittelbar benachbart zu dem zweiten Bildsensorbereich angeordnet ist, und der dritte Bildsensorbereich unmittelbar benachbart zu dem ersten oder zweiten Bildsensorbereich angeordnet ist.

Gemäß einem Ausführungsbeispiel umfasst eine Multiaperturabbildungsvorrichtung ein einzeiliges Array von nebeneinander angeordneten optischen Kanälen und eine Strahlumlenkeinrichtung zum Umlenken eines Strahlengangs der optischen Kanäle. Die Strahlumlenkeinrichtung weist eine erste Stellung und eine zweite Stellung auf, zwischen denen die Strahlumlenkeinrichtung entlang einer Zeilenerstreckungsrichtung des einzeiligen Arrays translatorisch bewegbar ist. Die Strahlumlenkeinrichtung ist so ausgebildet, dass sie in der ersten Stellung und in der zweiten Stellung den Strahlengang jedes optischen Kanals in eine voneinander verschiedene Richtung umlenkt.

Gemäß einem weiteren Ausführungsbeispiel ist zumindest ein Aktor eines Bildstabilisators und/oder einer Fokussiereinrichtung so angeordnet ist, dass er zumindest teilweise zwischen zwei Ebenen angeordnet ist, die durch Seiten eines Quaders aufgespannt werden. Die Seiten des Quaders sind zueinander sowie zu einer Zeilenerstreckungsrichtung des Arrays und eines Teils des Strahlengangs der optischen Kanäle zwischen dem Bildsensor und der Strahlumlenkeinrichtung parallel ausgerichtet. Eine Richtung der Oberflächennormalen der Ebenen kann als Dickenrichtung der Vorrichtung verstanden werden. Das Volumen des Quaders ist minimal und umfasst dennoch den Bildsensor, das Array und die Strahlumlenkeinrichtung. Dies ermöglicht eine flache Ausführung des Gehäuses. Im Gegensatz zu bestehenden Lösungen ermöglicht dies, dass die Kamera dabei in Dickenrichtung in keinem der Zustände aus dem quaderförmigen Volumen des Gehäuses heraus ragt.

Weitere vorteilhafte Ausführungsformen sind der Gegenstand der abhängigen Patentansprüche.

Bevorzugte Ausführungsbeispiele der vorliegenden Erfindung werden nachfolgend Bezug nehmend auf die beiliegenden Zeichnungen erläutert. Es zeigen:

Fig. 1          eine schematische Aufsicht auf eine Multiaperturabbildungsvorrichtung gemäß einem Ausführungsbeispiel;

Fig. 2a          eine schematische Aufsicht auf ein alternatives Konzept zum Abbilden eines Gesamtobjektbereichs oder Gesamtgesichtsfeldes;

Fig. 2b          eine schematische Aufsicht auf eine Multiaperturabbildungsvorrichtung, bei der die optischen Kanäle über geneigte optische Achsen verfügen,

Fig. 3a          eine schematische Aufsicht auf Bildsensorbereiche einer Multiaperturabbildungsvorrichtung gemäß hierin beschriebenen Ausführungsbeispielen;

Fig. 3b          eine hypothetische Verteilung von Teilobjektbereichen entlang zweier Richtungen;

Fig. 4a          eine schematische Aufsicht auf eine Multiaperturabbildungsvorrichtung gemäß einem Ausführungsbeispiel, die Bildsensoren aufweist zum Abbilden eines Teilbereichs des Objektbereichs;

Fig. 4b          eine schematische Aufsicht auf eine Multiaperturabbildungsvorrichtung gemäß einem Ausführungsbeispiel, die zusätzlich eine Strahlumlenkeinrichtung aufweist;

Fig. 5a          eine schematische Aufsicht auf eine Multiaperturabbildungsvorrichtung gemäß einem Ausführungsbeispiel, bei der ein monolithischer Bildsensor angeordnet ist;

Fig. 5b          eine schematische Aufsicht auf die Multiaperturabbildungsvorrichtung aus Fig. 5a, bei der eine Strahlumlenkeinrichtung angeordnet ist;

Fig. 6          eine schematische Aufsicht auf eine Multiaperturabbildungsvorrichtung gemäß einem Ausführungsbeispiel, bei der in zumindest einem optischen Kanal zumindest eine weitere Linse angeordnet ist;

Fig. 7a          eine schematische Aufsicht auf eine Multiaperturabbildungsvorrichtung gemäß einem Ausführungsbeispiel, die eine zumindest teilweise opake Struktur zwischen benachbarten Teilbereichen innerhalb eines optischen Kanals aufweist;

Fig. 7b          eine schematische Aufsicht auf eine Multiaperturabbildungsvorrichtung gemäß einem weiteren Ausführungsbeispiel, bei der die zumindest teilweise opaken Strukturen einen veränderlichen Querschnitt aufweisen;

Fig. 7c eine schematische Aufsicht auf eine Multiaperturabbildungsvorrichtung gemäß einem Ausführungsbeispiel, bei der die optischen Kanäle Teilbereichsoptiken aufweisen;

Fig. 7d eine schematische Aufsicht auf eine Multiaperturabbildungsvorrichtung gemäß einem Ausführungsbeispiel, bei der die zumindest teilweise opaken Strukturen gerade ausgebildet sind;

Fig. 7e eine schematische Aufsicht auf eine weitere Multiaperturabbildungsvorrichtung gemäß einem Ausführungsbeispiel, die Teilbereichsoptiken aufweist;

Fig. 7f eine schematische Aufsicht auf eine Multiaperturabbildungsvorrichtung gemäß einem Ausführungsbeispiel, bei der Teilbereichsoptiken zusammenhängend gebildet sind;

Fig. 7g eine schematische Aufsicht eine Multiaperturabbildungsvorrichtung gemäß einem Ausführungsbeispiel, bei der die Optiken der optischen Kanäle als zusammenhängende Komponente gebildet sind;

Fig. 7h eine schematische Seitenschnittansicht einer Multiaperturabbildungsvorrichtung gemäß einem Ausführungsbeispiel, bei der die Optiken der optischen Kanäle in den zwei optischen Ebenen angeordnet sind;

Fig. 8a eine schematische Aufsicht auf eine Multiaperturabbildungsvorrichtung gemäß einem Ausführungsbeispiel, bei der die Linsen einer ersten optischen Ebene an einem gemeinsamen transparenten Substrat angeordnet sind;

Fig. 8b eine schematische Aufsicht auf eine Multiaperturabbildungsvorrichtung gemäß einem Ausführungsbeispiel, bei der zwischen den Teilbereichen eines optischen Kanals und den Teilbereichen eines anderen optischen Kanals die zumindest teilweise opaken Strukturen angeordnet sind;

Fig. 9a eine schematische Aufsicht auf ein Abbildungssystem gemäß einem Ausführungsbeispiel, das eine erste Multiaperturabbildungsvorrichtung und eine zweite Multiaperturabbildungsvorrichtung aufweist;

Fig. 9b eine schematische Aufsicht auf ein Abbildungssystem gemäß einem weiteren Ausführungsbeispiel bei dem zwei Multiaperturabbildungsvorrichtungen einen gemeinsamen Bildsensor 12 und eine gemeinsame Strahlumlenkeinrichtung 18 aufweisen;

Fig. 10a eine schematische Aufsicht auf ein Abbildungssystem gemäß einem Ausführungsbeispiel, das für jeden Teilbereich eines optischen Kanals einen Bildsensor aufweist;

Fig. 10b eine schematische Aufsicht auf ein Abbildungssystem gemäß einem Ausführungsbeispiel, bei dem für zwei Multiaperturabbildungsvorrichtungen eine gemeinsame Strahlumlenkeinrichtung angeordnet ist;

Fig. 11a eine schematische Aufsicht auf eine Multiaperturabbildungsvorrichtung gemäß einem Ausführungsbeispiel, bei der die optischen Kanäle jeweils ausgebildet sind, um zwei oder mehrere Teilbereiche des Objektbereichs abzubilden;

Fig. 11b eine schematische beispielhafte Ansicht der Teilobjektbereiche zur Veranschaulichung der disjunkten Teilbereiche;

Fig. 11c eine tatsächliche Anordnung der Teilobjektbereiche in dem Objektbereich, wie er durch die Strahlumlenkeinrichtung erhalten werden kann, gemäß einem Ausführungsbeispiel;

Fig. 12a eine schematische Aufsicht auf die Multiaperturabbildungsvorrichtung aus Fig. 11a-c, bei der die Bildsensoren als ein zusammenhängender Bildsensor gebildet sind, gemäß einem Ausführungsbeispiel;

Fig. 12b eine schematische Aufsicht auf die Multiaperturabbildungsvorrichtung aus Fig. 11a-c, bei der die zumindest teilweise opaken Strukturen zwischen den Teilbereichen der optischen Kanäle angeordnet sind, gemäß einem Ausführungsbeispiel;

Fig. 12c      eine schematische Aufsicht auf die Multiaperturabbildungsvorrichtung aus Fig. 11a-c, bei der die Strahlumlenkeinrichtung pro Kanal eine Facette aufweist;

Fig. 13a      eine schematische Aufsicht auf eine Multiaperturabbildungsvorrichtung gemäß einem Ausführungsbeispiel, die gegenüber der Multiaperturabbildungsvorrichtung aus Fig. 11a-c Aperturblenden aufweist;

Fig. 13b      eine schematische Aufsicht auf eine Multiaperturabbildungsvorrichtung gemäß einem Ausführungsbeispiel, die Teilbereichsblenden aufweist;

Fig. 14      ein schematisches Diagramm der optischen Verzeichnung einer möglichen Ausgestaltungsform der von mehreren Teilbereichen genutzten Optiken gemäß einem Ausführungsbeispiel;

Fig. 15a      eine schematische Seitenschnittansicht einer Vorrichtung gemäß einem Ausführungsbeispiel in einem ersten Betriebszustand;

Fig. 15b      eine schematische Seitenschnittansicht der Vorrichtung aus Fig. 15a in einem zweiten Betriebszustand;

Fig. 16      eine schematische Seitenschnittansicht einer Vorrichtung gemäß einem weiteren Ausführungsbeispiel, die eine Abdeckung aufweist;

Fig. 16b      eine schematische Seitenschnittansicht der Vorrichtung aus Fig. 16a in einem zweiten Betriebszustand;

Fig. 16c      eine schematische Seitenschnittansicht der Vorrichtung aus Fig. 16a in einer dritten Position;

Fig. 17a      eine schematische Seitenschnittansicht einer Vorrichtung gemäß einem weiteren Ausführungsbeispiel in dem ersten Betriebszustand, die eine zumindest teilweise transparente Abdeckung aufweist;

Fig. 17b      eine schematische Seitenschnittansicht der Vorrichtung aus Fig. 17a in dem zweiten Betriebszustand;

Fig. 17c      eine schematische Seitenschnittansicht der Vorrichtung aus Fig. 17a, bei der eine Strahlumlenkeinrichtung zusätzlich translatorisch bewegbar ist;

Fig. 18a      eine schematische Seitenschnittansicht einer Vorrichtung gemäß einem Ausführungsbeispiel in dem ersten Betriebszustand mit einer translatorischen verschiebbaren Abdeckung;

Fig. 18b      eine schematische Seitenschnittansicht der Vorrichtung aus Fig. 18a in dem zweiten Betriebszustand;

Fig. 19a      eine schematische Seitenschnittansicht einer Vorrichtung gemäß einem Ausführungsbeispiel, bei der die Abdeckung rotatorisch bewegbar angeordnet ist;

Fig. 19b      eine schematische Seitenschnittansicht der Vorrichtung aus Fig. 19a bei der ein Verfahrschlitten translatorisch bewegbar ist;

Fig. 19c      eine schematische Seitenschnittansicht der Vorrichtung aus Fig. 19a in dem zweiten Betriebszustand;

Fig. 20a      eine schematische Seitenschnittansicht einer Vorrichtung gemäß einem Ausführungsbeispiel in dem ersten Betriebszustand, die gegenüber der Vorrichtung aus Fig. 19 zumindest teilweise transparente Abdeckungen aufweist;

Fig. 20b      eine schematische Seitenschnittansicht der Vorrichtung aus Fig. 20a, bei der die Strahlumlenkeinrichtung eine Zwischenposition zwischen einer ersten Position und einer zweiten Position aufweist;

Fig. 20c      eine schematische Seitenschnittansicht der Vorrichtung aus Fig. 20a, bei der die Strahlumlenkeinrichtung vollständig aus einem Gehäusevolumen herausgefahren ist;

Fig. 20d      eine schematische Seitenschnittansicht der Vorrichtung aus Fig. 20a, bei der ein Abstand zwischen den zumindest teilweise transparenten Abdeckungen verglichen mit den Fig. 20a-c vergrößert ist;

Fig. 21      eine schematische perspektivische Ansicht einer Vorrichtung gemäß einem Ausführungsbeispiel, die drei Multiaperturabbildungsvorrichtungen aufweist;

Fig. 22    eine vergrößerte perspektivische Ansicht eines Ausschnitts der Vorrichtung aus Fig. 21;

Fig. 23    eine schematische perspektivische Ansicht einer Vorrichtung gemäß einem Ausführungsbeispiel bei der die Strahlumlenkeinrichtung mittels Befestigungselementen mit der Multiaperturabbildungsvorrichtung verbunden ist;

Fig. 24a    eine schematische perspektivische Ansicht einer Vorrichtung gemäß einem Ausführungsbeispiel in dem ersten Betriebszustand mit einer exemplarischen Form einer Abdeckung;

Fig. 24b    eine schematische Ansicht der Vorrichtung aus Fig. 24a in dem zweiten Betriebszustand gemäß einem Ausführungsbeispiel;

Fig. 24c    eine schematische Darstellung einer Alternative zu Fig. 24a gemäß einem Ausführungsbeispiel;

Fig. 25a-b    detaillierte Darstellungen einer Multiaperturabbildungsvorrichtung gemäß einem Ausführungsbeispiel;

Fig. 26    die Multiaperturabbildungsvorrichtung gem. Fig. 25a-b, die gemäß einem Ausführungsbeispiel um zusätzliche Einrichtungen zur für Realisierung von Relativbewegungen für eine optische Bildstabilisierung und zur Anpassung der Fokussierung ergänzt wird;

Fig. 27a    eine schematische Ansicht einer in einem flachen Gehäuse angeordnete Multiaperturabbildungsvorrichtung gem. einem Ausführungsbeispiel;

Fig. 27b    einen schematischen Aufbau einer Multiaperturabbildungsvorrichtung zum stereoskopischen Erfassen eines Gesamtgesichtsfeldes;

Fig. 28    eine schematische Ansicht einer 3D-Multiaperturabbildungsvorrichtung gemäß einem Ausführungsbeispiel;

Fig. 29a    eine schematische Ansicht einer weiteren Multiaperturabbildungsvorrichtung gemäß einem Ausführungsbeispiel, die gemäß einem Ausführungsbeispiel um zusätzliche Einrichtungen zur für Realisierung von Relativbewegungen für eine Fokussteuerung und zur optischen Bildstabilisierung ergänzt wird;

Fig. 29b-29e    schematische Seitenansichten einer Strahlumlenkvorrichtung gemäß einem Ausführungsbeispiel;

Fig. 30a    eine schematische Ansicht einer Multiaperturabbildungsvorrichtung mit einer Einstelleinrichtung zum kanalindividuellen Einstellen optischer Eigenschaften, gemäße einem Ausführungsbeispiel;

Fig. 30b    eine Variante einer Multiaperturabbildungsvorrichtung mit der Einstelleinrichtung gemäß einem Ausführungsbeispiel;

Fig. 31    eine schematische Ansicht der um zusätzliche Aktoren ergänzten Vorrichtung aus Fig. 29a gemäß einem Ausführungsbeispiel; und

Fig. 32    eine schematische Ansicht einer Anordnung von Aktoren in einer Multiaperturabbildungsvorrichtung gemäß einem Ausführungsbeispiel.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

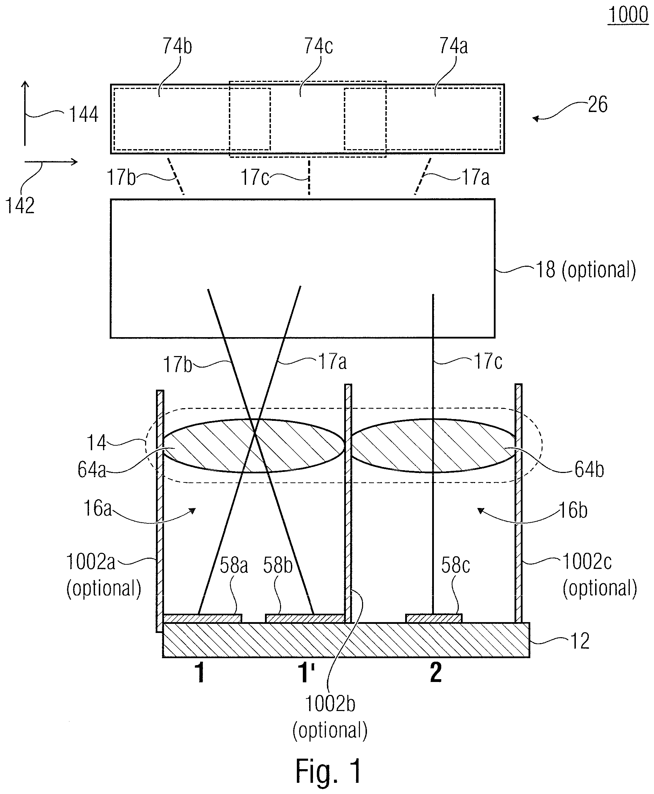

Fig. 1 zeigt eine schematische Aufsicht auf eine Multiaperturabbildungsvorrichtung 1000 gemäß einem Ausführungsbeispiel. Bei der Multiaperturabbildungsvorrichtung 1000 kann es sich um eine Vorrichtung handeln, die ausgebildet ist, um einen Objektbereich (Gesichtsfeld) 26 in Form mehrere Teilobjektbereiche (Teilgesichtsfelder) 74a-c zu erfassen. Die erfassten Teilobjektbereiche 74a-c können von der Vorrichtung 1000 oder einer nachgeschalteten Berechnungsvorrichtung, etwa ein Prozessor, ein feldprogrammierbares Gatterarray (FPGA) eine CPU (Central Processing Unit - Zentrale Recheneinheit), ein für das Verfahren spezifische Hardware, wie beispielsweise ein ASIC oder dergleichen, zu einem Gesamtbild zusammengesetzt werden. Gemäß Ausführungsbeispielen wird der Objektbereich 26 durch eine Vielzahl von Teilobjektbereichen 74a-c abgetastet.

Die Vielzahl kann zumindest 3, zumindest 5, zumindest 9 oder höher sein.

Die Vorrichtung 1000 umfasst einen Bildsensor 12 und ein Array 14 von nebeneinander angeordneten optischen Kanälen 16a und 16b, die jeweils eine Optik 64a bzw. 64b umfassen. Das bedeutet, dass jeder optische Kanal 16a und 16b eine Optik 64a bzw. 64b zur Abbildung zumindest eines Teilbereichs 74a-c des Objektbereichs 26 auf einen Bildsensorbereich 58a, 58b bzw. 58c des Bildsensors aufweist. So bildet die Optik 64a beispielsweise den Teilbereich 74a auf den Bildsensorbereich 58a ab, was durch den Strahlengang 17a dargestellt ist. Ferner bildet die Optik 64a den Teilbereich 74b auf den Bildsensorbereich 58b ab, was durch den Strahlengang 17b dargestellt ist. Die Teilbereiche 74a und 74b sind in dem Objektbereich 26 disjunkt, das bedeutet, sie überlappen sich nicht und/oder sind vollständig voneinander verschieden.

Aus einer Begrenzung des Teilgesichtsfeldes eines jeden optischen Kanals 16a-b kann durch Kombination mit einer Strahlumlenkeinheit 18 eine Verringerung einer Bauhöhe (Primäreffekt) der Multiaperturabbildungsvorrichtung 1000 resultieren. Dies wird dadurch erreicht, dass die Bauhöhe senkrecht zur Blickrichtung der Multiaperturabbildungsvorrichtung realisiert wird. Zusätzlich wird eine Vereinfachung der Optik jedes Kanals erreicht, da weniger Linsen pro Kanal angeordnet werden können, da für eine Aufnahme eines Teilgesichtsfeldes eine einfachere Korrektur von Feldaberrationen möglich ist (Sekundäreffekt).

Die Optik 64b des optischen Kanals 16b ist konfiguriert, um den Teilbereich 74c auf den Bildsensorbereich 58c abzubilden, wie es durch den Strahlengang 17c dargestellt ist. Der Teilbereich 74c überlappt mit dem Teilbereich 74a und/oder 74b, so dass durch Bildverarbeitung der Teilbilder der Bildsensorbereiche 58a, 58b und 58c ein Gesamtbild des Objektbereichs 26 erhalten werden kann. Alternativ kann der optische Kanal 16b auch vergleichbar zu dem optischen Kanal 16a ausgebildet sein, das bedeutet, zwei Strahlengänge so zu beeinflussen, dass zwei voneinander disjunkte Teilbereiche des Objektbereichs auf zwei Bildsensorbereiche gelenkt werden.

Die Multiaperturabbildungsvorrichtung 1000 kann eine optionale Strahlumlenkeinrichtung 18 aufweisen, die ausgebildet ist, um einen Strahlengang der optischen Kanäle 16a und 16b umzulenken, so dass diese hin zu dem Objektbereich 26 gelenkt werden. Die Strahlengänge 17a, 17b und 17c können zwischen den Bildsensorbereichen 58a-c und der optionalen Strahlumlenkeinrichtung 18 in einer gemeinsamen Ebene schräg zueinander verlaufen. Das bedeutet, die Blickrichtungen der optischen Kanäle bzw. der Strahlengänge kann voneinander verschieden und in einer gleichen Ebene sein. Durch die Umlenkung mittels der Strahlumlenkeinrichtung 18 kann eine Blickrichtung entlang einer zweiten Richtung verändert werden, so dass durch das Umlenken der Strahlengänge eine Vielzahl von zweidimensional zueinander verteilten Teilbereiche des Objektbereichs 26 erfassbar ist. Gemäß weiteren Ausführungsbeispielen können weitere optische Kanäle neben den optischen Kanälen 16a und 16b angeordnet werden. Alternativ oder zusätzlich werden weitere Teilbereiche des Objektbereichs durch die Optik 64a auf weitere (nicht dargestellte) Bildsensorbereiche des Bildsensors 12 abgebildet, wobei die Teilbereiche zueinander jeweils disjunkt sind. Die weiteren Teilbereiche können entlang der Richtung 142 und/oder der Richtung 144 zu dem Teilbereich 74a versetzt sein. Durch die Strahlumlenkeinrichtung 18 können die Strahlengänge 17a und 17b so umgelenkt werden, dass die entsprechenden Teilbereiche in dem Objektbereich nicht mehr disjunkt zueinander sind. Vorteilhafterweise bleiben die Teilbereiche aber auch nach der Umlenkung der Strahlengänge disjunkt.

Vereinfacht ausgedrückt ermöglichen die zueinander schräg ausgerichteten Strahlengänge 17a und 17b einen lateralen Versatz der Teilobjektbereiche 74a und 74b zueinander. Eine Ausgestaltung der Multiaperturabbildungsvorrichtung 1000 kann nun so erfolgen, dass die Teilobjektbereiche 74a und 74b, wie dargestellt, entlang einer ersten Richtung 142 in dem Objektbereich 26 zueinander versetzt sind. Alternativ oder zusätzlich ist es ebenfalls möglich, dass die Teilobjektbereiche 74a und 74b entlang einer zweiten Richtung 144 in dem Objektbereich 26 lateral zueinander versetzt sind, wobei beide Versatzrichtungen auch miteinander kombinierbar sind. Die Richtungen 142 und 144 können beispielsweise parallel zu Bildachsen eines zu erfassenden oder erfassten Bildes sein. Das bedeutet, dass zweidimensional zueinander versetzte Teilbereiche 74a-c auch ohne eine Strahlumlenkeinrichtung 18 erhalten werden können.

Obwohl der Bildsensor 12 so dargestellt ist, dass er die Bildsensorbereiche 58a, 58b und 58c umfasst, weisen Multiaperturabbildungsvorrichtungen gemäß weiteren Ausführungsbeispielen zumindest zwei, zumindest drei oder mehr Bildsensoren auf, die insgesamt eine Gesamtmenge an Bildsensorbereichen 58a, 58b und 58c bereitstellen. Die Gesamtmenge kann eine beliebige Anzahl von Bildsensorbereichen sein wie etwa zumindest 3, zumindest 6 oder zumindest 9. Somit kann ein Bildsensor lediglich einen oder mehrere Bildsensorbereiche 58a-c umfassen. Die Multiaperturabbildungsvorrichtung kann einen oder mehrere Bildsensoren umfassen.

In den Bereichen zwischen den Bildsensorbereichen 58a-c können nicht-lichtsensitive integrierte Schaltungen, elektronische Komponenten (Widerstände, Kondensatoren) und/oder elektrische Verbindungselemente (Bondingdrähte, Vias) oder dergleichen angeordnet sein.

Die optischen Kanäle 16a und 16b können optional von zumindest teilweise opaken Strukturen 1002a-c von benachbarten optischen Kanälen und/oder einer Umgebung der optischen Kanäle optisch zumindest teilweise isoliert sein, um einen Eintritt von Falschlicht in den optischen Kanal 16a oder 16b zumindest teilweise zu verhindern und um so eine Qualität eines erfassten Bildes zu erhalten.

In anderen Worten kann eine Multiaperturabbildungsvorrichtung mehrere Abbildungskanäle (optische Kanäle) umfassen, die jeweils einen Teilbereich des Objektbereichs übertragen, wobei die Teilbereiche sich teilweise überdecken oder überlappen und mindestens einer der optischen Kanäle mindestens zwei nicht zusammenhängende Objektbereiche abbildet. D.h. im Bild dieses Kanals existiert eine Lücke. Eine Anzahl oder Gesamtzahl der optischen Kanäle überträgt das Gesamtgesichtsfeld ggf. vollständig.

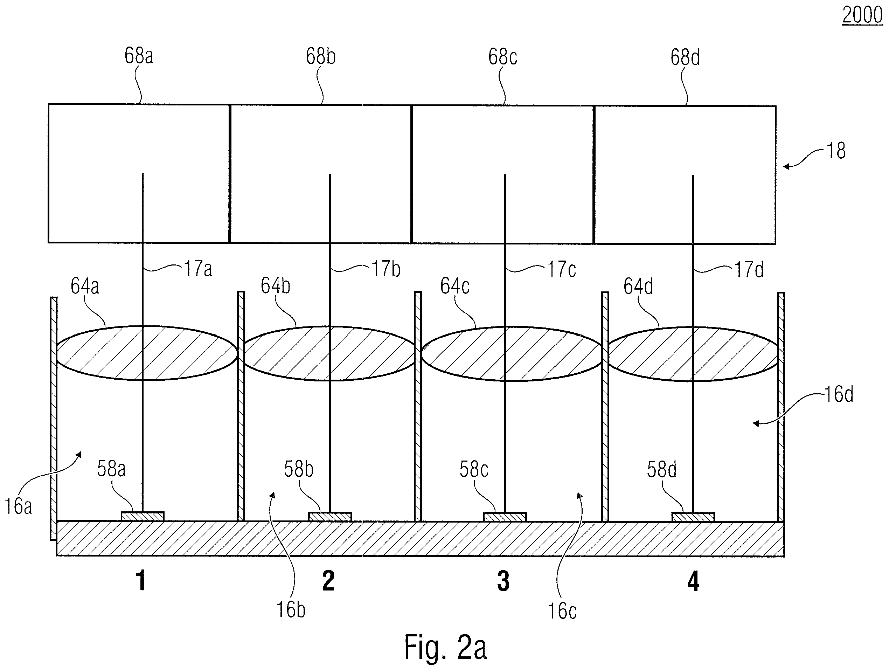

Fig. 2a zeigt eine schematische Aufsicht auf ein alternatives Konzept zum Abbilden eines Gesamtobjektbereichs oder Gesamtgesichtsfeldes gemäß des Stands der Technik. Die Multiaperturabbildungsvorrichtung 2000 umfasst beispielsweise vier optische Kanäle 16a-d, die jeweils einen Teilbereich des Gesamtgesichtsfeldes abbilden. Die Teilbereiche des Gesamtobjektfeldes benachbarter optischer Kanäle können sich gegenseitig teilweise überlappen, so dass die Teilgesichtsfelder benachbarter optischer Kanäle kanalweise keine Lücken zueinander aufweisen. Eine kanalindividuelle Ablenkung der Strahlengänge 17a-d kann beispielsweise durch verschieden zueinander geneigte Facetten 68a-d der Strahlumlenkeinrichtung 18 erhalten werden.

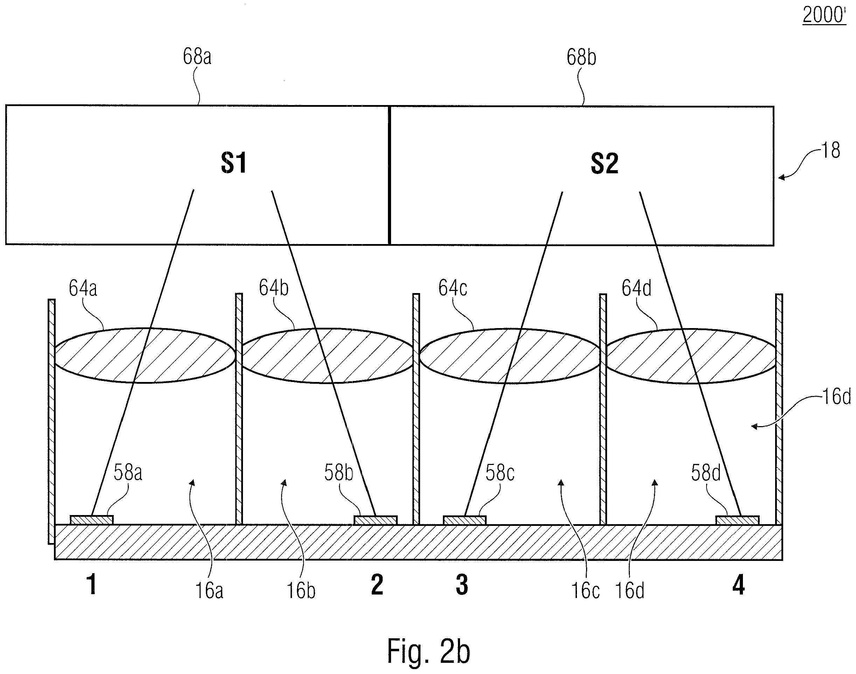

Fig. 2b zeigt eine schematische Aufsicht auf eine Multiaperturabbildungsvorrichtung 2000' gemäß des Stands der Technik, bei der die optischen Kanäle 16a-d über geneigte optische Achsen verfügen, so dass die Facetten 68a und 68b von mehreren Kanälen gemeinsam genutzt werden können. Eine Verkippung der Facetten kann entlang einer Winkelkomponente (orthogonal zu einer Zeilenerstreckungsrichtung der optischen Kanäle 16a-d) erfolgen, was zu einer Vereinfachung der Strahlumlenkeinrichtung 18 führen kann.

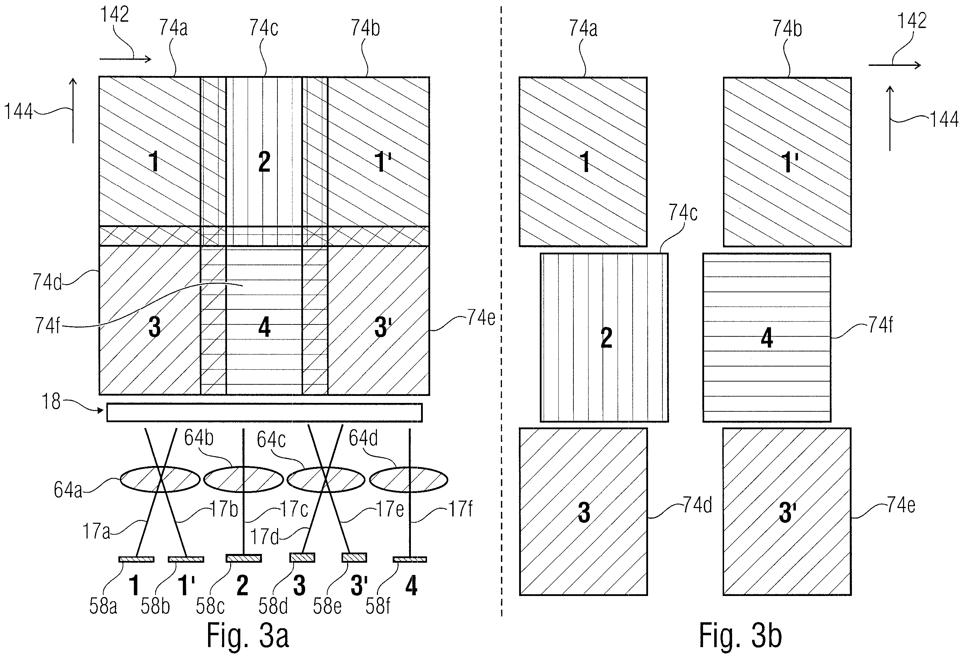

Fig. 3a zeigt eine schematische Aufsicht auf Bildsensorbereiche 58a-f einer Multiaperturabbildungsvorrichtung gemäß hierin beschriebener Ausführungsbeispiele. Die Bildsensorbereiche 58a-f können Teile zumindest eines Bildsensors sein. Die Strahlengänge 17a-f der optischen Kanäle können in einer oder mehreren Ebenen angeordnet sein. Bspw. sind die Strahlengänge 17a-f zwischen den Bildsensorbereichen 58a-f und den Optiken 64a-d in einer einzigen Ebene angeordnet. Alternativ kann eine erste Teilmenge der Strahlengänge, etwa die Strahlengänge 17a, 17b und 17f in einer ersten Ebene und eine zweite Teilmenge der Strahlengänge, etwa die Strahlengänge 17c, 17d und 17e in einer zweiten Ebene angeordnet sein. Die Anordnung in zwei oder mehreren Ebenen kann durch eine Anordnung der optischen Kanäle in zwei oder mehreren Zeilen erfolgen. Die Strahlengänge 17a-f können durch die Strahlumlenkeinrichtung 18 so umgelenkt werden, dass die Teilobjektbereiche 74a-f entlang der Richtungen 142 und 144 verteilt sind. Eine Zuordnung der Strahlengänge 17a-f zu den Teilobjektbereichen 74a-f ist auch über die arabischen Ziffern 1, 1', 2, 3, 3' und 4 angedeutet.

Fig. 3b zeigt eine hypothetische Verteilung der Teilobjektbereiche 74a-f entlang der Richtungen 142 und 144 bei einer Abwesenheit der Strahlumlenkeinrichtung 18 aus Fig. 3a. Die Teilbereiche 74a und 74b sowie 74d und 74e sind disjunkt zueinander. Durch die Strahlumlenkeinrichtung 18 überlappt der Teilbereich 74c mit den Teilbereichen 74a und 74b jeweils teilweise. Ferner überlappt der Teilbereich 74f mit den Teilbereichen 74d und 74e jeweils teilweise, d.h. unvollständig, so dass insgesamt überlappende Teilbereiche 74a-f erhalten werden, woraus ein Gesamtbild konstruiert werden kann.

Gemäß weiteren Ausführungsbeispielen kann alternativ oder zusätzlich eine Verteilung der Bildsensorbereiche 58a-f, der Optiken 64a-d und/oder weiterer Optiken so ausgeführt sein, dass die Überlappung der Teilbereiche 74a-c und 74d-f erhalten wird, so dass hierfür auf eine Anordnung der Strahlumlenkeinrichtung 18 verzichtet werden kann. Die Strahlumlenkeinrichtung 18 kann jedoch vorgesehen sein, um eine Blickrichtung der Multiaperturabbildungsvorrichtung zu beeinflussen, d.h., die Strahlengänge 17a-f umzulenken.

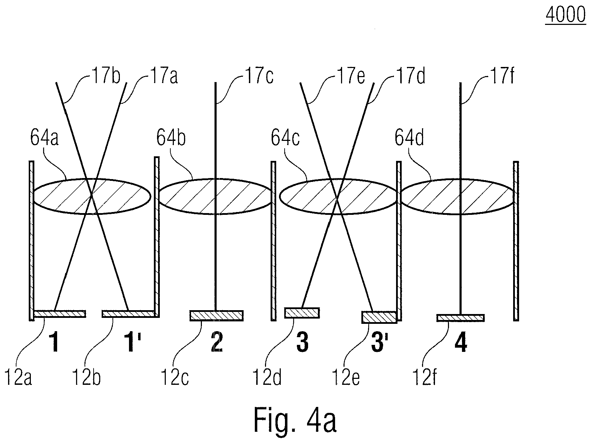

Fig. 4a zeigt eine schematische Aufsicht auf eine Multiaperturabbildungsvorrichtung 4000, die Bildsensoren 12a-f aufweist, wobei jeweils ein Teilbereich des Objektbereichs mittels eines Strahlengangs 17a-f auf einem separaten Bildwandler 12a-f abgebildet wird. Vereinfacht ausgedrückt bedeutet dies, dass jeder Bildsensor 12a-f einen Bildsensorbereich zum Abbilden eines Teilbereichs bereitstellt.

Die Bildsensoren 12a-f können ganz oder teilweise auf einem gemeinsamen Substrat angeordnet sein. Wie bereits im Zusammenhang mit Fig. 1 erläutert, können zumindest zwei der Bildsensoren 12a-f als Bildsensorbereiche eines gemeinsamen Bildsensors ausgeführt sein. In den Bereichen zwischen den Bildsensorbereichen 58a-c können nicht-lichtsensitive integrierte Schaltungen, elektronische Komponenten (Widerstände, Kondensatoren) und/oder elektrische Verbindungselemente (Bondingdrähte, Vias) oder dergleichen angeordnet sein.

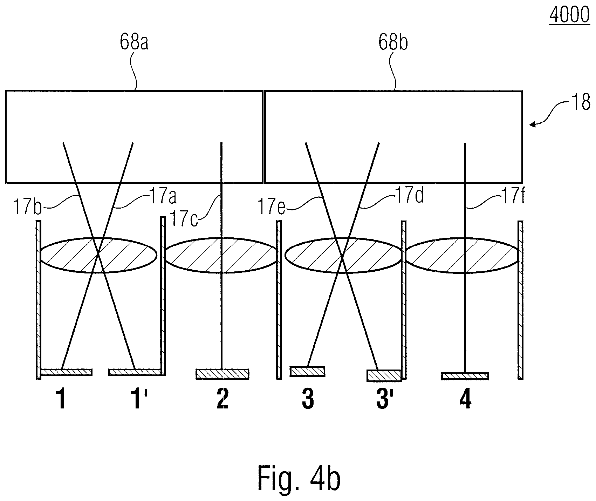

Fig. 4b zeigt eine schematische Aufsicht auf die Multiaperturabbildungsvorrichtung 4000, die zusätzlich die Strahlumlenkeinrichtung 18 umfassend die Facetten 68a und 68b aufweist. Die Strahlumlenkeinrichtung 18 kann ausgebildet sein, um die Strahlengänge 17a-f umzulenken. Vorteilhafte Ausgestaltungsformen der Strahlumlenkeinrichtung 18 werden anhand weiterer hierin beschriebener Ausführungsbeispiele erläutert.

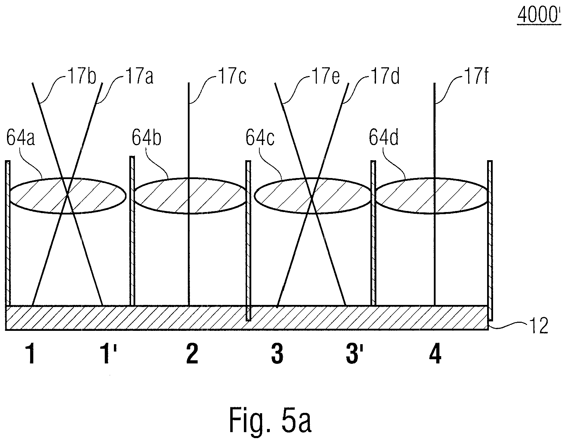

Fig. 5a zeigt eine schematische Aufsicht auf eine Multiaperturabbildungsvorrichtung 4000', bei der verglichen mit der Multiaperturabbildungsvorrichtung 4000 ein monolithischer Bildsensor 12 angeordnet ist, d.h. der Bildsensor 12 weist die entsprechenden Bildsensorbereiche zur Erfassung der Teilbereiche auf. Hierfür kann der Bildsensor 12 einzeln ausgebildete Bildsensorbereiche aufweisen. Alternativ können zumindest zwei Bildsensorbereiche in Form einer durchgehenden Pixelmatrix gebildet sein, auf die unterschiedliche Teilbereiche des Objektbereichs abgebildet werden. In den Bereichen zwischen den Bildsensorbereichen 58a-c können nicht-lichtsensitive integrierte Schaltungen, elektronische Komponenten (Widerstände, Kondensatoren) und/oder elektrische Verbindungselemente (Bondingdrähte, Vias) oder dergleichen angeordnet sein.

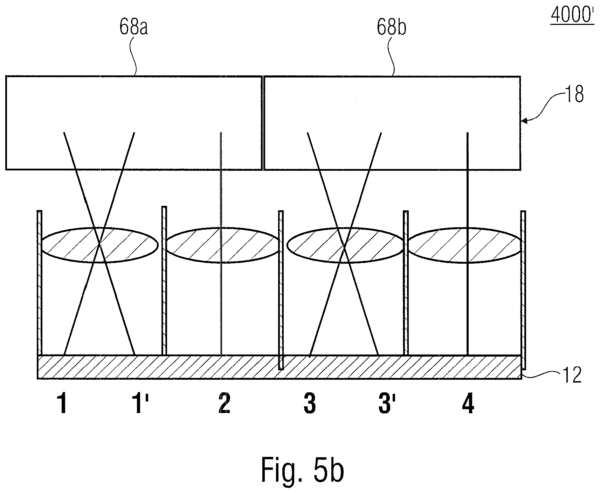

Fig. 5b zeigt eine schematische Aufsicht auf die Multiaperturabbildungsvorrichtung 4000', bei der die Strahlumlenkeinrichtung 18 angeordnet ist, wie es im Zusammenhang mit der Fig. 4b beschrieben ist.

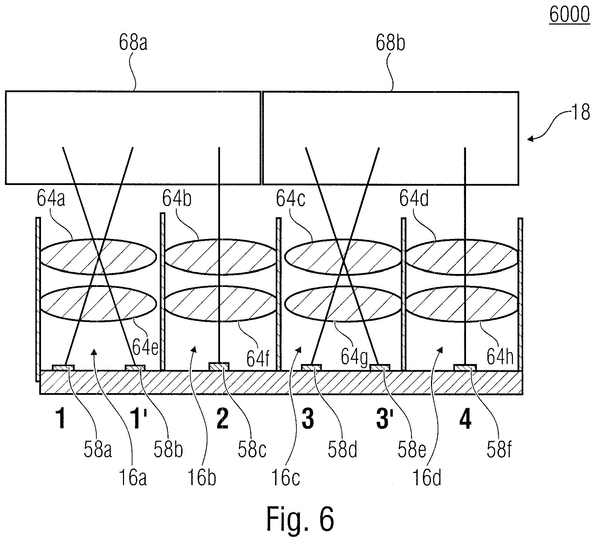

Fig. 6 zeigt eine schematische Aufsicht auf eine Multiaperturabbildungsvorrichtung 6000, die gegenüber der Multiaperturabbildungsvorrichtung 4000 oder 4000' in zumindest einem optischen Kanal 16a-d eine weitere Linse 64e, 64f, 64g oder 64h angeordnet ist. Das bedeutet, die Optik eines optischen Kanals 16a-d kann eine oder mehrere Linsen 64a-h aufweisen, die für alle Bildsensorbereiche 58a-f des optischen Kanals 16a-d wirksam sind. Jeder optische Kanal 16a-d kann eine voneinander verschiedene oder gleiche Anzahl von Linsen 64a-h aufweisen. Beispielsweise kann die durch die jeweilige Optik erhaltene Abbildungsfunktion kanalindividuell angepasst sein. Ein durch Optiken 64a und 64e, 64b und 64f, 64c und 64g oder 64d und 64h erhaltenes Linsensystem eines optischen Kanals 16a-d kann somit von den Teilbereichen eines optischen Kanals gemeinsam genutzt werden, selbst wenn mehrere Teilbereiche durch den optischen Kanal erfasst werden. Die zumindest teilweise opaken Strukturen 1004a und 1004b können auch angeordnet werden, wenn ein optischer Kanal 16a-d lediglich eine Optik aufweist. Beispielsweise können die zumindest teilweise opaken Strukturen 1004a und/oder 1004b Teil der Multiaperturabbildungsvorrichtung 1000 sein.

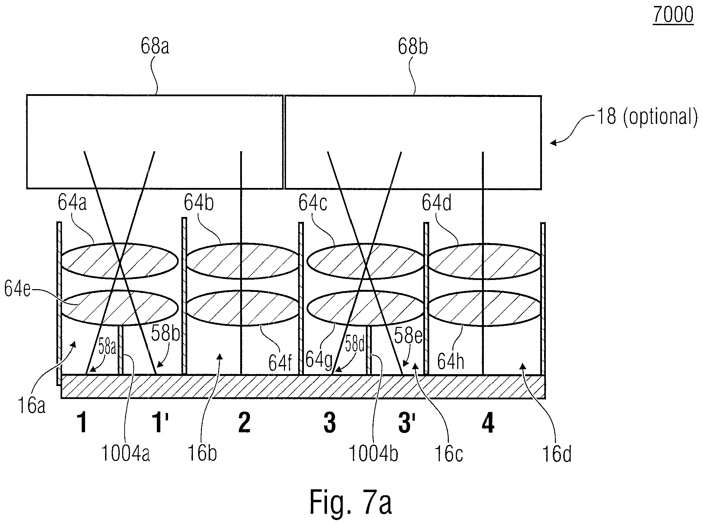

Fig. 7a zeigt eine schematische Aufsicht auf eine Multiaperturabbildungsvorrichtung 7000, die gegenüber der Multiaperturabbildungsvorrichtung 6000 eine zumindest teilweise opake Struktur 1004a aufweist, die zwischen den Bildsensorbereichen 58a und 58b an dem Bildsensor in Richtung des Objektbereichs angeordnet ist. Die zumindest teilweise opake Struktur 1004a kann ein Halbleitermaterial, ein Glas-, Keramik- oder Glaskeramikmaterial, ein Kunststoffmaterial und/oder ein Metallmaterial umfassen und in einem Wellenlängenbereich, in dem Bilder durch die Multiaperturabbildungsvorrichtung 7000 erfasst werden, zumindest teilweise opak sein. So kann beispielsweise bei einer Infrarotaufnahme ein Kunststoffmaterial oder ein Metallmaterial vorteilhaft gegenüber einem Halbleitermaterial sein, wenn das Halbleitermaterial für Infrarotstrahlung transparent ist. Alternativ kann für Wellenlängen im sichtbaren Bereich ein Halbleitermaterial oder ein Kunststoffmaterial vorteilhaft gegenüber einem Metallmaterial sein, da das Metallmaterial ggf. einen höheren Fertigungsaufwand, ein höheres Gewicht und/oder höhere Kosten verursachen kann.

Die zumindest teilweise opake Struktur 1004a ermöglicht eine Unterdrückung von Falschlicht zwischen den Bildsensorbereichen 58a und 58b, d.h. ein Übersprechen zwischen den Teilabbildungen eines optischen Kanals wird reduziert. In gleicher oder ähnlicher Weise umfasst der optische Kanal 16c eine zumindest teilweise opake Struktur 1004b, die gleich oder ähnlich gebildet sein kann, wie die zumindest teilweise opake Struktur 1004a.

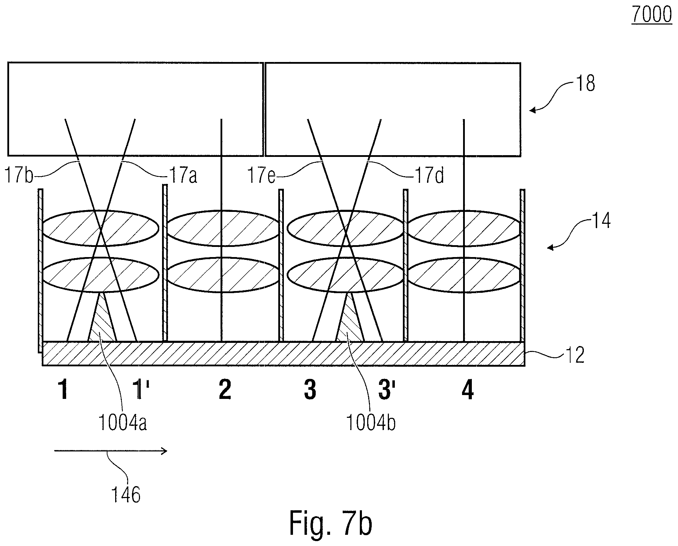

Fig. 7b zeigt eine schematische Aufsicht auf die Multiaperturabbildungsvorrichtung 7000 gemäß einer alternativen Ausführungsform, bei der die zumindest teilweise opaken Strukturen 1004a und 1004b einen veränderlichen Querschnitt aufweisen. Der Querschnitt kann als eine Abmessung entlang einer Zeilenerstreckungsrichtung 146 verstanden werden. Die Zeilenerstreckungsrichtung 146 kann eine Richtung sein, entlang der die optischen Kanäle in dem Array 14 angeordnet sind und/oder parallel zu dem Bildsensor 12 verlaufen. Die zumindest teilweise opaken Strukturen 1004a und 1004b sind an oder benachbart zu dem Bildsensor 12 angeordnet. In Richtung hin zu dem Array 14 verjüngt sich der Querschnitt der zumindest teilweise opaken Strukturen 1004a und 1004b. Dies ermöglicht eine an den Strahlengang 17a und 17b bzw. 17d und 17e angepasste Geometrie der zumindest teilweise opaken Strukturen 1004a und 1004b. Die zumindest teilweise opaken Strukturen 1004a und 1004b sind somit zwischen den Bildsensorbereichen des Bildsensors 12 angeordnet und ermöglichen eine verbesserte Kanalseparation zwischen den optischen Kanälen 16a-d und zwischen den Bildsensorbereichen. In den Bereichen hinter den zumindest teilweise opaken Strukturen 1004a und 1004b zwischen den Bildsensorbereichen 58a-c können nicht-lichtsensitive integrierte Schaltungen, elektronische Komponenten (Widerstände, Kondensatoren) und/oder elektrische Verbindungselemente (Bondingdrähte, Vias) oder dergleichen angeordnet sein.

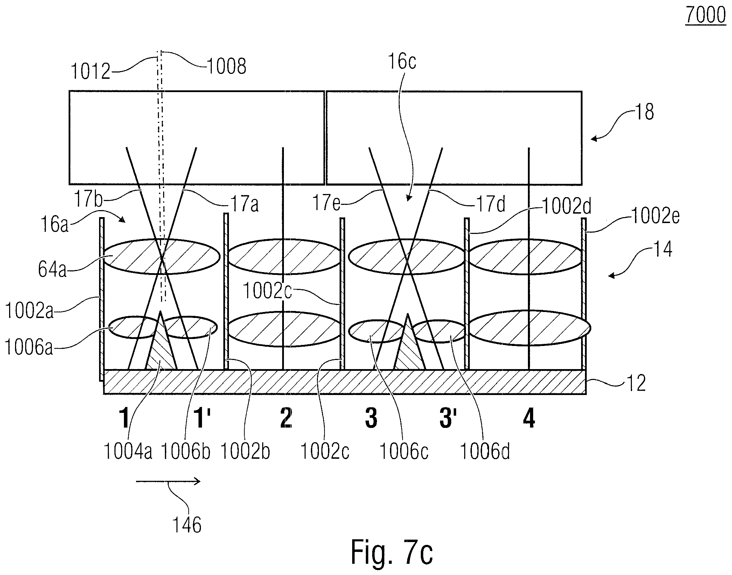

Fig. 7c zeigt eine schematische Aufsicht auf die Multiaperturabbildungsvorrichtung 7000, bei der die optischen Kanäle 16a und 16c Teilbereichsoptiken 1006a-1006d aufweisen. Die Teilbereichsoptiken 1006a-d können beispielsweise Linsen, refraktive oder diffraktive Elemente sein, die jeweils ausschließlich einem Teilbereich zugeordnet sind. So ist beispielsweise die Teilbereichsoptik 1006a ausgebildet, um den Strahlengang 17a zu beeinflussen und um den Strahlengang 17b nicht zu beeinflussen. Der Strahlengang 17a ist nutzbar, um beispielsweise den Teilbereich 74a abzubilden, wie es im Zusammenhang mit Fig. 1 beschrieben ist. Die Teilbereichsoptik 1006b kann ausgebildet sein, um den Strahlengang 17b zu beeinflussen, der beispielsweise den Teilbereich 74b abbildet. Die Teilbereichsoptik 1006b ist ausgebildet, um den Strahlengang 17a nicht zu beeinflussen. Alternativ kann der optische Kanal 16a lediglich eine der Teilbereichsoptiken 1006a oder 1006b und/oder weitere lediglich dem Strahlengang 17a oder 17b zugeordnete Teilbereichsoptiken aufweisen. Die Teilbereichsoptiken 1006a und/oder 1006b können beispielsweise mechanisch mit der zumindest teilweise opaken Struktur 1004a mechanisch fest verbunden sein. Alternativ oder zusätzlich kann die Teilbereichsoptik 1006a mit der Struktur 1002a mechanisch fest verbunden sein. Die Teilbereichsoptik 1006b kann in gleicher Weise mechanisch fest mit der Struktur 1002b verbunden sein. Gemäß einem alternativen Ausführungsbeispiel können die Teilbereichsoptiken 1006a und/oder 1006b mit der Optik 64a mechanisch verbunden und über diese gegenüber dem Bildsensor aufgehängt sein. Gemäß einem weiteren Ausführungsbeispiel kann die Optik 64a mit den Teilbereichsoptiken 1006a und/oder 1006b mechanisch verbunden sein und über diese gegenüber dem Bildsensor 12 aufgehängt sein.

Beispielsweise kann die Teilbereichsoptik 1006a als ein Dachprisma gefertigt sein. Die Teilbereichsoptiken 1006a und 1006b können beispielsweise auch zwei Teile eines Dachprismas sein, welches zweigeteilt und/oder spiegelsymmetrisch ist. Beispielsweise kann das Dachprisma spiegelsymmetrisch zu der Ebene 1008 sein.

Die Teilbereichsoptiken 1006c und 1006d können ebenfalls jeweils ausschließlich einem Teilbereich zugeordnet sein und eine Abbildung desselben auf einen jeweiligen Bildsensorbereich beeinflussen. Weist ein optischer Kanal 16a oder 16c zwei Teilbereichsoptiken 1006a und 1006b bzw. 1006c und 1006d auf, so können die beiden Teilbereichsoptiken identisch aufgebaut sein. Die Teilbereichsoptiken 1006a und 1006b können beispielsweise spiegelsymmetrisch um eine Symmetrieebene 1008 angeordnet sein.

Die Symmetrieebene 1008 kann so im Raum angeordnet sein, dass sie eine optische Achse 1012 der von den Teilbereichsoptiken 1006a und 1006b gemeinsam genutzten Optik 64a enthält und senkrecht zur Zeilenerstreckungsrichtung 146 des Arrays 14 verläuft. Obwohl die Symmetrieebene 1008 und die Achse 1012 in Fig. 7c nicht deckungsgleich zueinander dargestellt sind, sind die Ebene 1008 und die Achse 1012 deckungsgleich, da die Ebene 1008 die Achse 1012 umfasst. Die nicht deckungsgleiche Darstellung dient lediglich der besseren Veranschaulichung. Gemäß einem Ausführungsbeispiel ist die Optik 64a so ausgebildet, dass eine Abbildungsfunktion der Optik 64a rotationssymmetrisch bezüglich einer Hauptblickrichtung der Optik 64a ist oder spiegelsymmetrisch bezüglich der Symmetrieebene 1008 ist. Dies ermöglicht, dass die Strahlengänge 17a und 17b durch die Optik 64a symmetrisch beeinflusst werden.

Die spiegelsymmetrische Anordnung oder Ausbildung der Teilbereichsoptiken 1006a und 1006b ermöglicht eine symmetrische Beeinflussung der Strahlengänge 17a und 17b, so dass auch die Optik 64a symmetrisch ausgebildet sein kann. Dies ermöglicht beispielsweise eine symmetrische Ablenkung oder Beeinflussung der Strahlengänge hin zu symmetrisch verteilten Teilobjektbereichen. Die Multiaperturabbildungsvorrichtung 7000 kann jedoch auch so konfiguriert sein, dass die Optik 64a nicht spiegelsymmetrisch ist, etwa wenn eine ungleichmäßige Verteilung der Teilbereiche in dem Objektbereich angestrebt wird. Gemäß alternativen Ausführungsbeispielen können auch die Teilbereichsoptiken 1006a und 1006b unsymmetrisch bezüglich der Ebene 1008 sein, etwa wenn eine unsymmetrische oder asymmetrische Verzerrung der beiden Strahlengänge 17a und 17b angestrebt wird.

In anderen Worten verjüngen sich die trennenden Strukturen 1004a und 1004b zwischen den Teilbereichen in Richtung zum Objekt. Die trennenden Strukturen (zumindest teilweise opaken Strukturen) 1004a und 1004b können symmetrisch zur optischen Achse 1012 ausgebildet sein. Es können Linsen angeordnet sein, beispielsweise die Teilbereichsoptiken 1006a und 1006b, die jeweils nur von einem Teilbereich genutzt werden. Diese Linsen können identisch sein und/oder spiegelsymmetrisch bezüglich ihrer optischen Eigenschaft zur optischen Achse 1012 angeordnet sein. Gleichzeitig kann eine Rotationssymmetrie nicht implementiert sein.

Die Teilbereichsoptiken 1006a-d können mehrlagig, d. h., in mehreren Ebenen ausgebildet sein und damit jeweils aus mehr als nur einer Linse, einer refraktiven oder diffraktiven Fläche bestehen. Die Optiken 16a und 16c können ebenso mehrlagig ausgebildet sein und damit jeweils aus mehr als nur einer Linse, einer refraktiven oder diffraktiven Fläche bestehen

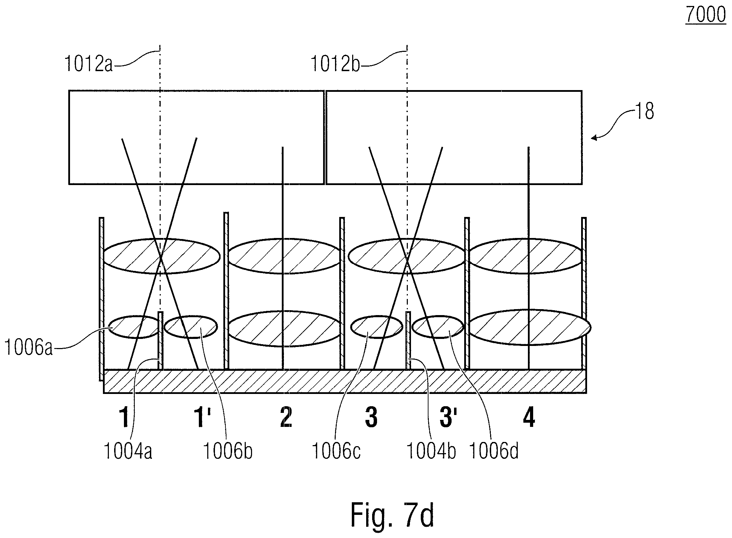

Fig. 7d zeigt eine schematische Aufsicht auf die Multiaperturabbildungsvorrichtung 7000, bei der die zumindest teilweise opaken Strukturen 1004a und 1004b gerade ausgebildet sind, das bedeutet, sie weisen eine geringere oder keine Verjüngung hin zu dem Objektbereich oder der Strahlumlenkeinrichtung 18 auf. Alternativ können die zumindest teilweise opaken Strukturen 1004a und 1004b eine beliebige Geometrie aufweisen, beispielsweise eine gekrümmte oder polygone Geometrie.

In anderen Worten zeigt Fig. 7d eine Darstellung mit Kanalseparationsstrukturen 1004a und 1004b, ohne dass sich diese verjüngen und/oder zur optischen Achse 1012a oder 1012b symmetrisch ausgebildet sind. Die Multiaperturabbildungsvorrichtung 7000 weist jedoch Linsen (Teilbereichsoptiken) 1006a-d auf, die nur für einen Teilbereich innerhalb eines Kanals genutzt werden.

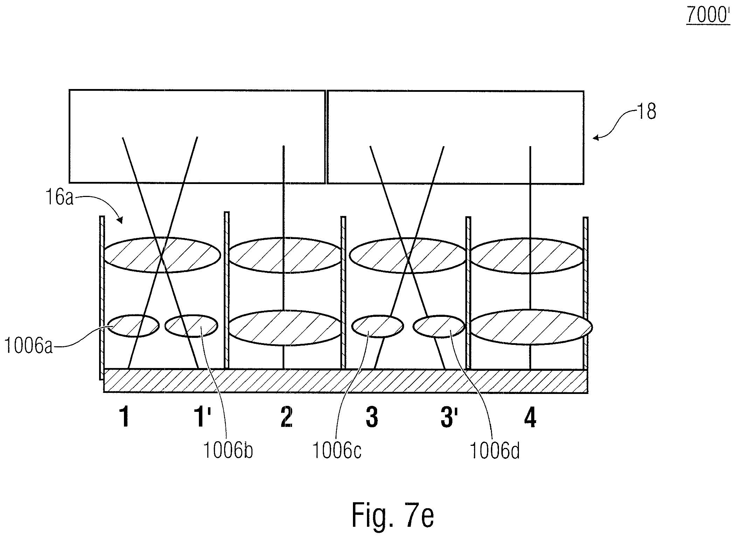

Fig. 7e zeigt eine schematische Aufsicht auf eine Multiaperturabbildungsvorrichtung 7000', die die Teilbereichsoptiken 1006a-d aufweist. Zumindest einer der optischen Kanäle 16a oder 16c weist zwischen den Teilbereichsoptiken 1006a und 1006b bzw. 1006c und 1006d keine zumindest teilweise opake Struktur auf.

In anderen Worten zeigt Fig. 7e eine Darstellung ohne Kanalseparationsstrukturen 1004, jedoch mit Linsen (Teilbereichsoptiken), die nur für einen Teilbereich innerhalb eines Kanals genutzt werden. Die Anordnung von Teilbereichsoptiken, die lediglich für einen Teilbereich des Objektbereichs wirksam sind, ermöglicht eine kanalindividuelle Anpassung der Strahlengänge. Bevorzugt werden die Teilbereichsoptiken in einem Bereich angeordnet, in dem sich die Strahlengänge des optischen Kanals, beispielsweise die Strahlengänge 17a und 17b oder 17d und 17e nicht überschneiden, wie es beispielsweise in einem Bereich der Optik 64a oder 64c der Fall ist.

Ein Verzicht auf die zumindest teilweise opaken Strukturen 1004 kann eine vereinfachte Herstellung der Vorrichtung ermöglichen, beispielsweise wenn durch geeignete Aperturblenden eine Falschlichtunterdrückung hinreichend ermöglicht wird oder eine Falschlichtunterdrückung nicht erforderlich ist.

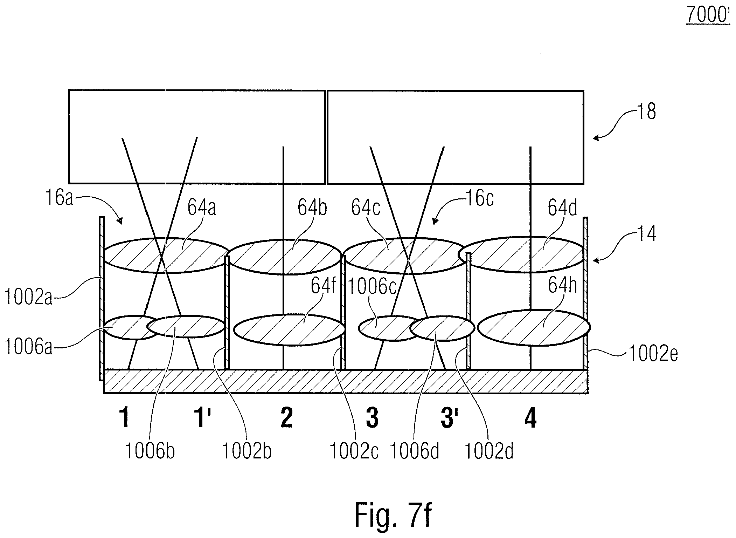

Fig. 7f zeigt eine schematische Aufsicht auf die Multiaperturabbildungsvorrichtung 7000', bei der die Teilbereichsoptiken 1006a und 1006b zusammenhängend gebildet sind. Die Teilbereichsoptiken 1006a und 1006b können als einstückige Linse mit zwei optisch aktiven Bereichen für die beiden Teilbereiche des optischen Kanals 16a gebildet sein. Alternativ können die Teilbereichsoptiken 1006a und 1006b auch zwei Elemente sein, die mechanisch fest miteinander verbunden sind.

Die Teilbereichsoptiken 1006c und 1006d sind als zusammenhängende optische Komponente gebildet, wie es für die Teilbereichsoptiken 1006a und 1006b beschrieben ist. Obwohl die Teilbereichsoptiken für die optischen Kanäle 16a und 16c als gleich gebildet beschrieben sind, können die Teilbereichsoptiken 1006a-d auch voneinander verschieden gebildet sein. Beispielsweise können die Teilbereichsoptiken 1006a und 1006b als zusammenhängende Komponente gebildet sein, während die Teilbereichsoptiken 1006c und 1006d als voneinander getrennte Komponenten gebildet sind.

Ein oder mehrere der Optiken 64a-d können als zusammenhängende optische Komponente gebildet sein und beispielsweise einstückig miteinander gebildet sein und/oder fest miteinander verbunden sein. Eine Ausführung von Optiken oder Teilbereichsoptiken als zusammenhängende Komponente ermöglicht bereits während der Herstellung eine mechanisch robuste Ausrichtung der Linsen oder Optiken zueinander, so dass bei einer Fertigung der Multiaperturabbildungsvorrichtung 7000' eine geringere Anzahl von Elementen zueinander ausgerichtet werden muss, was in vorteilhafter Weise Herstellungstoleranzen reduziert.

Optiken von optischen Kanälen können über das Array 14 hinweg in voneinander verschiedenen optischen Ebenen und/oder Lagen angeordnet sein. Dies soll jedoch nicht so verstanden werden, dass Optiken einer Lage in einer tatsächlichen Ebene angeordnet sind, sondern einer Ebene mit endlicher Ausdehnung entlang der Strahlengänge zugeordnet werden können. Beispielsweise können die Optiken 64a, 64b, 64c und 64d eine erste optische Ebene bilden. Die Teilbereichsoptiken 1006a, 1006b, 1006c und 1006d können zusammen mit den Optiken 64f und 64h eine zweite Ebene oder Lage des Arrays 14 bilden. Optiken einer Lage können als zusammenhängende Komponente gebildet sein. Auch können Optiken unterschiedlicher Lagen oder unterschiedliche Lagen selbst als eine zusammenhängende Komponente gebildet sein, was eine hohe optische Präzision ermöglicht.

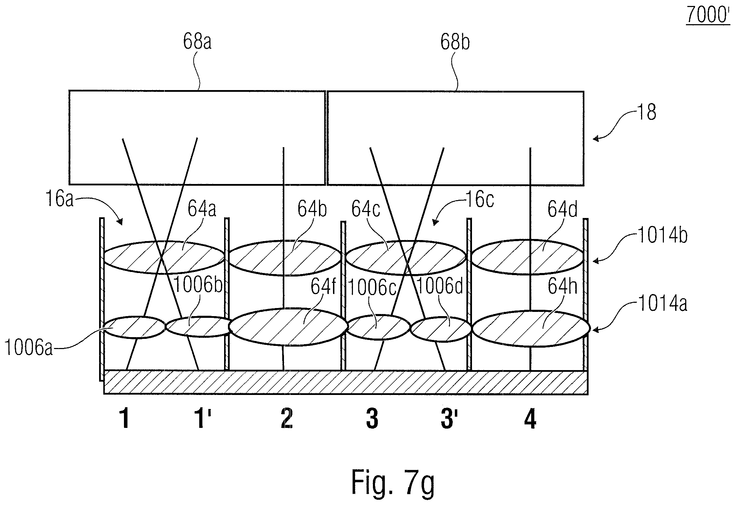

Fig. 7g zeigt eine schematische Aufsicht der Multiaperturabbildungsvorrichtung 7000', bei der die Optiken 64a-d als zusammenhängende Komponente gebildet sind. Die Optiken 64a-d bilden eine optische Ebene 1014b. Ferner sind die Teilbereichsoptiken 1006a, 1006b, 1006c, 1006d sowie die Optiken 64f und 64h als eine zusammenhängende Komponente gebildet und bilden eine optische Ebene 1014a.

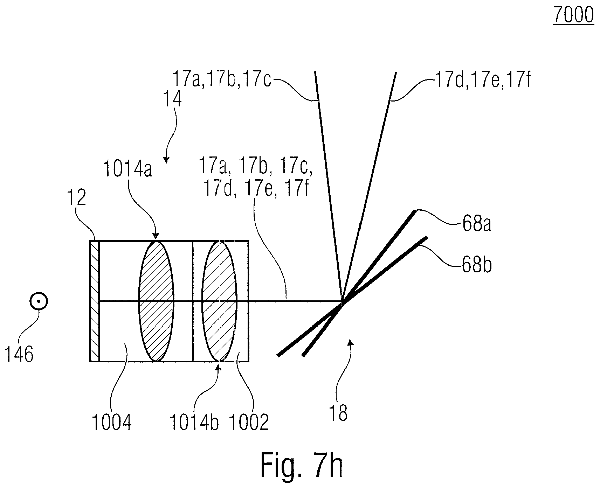

Fig. 7h zeigt eine schematische Seitenschnittansicht der Multiaperturabbildungsvorrichtung 7000, bei der die Optiken der optischen Kanäle in den beiden optischen Ebenen 1014a und 1014b angeordnet sind, wie es im Zusammenhang mit Fig. 7g beschrieben ist. Von dem Array 14 ausgehend in Richtung der Teilobjektbereiche können die Strahlengänge 17a-f abschnittsweise oder streckenweise in einer Ebene verlaufen. Die Strahlengänge können durch Facetten 68a und 68b der Strahlumlenkeinrichtung 18 in voneinander verschiedene Richtungen und/oder aus einer gemeinsamen Ebene heraus umgelenkt werden. Beispielsweise können die Strahlengänge 17a-c innerhalb einer gemeinsamen Ebene entlang voneinander verschiedene Richtungen verlaufen oder blicken und durch die Facette 68a in eine erste Richtung umgelenkt werden. Die Strahlengänge 17d-f können innerhalb der gleichen oder einer verschiedenen und für die Strahlengänge 17a-f gemeinsamen Ebene des Arrays 14 ebenfalls entlang voneinander verschiedener Richtungen verlaufen, wie es in Fig. 7g dargestellt ist. Durch die Facette 68b können die Strahlengänge 17d-f in eine zweite, von der ersten Richtung verschiedene Richtung umgelenkt werden, so dass insgesamt die Strahlengängen 17a-f in voneinander verschiedene Richtungen verlaufen.

In anderen Worten können Facetten, beispielsweise Spiegelflächen, der Strahlumlenkeinrichtung 18 beispielsweise nur eine Winkelkomponente orthogonal zur Zeilenerstreckungsrichtung 146 des Arrays 14 aufweisen.

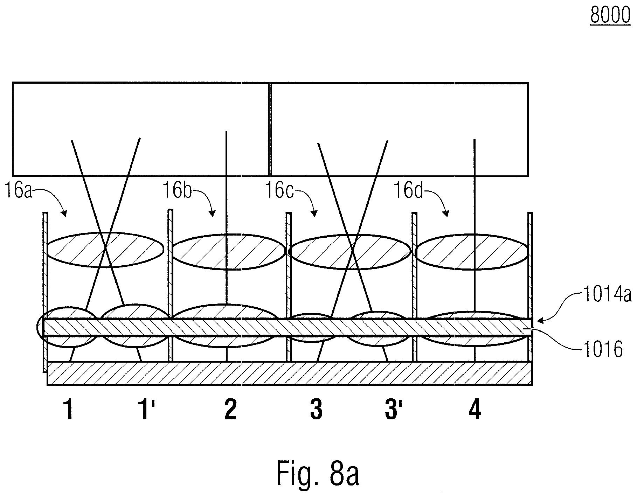

Fig. 8a zeigt eine schematische Aufsicht auf eine Multiaperturabbildungsvorrichtung 8000, bei der die Linsen der ersten optischen Ebene 1014a an einem gemeinsamen transparenten Substrat 16 angeordnet sind. Das transparente Substrat 1016 kann beispielsweise Kunststoffmaterialen und/oder Glasmaterialien umfassen. Das Substrat 1016 ermöglicht eine hohe Stabilität der Optiken und/oder Teilbereichsoptiken untereinander. Das transparente Substrat 1016 erstreckt sich über zwei oder mehrere benachbarte optische Kanäle 16a-d. Gemäß einem Ausführungsbeispiel erstreckt sich das transparente Substrat über alle optischen Kanäle der Multiaperturabbildungsvorrichtung 8000.

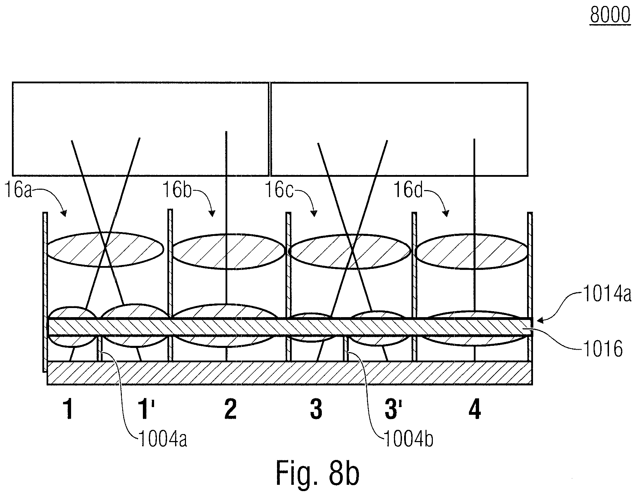

Fig. 8b zeigt eine schematische Aufsicht auf die Multiaperturabbildungsvorrichtung 8000, bei der zwischen den Teilbereichen des optischen Kanals 16a und den Teilbereichen des optischen Kanals 16c die zumindest teilweise opaken Strukturen 1004a und 1004b angeordnet sind, so dass eine verbesserte Falschlichtunterdrückung erhalten wird.

Alternativ oder zusätzlich können zwei oder eine höhere Zahl der Linsen der zweiten Lage 1014b an einem transparenten Substrat angeordnet sein. An dem Substrat angeordente Linsen können beispielsweise als Glas- oder Kunststoffkörper gebildet sein, wobei beispielsweise jeweils eine erste Halblinse der Optik an einer ersten Hauptseite des Substrats gebildet wird und optional eine zweite Halblinse der Optik an einer zweiten, gegenüberliegenden Hauptseite des Substrats gebildet wird.

In anderen Worten können ein oder mehrere Linsenlagen ein gemeinsames, transparentes Substrat nutzen, das sich über mindestens zwei benachbarte Kanäle oder über alle optischen Kanäle erstreckt.

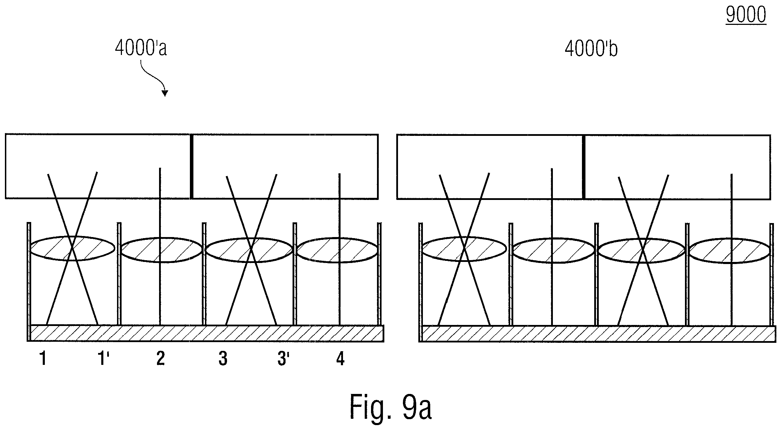

Fig. 9a zeigt eine schematische Aufsicht auf ein Abbildungssystem 9000, das eine erste Multiaperturabbildungsvorrichtung 4000'a und eine zweite Multiaperturabbildungsvorrichtung 4000'b aufweist. Alternativ oder zusätzlich kann das Abbildungssystem 9000 eine andere hierin beschriebene Multiaperturabbildungsvorrichtung aufweisen, etwa die Multiaperturabbildungsvorrichtung 1000, 4000, 7000 oder 7000'. Das Multiaperturabbildungssystem kann beispielsweise als Mobiltelefon, Smartphone, Tablet oder Monitor ausgebildet sein.

Die Multiaperturabbildungsvorrichtungen 4000'a und 4000'b können jeweils als Modul bezeichnet werden. Jedes der Module kann ausgebildet und angeordnet sein, um das Gesamtgesichtsfeld vollständig oder nahezu vollständig zu erfassen, so dass das Abbildungssystem 9000 ausgebildet ist, um das Gesamtgesichtsfeld stereoskop durch die Module 4000'a und 4000'b zu erfassen. D.h. das Abbildungssystem 9000 weist bspw. einen Stereo-Aufbau auf. Gemäß weiteren Ausführungsbeispielen weist ein Abbildungssystem weitere, zusätzliche Module auf, so dass Triple-Aufbauten, Quattro-Aufbauten oder Aufbauten höherer Ordnung resultieren.

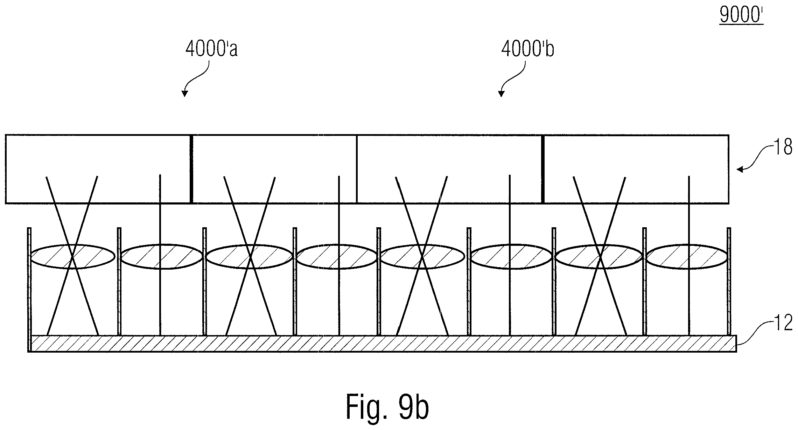

Fig. 9b zeigt eine schematische Aufsicht auf ein Abbildungssystem 9000', das als eine modifizierte Variante des Abbildungssystems 9000 verstanden werden kann. Die Module 4000'a und 4000'b können einen gemeinsamen Bildsensor 12 aufweisen. Alternativ oder zusätzlich können die Module 4000'a und 4000'b eine gemeinsame Strahlumlenkeinrichtung 18 aufweisen. In anderen Worten können die Module zusammenhängend sein und ein einziges gemeinschaftliches Modul ergeben.

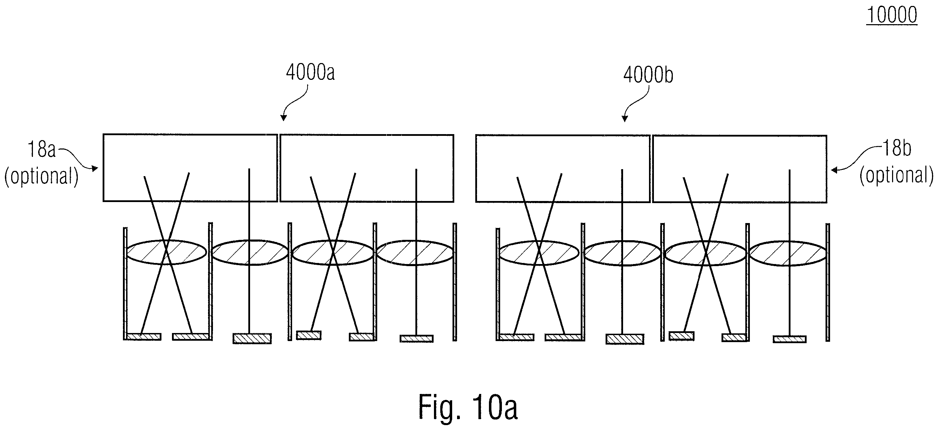

Fig. 10a zeigt eine schematische Aufsicht auf ein Abbildungssystem 10000, das zumindest zwei Multiaperturabbildungsvorrichtungen 4000a und 4000b aufweist. Alternativ oder zusätzlich können andere und/oder weitere Multiaperturabbildungsvorrichtungen angeordnet sein, wie es im Zusammenhang mit dem Abbildungssystem 9000 und 9000' beschrieben ist.

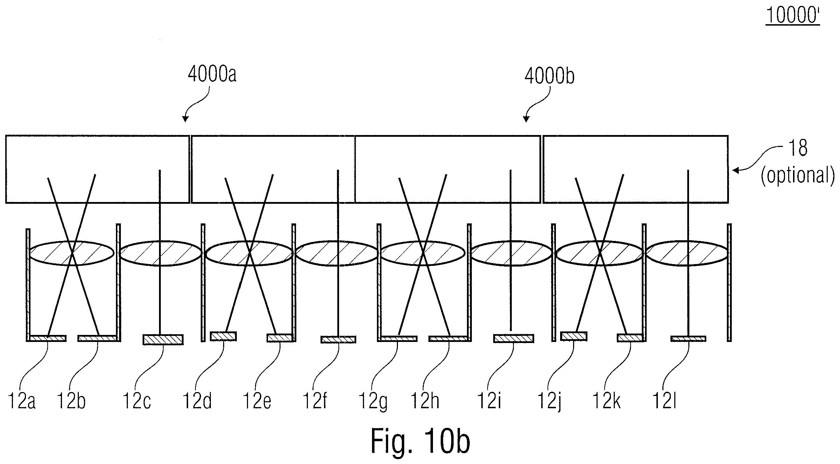

Fig. 10b zeigt eine schematische Aufsicht auf ein Abbildungssystem 10000, bei dem eine gemeinsame Strahlumlenkeinrichtung 18 bezüglich der Multiaperturabbildungsvorrichtungen 4000a und 4000b angeordnet ist. Die Bildsensoren 12a-l können zumindest teilweise an einem gemeinsamen Substrat angeordnet sind und/oder Teilbereiche eines gemeinsamen Bildsensors sein. Gemäß alternativen Ausführungsformen ist zumindest eine Strahlumlenkeinrichtung 18a oder 18b nicht angeordnet, wie es im Zusammenhang mit Fig. 5a beschrieben ist.

Wie es vorangehend beschrieben wurde, ist die Strahlumlenkeinrichtung 18 optional, d.h., eine voneinander verschiedene Richtung entlang derer die Strahlengänge der einzelnen optischen Kanäle umgelenkt werden, kann bereits durch die Optiken der optischen Kanäle erhalten werden.

Multiaperturabbildungssysteme gemäß hierin beschriebener Ausführungsbeispiele, die zumindest zwei Module aufweisen, von denen jedes konfiguriert ist, um den Objektbereich (nahezu vollständig) zu erfassen, können gemeinsame Komponenten aufweisen, die von den Modulen gemeinsam genutzt werden. Hierbei kann es sich um einen gemeinsamen Bildsensor, um eine gemeinsamen Fokussiereinrichtung und/oder eine gemeinsame Strahlumlenkeinrichtung handeln. Eine gemeinsame Fokussiereinrichtung kann zumindest einen Aktor zum gemeinsamen Einstellen eines Fokus der ersten und zweiten Multiaperturabbildungsvorrichtung (Modul) umfassen. Alternativ oder zusätzlich kann ein optischer Bildstabilisator gemeinsam genutzt werden. Geeignete Einrichtungen zur Bildstabilisierung und/oder Fokussierung werden später beschrieben. Ein Bildstabilisator kann für alle Strahlengänge der ersten Multiaperturabbildungsvorrichtung und für alle Strahlengänge der zweiten Multiaperturabbildungsvorrichtung gemeinsam wirken und zur Bildstabilisierung entlang einer ersten Bildachse und einer zweiten Bildachse geeignet sein. Dies kann durch Erzeugen einer translatorischen Relativbewegung zwischen dem Bildsensor und dem Array oder der Strahlumlenkeinrichtung der ersten oder zweiten Multiaperturabbildungsvorrichtung erfolgen. Eine gemeinsame Strahlumlenkeinrichtung kann zwischen dem Array der ersten und zweiten Multiaperturabbildungsvorrichtung und dem Objektbereich angeordnet sein, und ausgebildet sein, um einen Strahlengang der optischen Kanäle der ersten und zweiten Multiaperturabbildungsvorrichtung umzulenken.

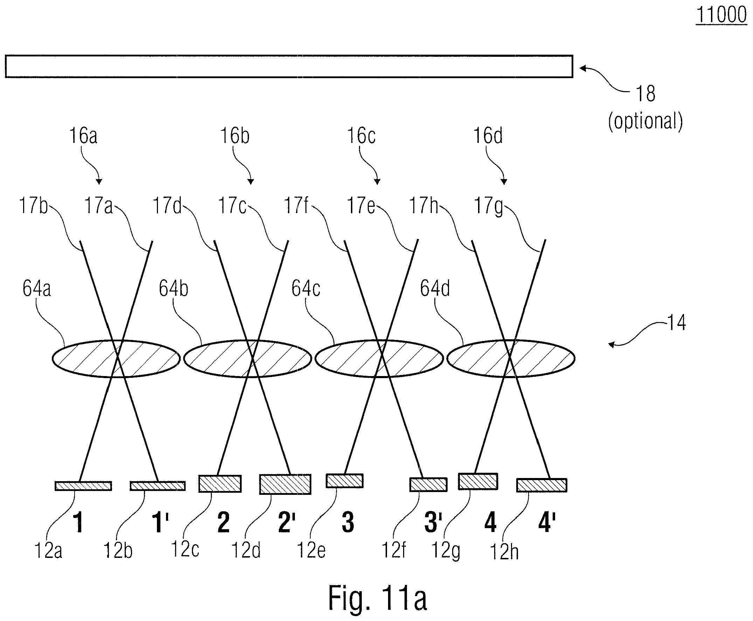

Fig. 11a zeigt eine schematische Aufsicht auf eine Multiaperturabbildungsvorrichtung 11000, bei der die optischen Kanäle 16a-d jeweils ausgebildet sind, um zwei oder mehrere Teilbereiche des Objektbereichs abzubilden. Die Teilbereiche, die von einer der optischen Kanälen 16a-d jeweils erfasst werden, sind disjunkt zueinander. Gleichzeitig sind die Bildsensoren 12a und 12b, 12c und 12d, 12e und 12f bzw. 12g und 12h die einem optischen Kanal zugeordnet sein (oder entsprechende Bildsensorbereiche) benachbart zueinander angeordnet. Das bedeutet, es können voneinander entfernte Teilbereiche des Gesamtgesichtsfeldes erfasst werden, während die beiden benachbarten Bildsensoren oder Bildsensorbereiche eine geringe oder möglichst kleine oder keine Parallaxe zueinander aufweisen. Während beispielsweise die Multiaperturabbildungsvorrichtung 1000 den optischen Kanal 16b aufweist, der derart konfiguriert ist, dass er "on-axis", d.h. vereinfacht geradeaus schauend, einen Teilbereich erfasst, kann die Multiaperturabbildungsvorrichtung 11000 so ausgebildet sein, dass alle optischen Kanäle einen von "on-axis" (entlang der Achse erfassend) verschiedenen Betriebszustand aufweisen.

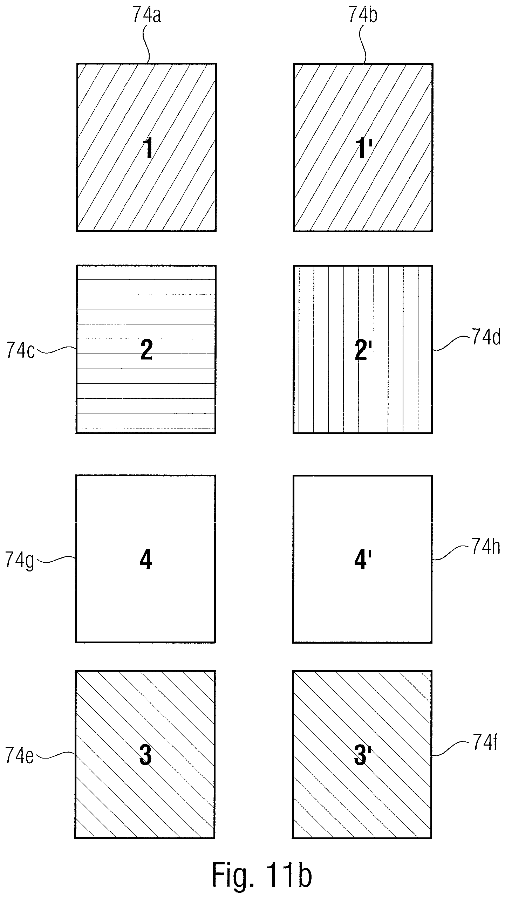

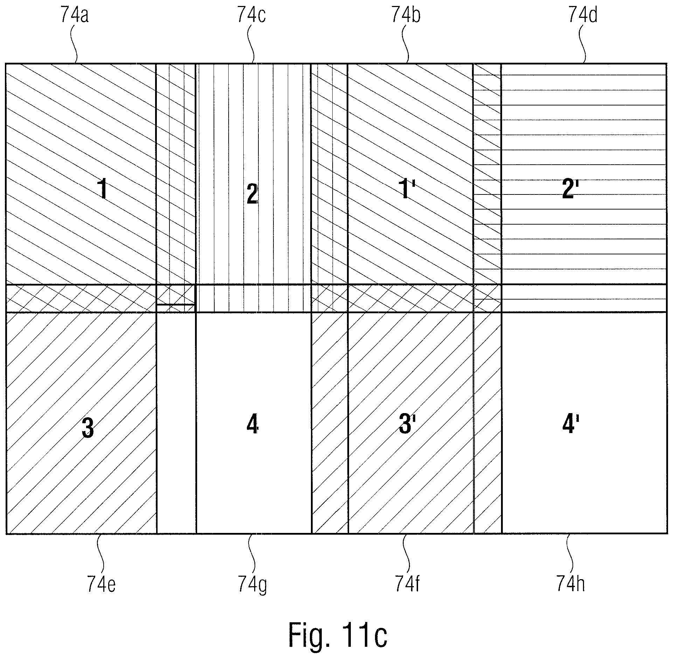

Die Multiaperturabbildungsvorrichtung 11000 kann die Strahlumlenkeinrichtung 18 optional aufweisen. Die nachfolgend beschriebenen Fig. 11b und 11c sind so beschrieben, dass die Strahlumlenkeinrichtung 18 angeordnet ist, um die Strahlengänge 17a-f entlang einer weiteren Richtung abzulenken, wie es im Zusammenhang mit Fig. 7h beschrieben ist. Alternativ kann die Ablenkung entlang der zweiten Richtung bereits durch die Optiken 64a-d und/oder durch einen mehrzeiligen Aufbau des Arrays 14 erfolgen. Die arabischen Ziffern 1, 1', 2, 2', 3, 3', 4 und 4' dienen der Zuordnung zu Teilbereichen des Objektbereichs in den Fig. 11b und 11c.

Fig. 11b zeigt eine schematische beispielhafte Ansicht der Teilobjektbereiche 74a-f und deren Position im Raum, zur Veranschaulichung der disjunkten Teilbereiche. Die jeweiligen Teilobjektbereiche 74a und 74b, 74c und 74d, 74g und 74h, 74e und 74f sind disjunkt zueinander. Es sei angemerkt, dass durch die lineare Anordnung der optischen Kanäle 16a-d auch eine lineare Anordnung der Teilobjektbereiche 74a-f erhalten werden kann, was in der Fig. 11b nicht dargestellt ist.

Fig. 11c zeigt eine tatsächliche Anordnung der Teilobjektbereiche 74a-h in dem Objektbereich, wie er beispielsweise durch die Strahlumlenkeinrichtung 18 erhalten werden kann. Beispielsweise werden jeweils zwei zueinander disjunkte Teilobjektbereiche 1 und 1', 2 und 2', 3 und 3' oder 4 und 4' von einem dazwischenliegenden Teilobjektbereich 2 oder 1', 4 oder 3' teilweise und unvollständig überlappt, so dass sich insgesamt ein zusammenhängender erfasster Objektbereich ergibt. Überlappungsbereiche, in denen sich die Teilobjektbereiche 74a-h überlappen, ermöglichen eine hohe Qualität der Bildzusammenfügung.

Verglichen mit der Multiaperturabbildungsvorrichtung 1000 ist die Multiaperturabbildungsvorrichtung 11000 beispielsweise dahin gehend modifiziert, dass die Optik 64b konfiguriert ist, um einen vierten Teilbereich (den Teilbereich 74d) des Objektbereichs auf einen Bildsensorbereich, den Bildsensor 12d, abzubilden. Es sei ferner angemerkt, dass die Zuordnung der Positionen innerhalb des Objektbereichs frei wählbar ist. Gemäß weiteren Ausführungsbeispielen sind beispielsweise die Positionen der Teilobjektbereiche 74c und 74e sowie der Teilobjektbereiche 74d und 74f paarweise miteinander vertauscht. Teilbereiche von Bildsensorbereichen eines optischen Kanals bleiben somit disjunkt zueinander und überlappen lediglich mit anderen Teilbereichen anderer optischer Kanäle.

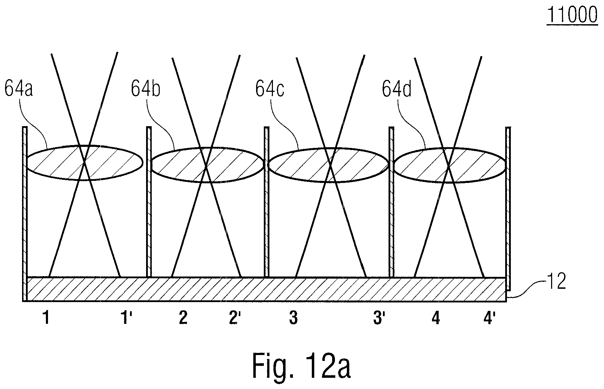

Fig. 12a zeigt eine schematische Aufsicht auf die Multiaperturabbildungsvorrichtung 11000, bei der die Bildsensoren 12a-h gemäß Fig. 11a als ein zusammenhängender Bildsensor 12 gebildet sind, wie es im Zusammenhang mit der Multiaperturabbildungsvorrichtung 4000' beschrieben ist.

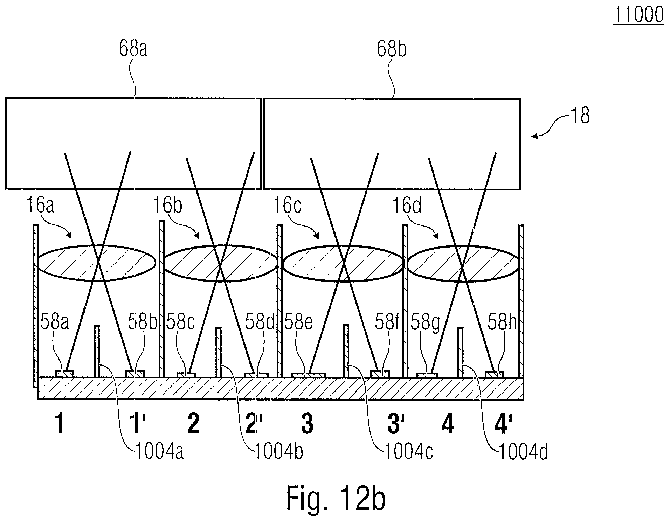

Fig. 12b zeigt eine schematische Aufsicht auf die Multiaperturabbildungsvorrichtung 11000, bei der die zumindest teilweise opaken Strukturen 1004a-d zwischen den Teilbereichen der optischen Kanäle 16a, 16b, 16c und 16d angeordnet sind.

Ferner ist die Strahlumlenkeinrichtung 18 angeordnet, um die Strahlengänge der optischen Kanäle umzulenken.

In anderen Worten wird ein Linsensystem, d.h. die Optiken 64a, 64b, 64c bzw. 64d, von den jeweiligen Teilbereichen 58a und 58b, 58c und 58d, 58e und 58f sowie 58g und 58h jeweils gemeinsam genutzt. Zwischen den Teilbereichen 58a und 58b, 58c und 58d, 58e und 58f sowie 58g und 58h sind trennende (zumindest teilweise opake) Strukturen 1004a-d zur Kanalseparation angeordnet. Dies kann in einem, mehreren oder allen Kanälen 16a-d erfolgen. Die optischen Kanäle 16a und 16b können gemeinsam die Facette 68a nutzen. Die optischen Kanäle 16c und 16d können gemeinsam die Facette 68b zur Umlenkung der Strahlengänge nutzen.

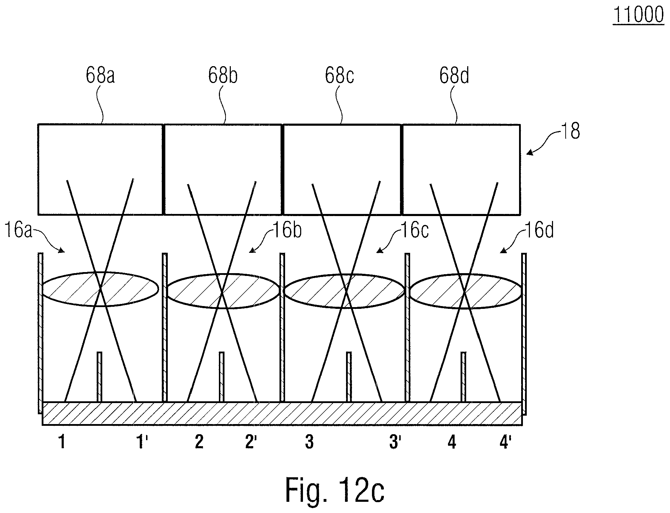

Fig. 12c zeigt eine schematische Aufsicht auf die Multiaperturabbildungsvorrichtung 11000, bei der die Strahlumlenkeinrichtung 18 so ausgebildet ist, dass sie vier Facetten 68a-d aufweist, von denen jeweils eine einem optischen Kanal 16a-d zugeordnet ist. Andere Strahlumlenkvorrichtung hierin beschriebener Ausführungsbeispiele können ebenfalls Facetten aufweisen, wobei mehrere Facetten einem Kanal zugeordnet sein können, etwa für unterschiedliche Strahlengänge des Kanals und/oder mehrere optische Kanäle einer Facette zugeordnet sein können. So ist beispielsweise die Facette 68a dem optischen Kanal 16a zugeordnet, die Facette 68b dem optischen Kanal 16b zugeordnet, die Facette 68c dem optischen Kanal 16c zugeordnet und/oder die Facette 68d dem optischen Kanal 16d zugeordnet. Dies ermöglicht eine kanalindividuelle Umlenkung oder Ablenkung der Strahlengänge der optischen Kanäle 16a-d.

Vereinfacht ausgedrückt können mehrere optische (Teil-)Kanäle, die jeweils mindestens zwei getrennte und nicht zusammenhängende Teilbereiche des Objektbereichs übertragen, eine eigene Spiegelfacette 68a-d nutzen. Wie es in Fig. 12b dargestellt ist, können zwei oder mehrere Kanäle auch eine gemeinsame Spiegelfacette nutzen.

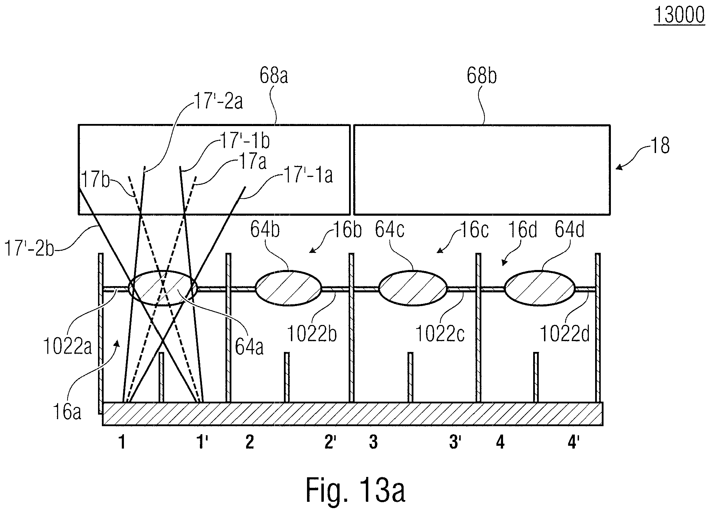

Fig. 13a zeigt eine schematische Aufsicht auf eine Multiaperturabbildungsvorrichtung 13000, die gegenüber der Multiaperturabbildungsvorrichtung 11000 dahin gehend modifiziert ist, dass sie Aperturblenden 1022a-d aufweist, die einen Strahlengang durch die Optik 64a, 64b, 64c bzw. 64d begrenzen. Schematisch dargestellt sind die Strahlengänge 17a und 17b des optischen Kanals 16a. Der Strahlengang 17a kann als Hauptblickrichtung eines Strahlenkegels mit äußeren Grenzen 17'-1a und 17'-2a verstanden werden. Der Strahlengang 17b kann als Hauptblickrichtung eines Strahlengangs mit äußeren Grenzen 17'-1b und 17'-2b verstanden werden. Die Aperturblende 1022a kann die äußeren Grenzen 17'-1a, 17'-2a, 17'-1b und 17'-2b gemeinsam einschränken und so den Strahlengang und das Blickfeld des optischen Kanals 16a eingrenzen, beschränken oder beeinflussen. Diese Ausführungen gelten ohne Einschränkungen für die Aperturblenden 1022b-d der optischen Kanäle 16b-d.

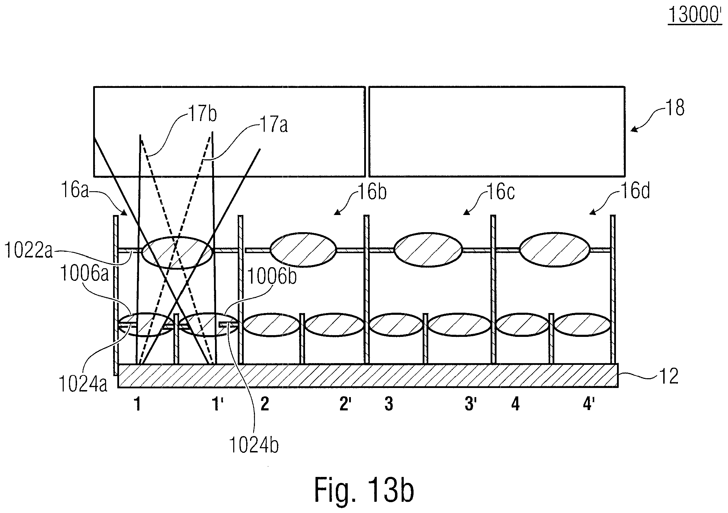

Fig. 13b zeigt eine schematische Aufsicht auf eine Multiaperturabbildungsvorrichtung 13000', die gegenüber der Multiaperturabbildungsvorrichtung 13000 aus Fig. 13a modifiziert ist. Der optische Kanal 16a weist zusätzlich zu der Aperturblende 1022a Teilbereichsblenden 1024a und 1024b auf, die jeweils für die Teilbereichsoptik 1006a bzw. 1006b bzw. für deren jeweiligen Strahlengang wirksam sind. Die Teilbereichsblende 1024a ist ausgebildet, um einen Strahlengang durch die Teilbereichsoptik 1006a zu begrenzen. Die Teilbereichsblende 1024b ist ausgebildet, um einen Strahlengang durch die Teilbereichsoptik 1006b zu begrenzen. Die Teilbereichsblenden 1024a und 1024b können alternativ oder zusätzlich zu der Aperturblende 1022a angeordnet sein. Alternativ oder zusätzlich können Teilbereichsblenden auch bezüglich von Teilbereichsoptiken der optischen Kanäle 16b, 16c und/oder 16d angeordnet sein.

Die Teilbereichsblenden 1024a und/oder 1024b können insbesondere vorteilhaft sein, wenn die Strahlengänge 17a und 17b zwischen dem Bildsensor 12 und der Strahlumlenkeinrichtung 18 nicht, wie es in Fig. 7h dargestellt ist, in einer gemeinsamen Ebene verlaufen, sondern bereits entlang zweier Richtungen unterschiedlich voneinander sind. In diesem Fall überlappen sich die Teilbereiche des optischen Kanals 16a in einer Ebene nicht vollständig. Beispielsweise würde dies in der Zuordnung der Teilbereiche 74a-e in Fig. 3a dazu führen, dass die Teilbereiche 74a und 74b entlang der Richtung 144 zueinander versetzt angeordnet sind. Durch Anordnung einer individuellen Teilbereichsblende 1024a und 1024b kann somit eine kanalindividuelle Anpassung der jeweiligen Apertur und des Strahlengangs des jeweiligen Teilbereichs erhalten werden. Beispielsweise können sich die Strahlengänge 17a und 17b bzw. die Strahlengangkegel in einer Ebene um höchstens 20 %, um höchstens 50 %, um höchstens 70 %, um höchstens 95 % oder um höchstens 99 %, überlappen. Vorteilhafterweise überlappen sich die Teilbereiche gleichzeitig um zumindest 5 %, zumindest 10 % oder zumindest 15 %. Bevorzug ist jedoch eine möglichst große Überlappung von zumindest 70 %, zumindest 90 % oder in etwa 100 %.

Überlappen sich die Strahlengänge 17a und 17b der Teilbereiche des optischen Kanals 16a jedoch beispielsweise nahezu vollständig, d.h. in einem Bereich von zumindest 99 %, zumindest 99,5 % oder in etwa 100 %, so kann eine Anordnung einer Aperturblende 1022a, wie es im Zusammenhang mit der Fig. 13a beschrieben ist, hinreichend oder ausreichend sein, um eine hohe Bildqualität zu erhalten, so dass auf eine Teilbereichsblende verzichtet werden kann.

Nachfolgend wird Bezug genommen auf die Ausgestaltung der Optiken 64a-d, wenn diese dafür genutzt werden, um jeweils zumindest zwei Teilbereiche des Objektbereichs zu erfassen, wie es beispielsweise für die Optik 64a der Multiaperturabbildungsvorrichtung 1000 beschrieben ist. Die Optik 64a der Multiaperturabbildungsvorrichtung 1000 kann beispielsweise eine Symmetrie aufweisen, so dass eine Brechung von Licht durch die Optik 64a symmetrisch für einen Strahlengang 17a und 17b hin zu dem ersten Teilbereich 74a und dem Teilbereich 74b ist. Bei der Symmetrie kann es sich um eine Rotationssymmetrie oder um eine Spiegelsymmetrie handeln. Gleichzeitig kann die Symmetrie eine erste spezifische Symmetrie aufweisen und eine andere spezifische andere Symmetrie ausschließen oder nicht aufweisen. So kann bspw. eine Spiegelsymmetrie vorliegen, während eine Rotationssymmetrie nicht vorliegt, d. h., dass die Symmetrie in Abwesenheit einer Rotationssymmetrie bezüglich der einer optischen Achse 1012 der Optik vorliegt. Beispielsweise können sich für eine Spiegelsymmetrie Prismen eignen, von denen jeweils eine Prismenoberfläche einem Teilbereich eines jeweiligen Strahlengangs zugeordnet ist. Für eine Rotationssymmetrie können sich konkave oder konvexe Linsen eignen. Die Symmetrie ermöglicht, dass eine Brechung von Licht durch die symmetrische Optik symmetrisch für einen Strahlengang hin zu einem ersten Teilbereich und einen Strahlengang hin zu einem zweiten Teilbereich ist, wenn beide Strahlengänge durch die Optik verlaufen.

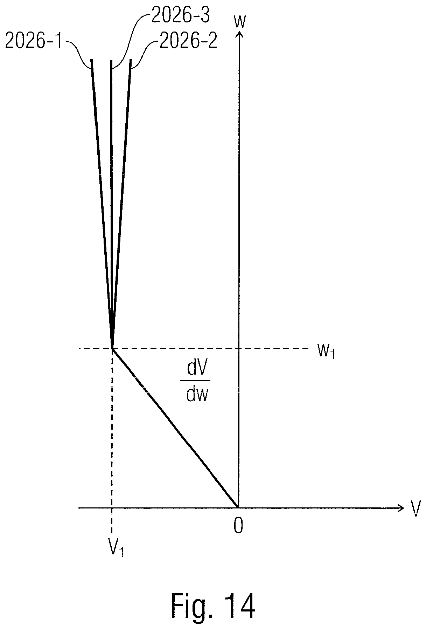

Fig. 14 zeigt ein schematisches Diagramm optischer Eigenschaften einer möglichen Ausgestaltungsform der von mehreren Teilbereichen genutzten Optiken. Das Diagramm zeigt eine Gegenüberstellung einer Verzeichnung V (Abszisse) der Optik gegenüber einem Feldwinkel w (Ordinate). Mit von 0 steigendem Feldwinkel w weist die Optik eine zunehmend negative Verzeichnung auf, d. h., ein Betragswert nimmt zu. Gemäß alternativen Ausführungsbeispielen kann die Verzeichnung jedoch einen zunehmenden Wert aufweisen, wenn der Feldwinkel ansteigt. Das bedeutet, die Verzeichnung kann mit zunehmendem Feldwinkel auch zunehmend sein. Bei der beschriebenen Optik kann es sich um eine Optik 64 oder eine Kombination mehrerer Linsen handeln, die den Strahlengang eines optischen Kanals beeinflusst. So kann bspw. die Optik auch als eine Kombination einer Linse 64 mit einer Teilbereichsoptik verstanden werden, die ausschließlich dem ersten Teilbereich (74a) zugeordnet ist. Alternativ oder zusätzlich kann die hier beschriebene Optik auch eine Kombination mehrerer für alle Strahlengänge eines optischen Kanals wirksamen Linsen sein.

Die Optik ist nachfolgend jedoch so beschrieben, dass sie mit von 0 steigendem Feldwinkel, also bei einem Verlauf entlang der Ordinate w, eine betragsmäßig nehmend zunehmend negative Verzeichnung aufweist. Die betragsmäßig zunehmende negative Verzeichnung erfolgt mit einer ersten Änderungssteigerung dV/dw. Die betragsmäßige Zunahme der negativen Verzeichnung erfolgt so lange, bis ein erster Feldwinkelschwellwert $w_1$ erreicht ist. Bei darüber hinaus zunehmendem Feldwinkel ist eine zweite Änderungssteigerung der Verzeichnung dV/dw betragsmäßig kleiner oder geringer als die erste Änderungssteigerung. Beispielsweise beträgt die zweite Änderungssteigerung höchstens ein Drittel der ersten Änderungssteigerung, d.h. nach Überschreiten des Feldwinkelschwellwertes erfolgt eine betragsmäßige Änderung der Verzeichnung höchstens in einem Umfang von einem Drittel verglichen mit einer betragsmäßigen Veränderung der Verzeichnung unterhalb des Feldwinkelschwellwerts. So kann die Verzeichnung mit zunehmendem Feldwinkel weiterhin geringfügig abnehmen, wie es durch die Gerade 2026-1 angedeutet ist. Alternativ kann die Verzeichnung auch geringfügig zunehmen, wie es durch die Gerade 2026-2 angedeutet ist. Ebenfalls realisierbar ist eine im Wesentlichen konstante Verzeichnung bei zunehmenden Feldwinkel, wie es für die Gerade 2026-3 angedeutet ist.

Ein Wert $V_1$ der Verzeichnung V an einem Punkt des Feldwinkelschwellwertes $w_1$ kann in einem Bereich von 5 % bis 90 %, 7 % bis 80 % oder von zumindest 10 % bis höchstens 70 %, oder etwa ca. 30 % liegen. Die Änderung der Verzeichnung mit zunehmendem Feldwinkel oberhalb des Schwellwertes $w_1$ kann bei ca. 1 % bis 2 % liegen, so dass sie gegenüber der ersten Änderungssteigerung als im Wesentlichen gleichbleibend oder konstant betrachtet werden kann. Eine konstante Verzeichnung bedeutet im Wesentlichen keine weitere Verzeichnung oder Bildverfälschung. Die Verzeichnung der Optik kann einen nutzbaren Bildbereich definieren. Der Feldwinkelschwellwert $w_1$ ist beispielsweise kleiner oder gleich einem halben Winkelabstand zwischen dem ersten Teilbereich 74a und dem zweiten Teilbereich 74b in dem Objektbereich. Für eine Hauptblickrichtung des optischen Kanals, der zumindest zwei Teilbereiche erfasst, bedeutet dies, dass der optische Kanal in einem äußeren Bereich der Hauptblickrichtung eine geringe Änderung der Verzeichnung aufweist, während er in einem Bereich der optischen Hauptachse eine hohe Änderung der Verzeichnung aufweist. Sind die aufzunehmenden Teilbereiche des Objektbereichs abseits der Hauptblickrichtung angeordnet und von ihr beabstandet, bedeutet dies eine gut zu korrigierende, da lediglich geringfügig zunehmende Verzeichnung.

In anderen Worten kann für kleine Feldwinkel eine stark negative Verzeichnung erhalten werden. Für größere Feldwinkel wird eine möglichst geringe Verzeichnung erhalten. Die Verzeichnung für größere Feldwinkel kann 0, d.h. konstant, positiv oder negativ sein.

Zur Vereinfachung zeigt Fig. 14 eine Darstellung der Verzeichnung in Form von Geraden. Prinzipiell können auch andere, d.h. gekrümmte, stetige oder unstetige Verläufe der Graphen 2026-1, 2026-2 und/oder 2026-3 erhalten werden und/oder beliebig komplexe Verläufe auftreten. Unabhängig von einem Verlauf der Graphen 2026-1, 2026-2 und 2026-3 ist die Änderung oder Änderungssteigung der Verzeichnung als Funktion der Feldwinkeländerung oberhalb des Feldwinkelschwellwertes geringer als unterhalb des Feldwinkelschwellwertes.

Die hierin beschriebenen Ausführungsbeispiele ermöglichen eine Verringerung der Bauhöhe durch Nutzung eines Multiaperturansatzes mit linearer Kanalanordnung. Dieser Effekt kann dadurch erhöht werden, dass das Array 14 einzeilig, das bedeutet eine einzige Zeile aufweisend, aufgebaut ist. Eine solche Ausführungsform ermöglicht es, einen zweidimensionalen Objektbereich mittels zweidimensional verteilten Teilobjektbereichen mit einer einzigen Zeile optischer Kanäle zu erfassen. Dies führt dazu, dass alle optischen Kanäle entlang einer einzigen Zeile angeordnet sind, so dass eine Abmessung der Multiaperturabbildungsvorrichtung entlang einer Richtung senkrecht zu der Zeilenerstreckungsrichtung 146 (Bauhöhe) minimal wird.

Nachfolgend wird Bezug genommen auf weitere vorteilhafte Ausgestaltungsformen weiterer Komponenten von Multiaperturabbildungsvorrichtungen. Diese ermöglichen beispielsweise eine Einsparung einer zweiten Kamera in einem Abbildungssystem durch eine variable Strahlumlenkung der Strahlengänge, etwa mit einem Spiegel. Hierin beschriebene Ausführungsbeispiele ermöglichen prinzipiell einen vereinfachten Aufbau eines Abbildungssystems, somit eine Senkung von Herstellungskosten und eine Reduktion eines Bauvolumens und insbesondere der Bauhöhe (Abmessung senkrecht zu den Strahlengängen und senkrecht zu der Zeilenerstreckungsrichtung). Die vorangehend beschriebenen Aspekte beruhen auch auf der Erkenntnis, dass eine Optik, die für einen schrägen Einfall mehrerer Strahlengänge optimiert ist, infolge einer Rotationssymmetrie der Linsen gleichzeitig für zumindest zwei Bildbereiche genutzt werden kann. Eine zweite Bildfläche ist bspw. spiegelsymmetrisch zur ersten Bildfläche bezüglich einer optischen Achse und in derselben Bildebene angeordnet.

Ein wesentliches Unterscheidungsmerkmal gegenüber bekannten Abbildungsvorrichtungen ist das Vorhandensein von zumindest zwei Bildbereichen in mindestens einem optischen Kanal der Multiaperturabbildungsvorrichtung, wobei die Bereiche nicht miteinander verbunden sind (disjunkt sind) und eine Bildlücke dazwischen aufweisen). Ein erfasster Teilbereich oder ein erfasstes Teilgesichtsfeld des Gesamtobjektbereichs bzw. Gesamtgesichtsfeldes ist so zu verstehen, dass es sich um die gesamte Abbildung der Teilfläche des Objektbereichs oder Gesamtgesichtsfeldes handelt, die mit dem optischen Kanal erfassbar ist, d. h., die Ausdehnung des Teilbereichs oder Teilgesichtsfeldes ist durch die Optik und ggf. die Gesamtabbildung beeinflussende Elemente wie Blenden bestimmt. Bei zueinander disjunkten Teilbereichen kann dies auch bedeuten, dass der optische Kanal zwischen den disjunkten Teilbereichen nichts oder keine weiteren Teilbereiche des Gesamtgesichtsfeldes oder Gesamtobjektbereichs erfasst.

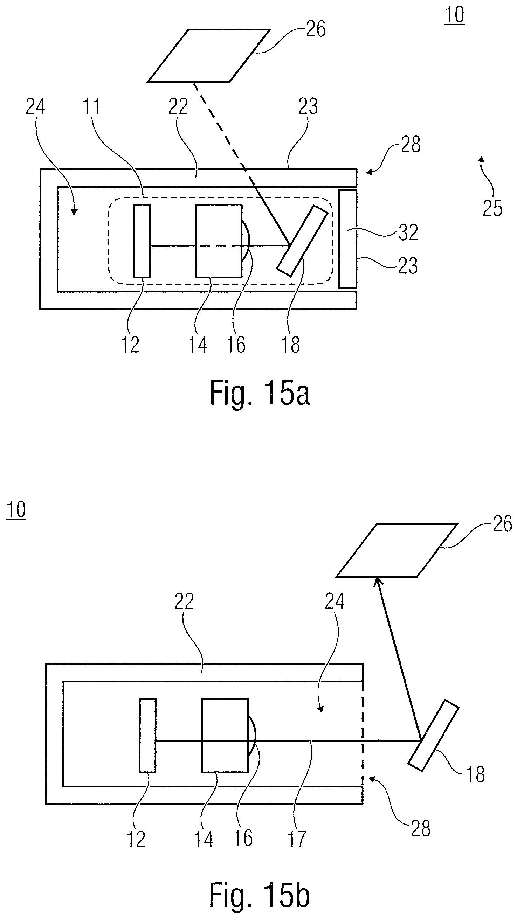

Fig. 15a zeigt eine schematische Seitenschnittansicht einer Vorrichtung 10 gemäß einem Ausführungsbeispiel in einem ersten Betriebszustand. Bei der Vorrichtung 10 kann es sich um eine mobile oder immobile Vorrichtung handeln, wie etwa ein Mobiltelefon, ein Smartphone, ein mobiler Computer, wie etwa ein Tablet-Computer und/oder eine mobile Musikabspieleinrichtung.

Die Vorrichtung 10 umfasst eine Multiaperturabbildungsvorrichtung 11, die einen Bildsensor 12, ein Array 14 von nebeneinander angeordneten optischen Kanälen 16 und eine Strahlumlenkeinrichtung 18 aufweist. Beispielsweise kann es sich bei der Multiaperturabbildungsvorrichtung 11 um die Multiaperturabbildungsvorrichtung 1000 handeln, die ferner die Strahlumlenkeinrichtung 18 aufweist. Alternativ kann es sich auch um eine andere Multiaperturabbildungsvorrichtung gemäß hierin beschriebener Ausführungsbeispiele handeln, etwa eine Multiaperturabbildungsvorrichtung 4000, 4000', 7000, 7000, 8000, 10000, 10000', 11000, 13000 oder 13000'. Obwohl manche der Figuren vier optische Kanäle zeigen, wovon zwei Kanäle zumindest zwei Strahlengänge umfassen, die eine gemeinsame Optik nutzen, sei ang6emerkt, dass die Ausführungen ohne Einschränkungen auf die oben erläuterten Ausführungsbeispiele zutreffen. Alternativ oder zusätzlich kann eine andere Anzahl von optischen Kanälen angeordnet sein, etwa 3, 5 oder mehr.

Die nachfolgend ausgeführten Merkmale von Multiaperturabbildungsvorrichtungen und/oder Abbildungssystemen sind ohne weiteres auf die vorangehend beschriebenen Multiaperturabbildungsvorrichtungen übertragbar, insbesondere im Hinblick auf Funktionen zur Bildstabilisierung, zur Fokussierung, zur Integration in ein Gehäuse mit teilweise rotatorisch und translativ bewegten Komponenten und Subsystemen und zur Ausgestaltung zu Vorrichtungen die die Multiaperturabbildungsvorrichtung oder mehrere Multiaperturabbildungsvorrichtungen umfassen.

Die Strahlumlenkeinrichtung 18 ist ausgebildet, um einen Strahlengang 17 der optischen Kanäle 16 umzulenken und wird später ausführlich beschrieben. Die Vorrichtung 10 umfasst ein Gehäuse 22, das Außenflächen 23 aufweist, die ein Gehäusevolumen 24 umschließen. Das bedeutet, das Gehäusevolumen 24 kann ein Innenvolumen des Gehäuses 22 und das Volumen des Gehäuses 22 umfassen. Das Gehäusevolumen beinhaltet dabei auch ein Volumen, dass durch die Gehäusewände beansprucht wird und wird somit von den Außenflächen 23 des Gehäuses umschlossen. Das Gehäuse 22 kann transparent oder opak gebildet sein und bspw. Kunststoffmaterialien und/oder Metallmaterialien umfassen. Die Strahlumlenkeinrichtung 18 weist eine erste Position innerhalb des Gehäusevolumens 24 auf. Löcher oder Durchbrüche in den Gehäuseseiten, etwa für akustische Kanäle von Mikrophonen oder für elektrische Kontakte der Vorrichtung 10 können für die Bestimmung des Gehäusevolumens 24 vernachlässigt werden. Das Gehäuse 22 und/oder in dem Gehäuse 22 angeordnete Bauteile können den Strahlengang 17 der optischen Kanäle 16 nach einer Umlenkung durch die Strahlumlenkeinrichtung 18 blockieren, so dass ein außerhalb des Gehäuses 22 angeordnetes Gesichtsfeld 26 mit der Multiaperturabbildungsvorrichtung 11 erfasst werden soll nicht oder nur eingeschränkt erfassbar ist. Bei den Bauteilen kann es sich etwa um einen Akku, Platinen, nicht transparente Bereiche des Gehäuses 22 oder dergleichen handeln. Anders ausgedrückt kann an einem Gehäuse anstelle eines bisherigen Kameraobjektivs ein anderes, ggf. nicht-optisches Bauelement angeordnet werden.

Das Gehäuse 22 kann eine Öffnung 28 aufweisen, durch die das Gehäusevolumen 24 mit einem Außenvolumen 25 des Gehäuses 22 verbunden ist. Die Öffnung 28 kann zeitweise von einer Abdeckung 32 ganz oder teilweise verschlossen sein. Der erste Betriebszustand der Vorrichtung 10 kann ein inaktiver Betriebszustand der Multiaperturabbildungsvorrichtung 11 sein, bei dem die optischen Kanäle 16 bspw. auf die Innenseite des Gehäuses 22 gelenkt werden oder nicht umgelenkt werden.

In anderen Worten wird die Bauhöhe des Aufbaus der Multiaperturabbildungsvorrichtung zumindest teilweise vom Durchmesser von Optiken der optischen Kanäle 16 (Linsen) bestimmt. In einem (ggf. optimalen) Fall ist die Ausdehnung der Spiegel (Strahlumlenkeinrichtung) in dieser Dickenrichtung gleich groß der Ausdehnung der Linsen in dieser Richtung. Dabei wird jedoch der Strahlengang des optischen Kanals 16 durch den Spiegel 18 beschnitten. Dies führt zu einer Reduzierung der Bildhelligkeit, wobei diese Reduzierung abhängig vom Feldwinkel ist. Die vorliegenden Ausführungsbeispiele lösen dies Problem, indem Teile oder aber der gesamte Multikanalkameraaufbau bewegt wird, so dass im Betriebszustand der Kamera Teile des Aufbaus über das Gehäuse z.B. eines Smartphones herausragen verglichen mit dem Zustand der Nichtnutzung der Kamera. Die Bewegung der Teile, wie z.B. die Strahlumlenkeinrichtung, kann rotativ (Ausklappen oder Aufklappen), translativ (Ausfahren) oder aus einer Mischform bestehen. Die zusätzlichen Bewegungen von Teilen bzw. des Gesamtsystems ermöglichen, ähnlich bekannter Zoom-Objektive an Kompaktkameras, eine minimale Bauform im Nichtnutzungsmodus der Kameras und eine für die Realisierung der technischen Funktion optimierte, größere Bauform im Nutzungsmodus der Kamera.

Fig. 15b zeigt eine schematische Seitenschnittansicht der Vorrichtung 10 in einem zweiten Betriebszustand. In dem zweiten Betriebszustand weist die Strahlumlenkeinrichtung 18 eine zweite Position außerhalb des Gehäusevolumens 24 auf. Dies ermöglicht, dass die Strahlumlenkeinrichtung 18 die Strahlengänge 17 der optischen Kanäle 16 außerhalb des Gehäusevolumens 24 umlenkt und das Gesichtsfeld 26 außerhalb des Gehäuses 22 von der Multiaperturabbildungsvorrichtung 11 erfassbar ist. Die Abdeckung 32 kann aus der in Figur 15a gezeigten Position wegbewegt sein, so dass die Strahlumlenkeinrichtung 18 durch die Öffnung 28 des Gehäuses 22 aus dem Gehäusevolumen 24 bewegbar ist. Die Strahlumlenkeinrichtung 18 kann translatorisch und/oder rotatorisch zwischen der ersten Position und der zweiten Position bewegt werden. Vorteilhaft ist, dass die Bauteile innerhalb des Gehäuses 22 und/oder das Gehäuse 22 den umgelenkten Strahlengang 17 der optischen Kanäle 16 nicht blockieren.

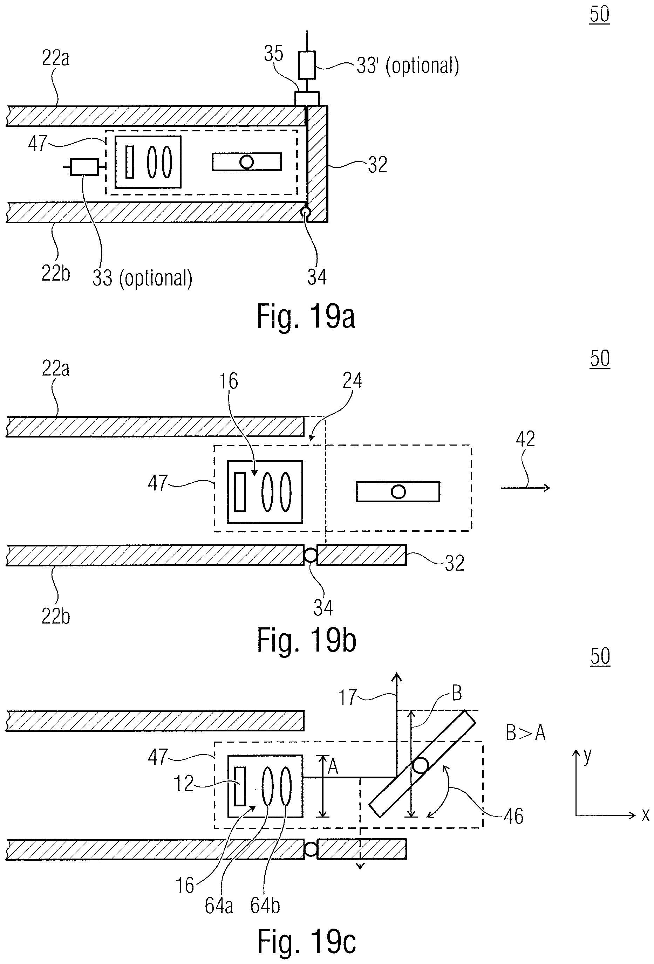

Die Multiaperturabbildungsvorrichtung 11 kann in einem Kameragehäuse angeordnet sein, das wiederum zumindest teilweise in dem Gehäuse 22 angeordnet ist. Das Kameragehäuse kann bspw. zumindest teilweise von einem Verfahrschlitten, wie er im Zusammenhang mit Fig. 19 beschrieben ist, gebildet sein. Dies unterscheidet sich von einem Konzept, bei dem eine einkanalige Kamera mittels eines Umklapp-Mechanismus in verscheide Richtungen orientiert wird, dadurch, dass vorliegend eine Rotation oder Verkippung eines Bildsensors und/oder der Abbildungsoptik vermeidbar ist.

Ein Gesamtgesichtsfeld kann mittels der Vorrichtung 10 so erfasst werden, dass die Strahlumlenkeinrichtung ausgehend von der ersten Position in die zweite Position bewegt wird, in der die Strahlumlenkeinrichtung zumindest teilweise außerhalb eines Gehäusevolumens platziert wird. Weist die Strahlumlenkeinrichtung die zweite Position auf, kann das Gesamtgesichtsfeld und mit dem Array von nebeneinander angeordneten optischen Kanälen der Multiaperturabbildungsvorrichtung, deren Strahlengänge von der Strahlumlenkeinrichtung umgelenkt werden, erfasst werden.

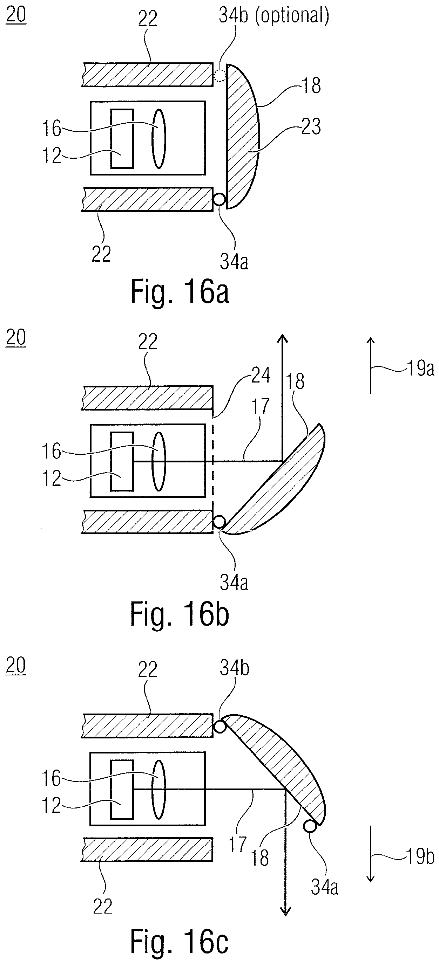

Fig. 16a zeigt eine schematische Seitenschnittansicht einer Vorrichtung 20 gemäß einem weiteren Ausführungsbeispiel in einem ersten Betriebszustand. Die Vorrichtung 20 weist die Abdeckung 23 auf, die drehbar an dem Gehäuse 22 gelagert ist, etwa über ein Verbindungselement 34a und/oder über ein optionales Verbindungselement 34b. Das Verbindungselement 34a und/oder 34b kann ausgebildet sein, um ein Verkippen und mithin eine rotatorische Bewegung zwischen der Abdeckung 23 der Strahlumlenkeinrichtung 18 gegenüber dem Gehäuse 22 zu ermöglichen und bspw. als Scharnier oder Walzenlager gebildet sein.

Die Strahlumlenkeinrichtung 18 kann eine Abdeckung des Gehäuses bilden oder ein Teil hiervon sein. Eine der strahlumlenkenden Oberflächen der Strahlumlenkeinrichtung 18 kann eine Außenkannte des Gehäuses sein. Die Strahlumlenkeinrichtung 18 weist eine erste Position auf und verschließt das Gehäuse 22 teilweise oder vollständig. Bspw. kann die Strahlumlenkeinrichtung 18 einen reflektiven Bereich zum Umlenken des Strahlengang 17 aufweisen und Kontaktbereiche aufweisen, die ausgebildet sind, um mit dem Gehäuse 22 in er ersten Position einen mechanischen Kontakt zu bilden. Vereinfacht ausgedrückt, kann die Kamera nicht oder kaum sichtbar sein, wenn sie nicht benutzt wird.

Fig. 16b zeigt eine schematische Seitenschnittansicht der Vorrichtung 20 in einem zweiten Betriebszustand. In dem zweiten Betriebszustand kann die Strahlumlenkeinrichtung 18 rotatorisch gegenüber dem Gehäuse 22 bewegt, d.h., ausgeklappt, sein, so dass das Gehäusevolumen 24 geöffnet ist. Die rotatorische Verkippung ermöglicht eine geneigte oder verkippte Orientierung der Strahlumlenkeinrichtung 18 gegenüber einem Verlauf des Strahlengangs 17 der optischen Kanäle 16 zwischen dem Bildsensor 12 und der Strahlumlenkeinrichtung 18, so dass der Strahlengang 17 an der Strahlumlenkeinrichtung 18 in eine erste Richtung 19a umgelenkt wird.

Fig. 16c zeigt eine schematische Seitenschnittansicht der Vorrichtung 20 in einer dritten Position. Die Vorrichtung 20 kann den zweiten Betriebszustand aufweisen. Verglichen mit der zweiten Position, wie sie in Fig. 16b dargestellt ist, kann die Strahlumlenkeinrichtung 18 den Strahlengang 17 der optischen Kanäle 16 in eine andere Richtung 19b umlenken, so dass ein anderes Gesichtsfeld oder ein an einem anderen Ort positioniertes Gesichtsfeld erfassbar ist. Bspw. kann es sich um eine erste Seite und eine gegenüberliegende Seite, wie etwa Vorderseite und Rückseite, Links und Rechts oder Oben und Unten der Vorrichtung 20 und/oder eines Nutzers handeln, in die das Strahlengang 17 umgelenkt wird. Die Verbindungselemente 34a und 34b können bspw. mit einer Rahmenstruktur und der Strahlumlenkeinrichtung 18 verbunden sein, so dass die Strahlumlenkeinrichtung 18 wechselseitig die zweite oder dritte Position aufweisen kann. Durch eine umschaltbare Blickrichtung der Multiaperturabbildungsvorrichtung können bisherige Lösungen insbesondere in Smartphones unter Nutzung zweier Kameras mit Blickrichtung nach vorn und hinten durch einen Aufbau ersetzt werden.

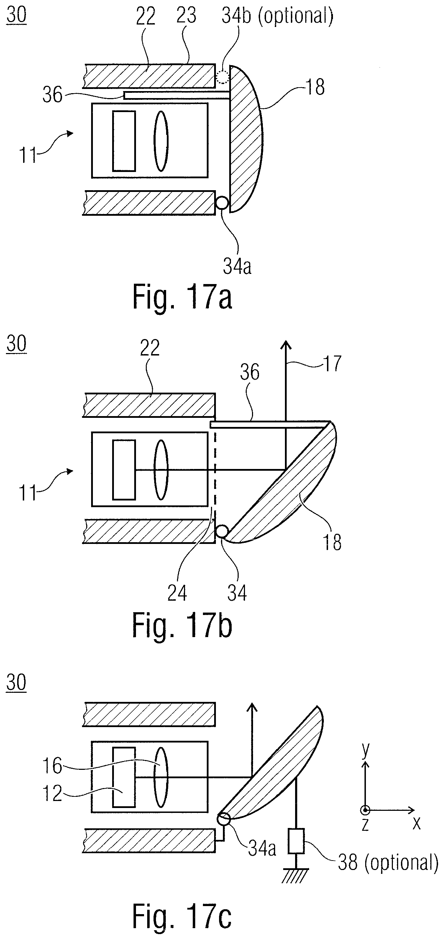

Fig. 17a zeigt eine schematische Seitenschnittansicht einer Vorrichtung 30 gemäß einem weiteren Ausführungsbeispiel in dem ersten Betriebszustand. Verglichen mit der Vorrichtung 20, wie sie in den Fig. 16a-c beschrieben ist, weist die Vorrichtung 30 eine zumindest teilweise transparente Abdeckung 36 auf, die zwischen einer Außenkannte 23 des Gehäuses 22 und der Multiaperturabbildungsvorrichtung 11 angeordnet ist. Die zumindest teilweise transparente Abdeckung ist mit der Strahlumlenkeinrichtung 18 verbunden und ausgebildet, um sich basierend auf einer Bewegung der Strahlumlenkeinrichtung 18 zu bewegen. Die zumindest teilweise transparente Abdeckung 36 kann bspw. polymere und/oder Glasmaterialien aufweisen.

In anderen Worten können u. a. Vorrichtungen vorgesehen sein, die eine Kapselung der Optik zum Schutz vor Verschmutzung unter Möglichkeit der Änderung des gekapselten Volumens ermöglichen (bewegliche Deckgläser).

Fig. 17b zeigt eine schematische Seitenschnittansicht der Vorrichtung 30 in dem zweiten Betriebszustand. Verglichen mit der Vorrichtung 20 in Fig. 16b ist die zumindest teilweise transparente Abdeckung zumindest teilweise aus dem Gehäusevolumen 24 herausbewegt. Dies kann durch eine Rotationsbewegung der Strahlumlenkeinrichtung um das Verbindungselement 34 erfolgen. Die Strahlumlenkeinrichtung 18 ist ausgebildet, um den Strahlengang 17 der optischen Kanäle 16 so umzulenken, dass die optischen Kanäle durch die zumindest teilweise transparente Abdeckung verlaufen. Die Abdeckung 36 ist ausgebildet, um einen Eintritt von Partikeln, Schmutz und/oder Feuchtigkeit in das Gehäusevolumen 24 zu reduzieren oder zu verhindern. Die Abdeckung 36 kann dabei für die Strahlengänge 17 transparent gebildet sein und/oder teilweise opak ausgebildet sein. Bspw. kann die Abdeckung 36 für bestimmte Wellenlängenbereiche elektromagnetischer Strahlung intransparent sein. Vorteilhaft an der Abdeckung 36 ist, dass durch den reduzierten Umfang von Partikeln, Schmutz und/oder Feuchtigkeit eine lange Betriebsdauer der Vorrichtung und/oder eine dauerhaft hohe Bildqualität erhalten werden kann, da eine Verschmutzung von Optiken der optischen Kanäle gering ist.

Fig. 17c zeigt eine schematische Seitenschnittansicht der Vorrichtung 30, bei der die Strahlumlenkeinrichtung 18 mit einem optionalen Aktor 38 translatorisch entlang einer Richtung y senkrecht zu einer Richtung x des Strahlengangs 17 zwischen dem Bildsensor 12 und den optischen Kanälen 16 und senkrecht zu einer Richtung z senkrecht zu einer Zeilenerstreckungsrichtung des Arrays von optischen Kanälen 16 bewegbar ist. Die Strahlumlenkeinrichtung 18 kann auch basierend auf der Rotationsbewegung um das Verbindungselement 34 translatorisch bewegt werden, etwa über eine Führung, einen Hebel oder dergleichen. Das Aufklappen (Rotationsbewegung) kann manuell oder unter Nutzung eines Aktors erfolgen. Der optionale Aktor 38 kann an der Strahlumlenkeinrichtung 18 angeordnet sein. Alternativ kann der Aktor 38 zwischen dem Gehäuse 22 und der Strahlumlenkeinrichtung 18 angeordnet sein. Der Aktor 38 kann bspw. zwischen dem Gehäuse 22 und dem Verbindungselement 34a und/oder zwischen dem Verbindungselement 34a und der Strahlumlenkeinrichtung 18 angeordnet sein. Vorteilhaft daran ist, dass durch die translatorische Bewegung der Strahlumlenkeinrichtung entlang der x-Richtung das Gehäuse eine Abschattung des zu erfassenden Gesichtsfeldes durch das Gehäuse 22 reduzierbar ist.

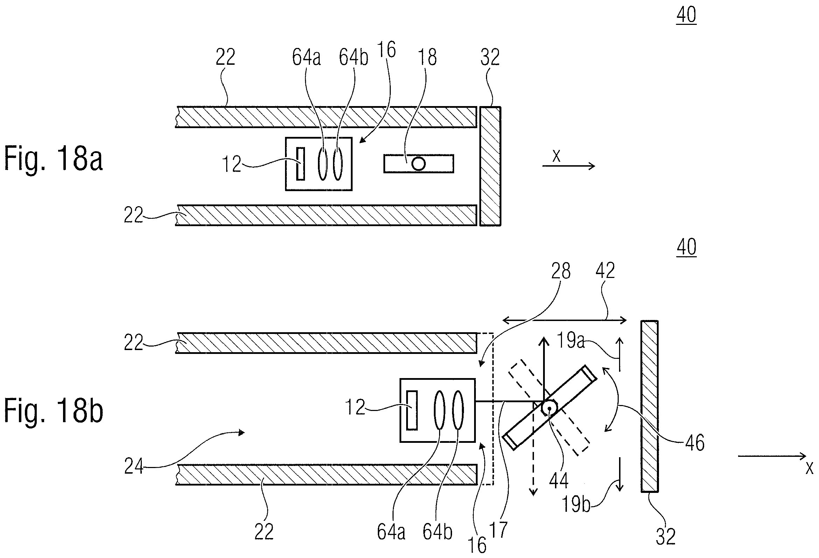

Fig. 18a zeigt eine schematische Seitenschnittansicht einer Vorrichtung 40 gemäß einem Ausführungsbeispiel in dem ersten Betriebszustand. Die Strahlumlenkeinrichtung 18 ist in der ersten Position innerhalb des Gehäusevolumens des Gehäuses 22 angeordnet und ausgebildet, um basierend auf einer translatorischen Bewegung 42 von der ersten Position in die zweite Position bewegt zu werden, die schematisch in Fig. 18b dargestellt ist. Wie in Fig. 18a dargestellt, kann das Gehäuse die Abdeckung 32 aufweisen, die das Gehäuse 22 bzw. eine Öffnung darin in dem ersten Betriebszustand verschließt. Die Strahlumlenkeinrichtung 18 kann in dem ersten Betriebszustand so orientiert sein, dass sie senkrecht zu einer Richtung x, die durch den optischen Strahlengang innerhalb des Gehäuses 22 definiert wird, eine minimale Ausdehnung aufweist.

Fig. 18b zeigt eine schematische Seitenschnittansicht der Vorrichtung 40 in dem zweiten Betriebszustand. Die Strahlumlenkeinrichtung ist basierend auf der translatorischen Bewegung 42, bspw. entlang der x-Richtung aus dem Gehäusevolumen 24 herausbewegt. Hierfür kann die Strahlumlenkeinrichtung 18 durch die Öffnung 28 bewegt werden. Die Strahlumlenkeinrichtung 18 kann um eine Rotationsachse 44 rotatorisch bewegbar sein. Während der translatorischen Bewegung zwischen dem ersten Betriebszustand und dem zweiten Betriebszustand kann die Strahlumlenkeinrichtung 18 eine rotatorische Bewegung um die Rotationsachse 44 ausführen. Eine Winkelorientierung der Strahlumlenkeinheit kann verglichen mit dem ersten Betriebszustand aus Fig. 18a verändert sein, so dass die vom Strahlengang der Multiaperturabbildungsvorrichtung genutzte Fläche der Strahlumlenkeinrichtung verglichen mit dem ersten Betriebszustand zunimmt. Eine Rotationsbewegung 46 um die Rotationsachse 44 ermöglicht eine veränderliche Neigung der Strahlumlenkeinrichtung 18 gegenüber dem Strahlengang 17 zwischen den optischen Kanälen 16 und der Strahlumlenkeinrichtung 18 und mithin eine veränderliche Richtung in die der Strahlengang 17 der optischen Kanäle 16 abgelenkt wird. Die optischen Kanäle 16 können Optiken 64a-b aufweisen.

Zusätzlich zur Strahlumlenkeinrichtung 18 können in dem zweiten Betriebszustand Optiken 64a-b der optischen Kanäle 16 und/oder der Bildsensor 12 außerhalb des Gehäusevolumens 24 angeordnet sein. Bspw. können die Optiken 64a-b der optischen Kanäle 16 und/oder der Bildsensor 12 mit der Strahlumlenkeinrichtung 18 mitbewegt werden.

In anderen Worten umfassen Multiaperturkameras mit linearer Kanalanordnung mehrere optische Kanäle, die nebeneinander angeordnet sind, und jeweils Teile des Gesamtgesichtsfeldes übertragen. Vorteilhafterweise ist ein Spiegel vor den Abbildungslinsen angebracht, der zur Strahlumlenkung genutzt werden kann und zur Reduzierung der Bauhöhe beiträgt. In Kombination mit einem kanalweise angepassten Spiegel, etwa ein Facettenspiegel, wobei die Facetten plan oder beliebig gekrümmt oder mit einer Freiformfläche versehen sind, ist es vorteilhafterweise möglich, dass die Abbildungsoptiken der optischen Kanäle im Wesentlichen identisch aufgebaut sind, wohingegen die Blickrichtung der Kanäle durch die einzelnen Facetten des Spiegel-Arrays vorgegeben sind. Eine Oberfläche der Strahlumlenkeinrichtung ist zumindest an den optischen Kanälen zugeordneten reflektierenden Facetten verspiegelt. Es ist auch möglich, dass die Abbildungsoptiken der Kanäle unterschiedlich ausgeprägt sind, so dass sich unterschiedliche Blickrichtungen durch den Winkel der Spiegelfacette und der Gestaltung des jeweiligen optischen Kanals ergeben. Es ist weiterhin möglich, dass mehrere Kanäle denselben Bereich der Strahlumlenkeinrichtung nutzen und damit die Anzahl von Facetten kleiner als die der Kanäle ist. Der Ablenkspiegel kann dabei drehbar gelagert sein, wobei die Drehachse bspw. parallel zur Erstreckungsrichtung der Kanäle verläuft. Der Ablenkspiegel kann beidseitig reflektiv sein, wobei metallische oder dielektrische Schichten(folgen) genutzt werden können. Die Drehung des Spiegels kann analog oder bistabil oder mehrfach stabil erfolgen. Basierend auf der Dreh- oder Rotationsbewegung kann die Strahlumlenkeinrichtung zwischen zumindest einer ersten Stellung und einer zweiten Stellung bewegbar sein, wobei die Strahlengänge in jeder Stellung in voneinander verschiedene Richtungen umgelenkt werden. Ähnlich, wie es für die Stellungen der Strahlumlenkeinrichtung 18 in den Fig. 16-c beschrieben ist kann die Strahlumlenkeinrichtung auch um eine Rotationsachse bewegt werden. Zusätzlich zur translatorischen Bewegung der Gehäuseabdeckung 32 und der Strahlumlenkeinrichtung 18 können Teile bzw. alle zusätzlichen Komponenten der Multiaperturabbildungsvorrichtung translativ in dieselbe Richtung mitbewegt werden, wobei gleiche oder auch unterschiedliche Stellwege möglich sind.

Fig. 19a zeigt eine schematische Seitenschnittansicht einer Vorrichtung 50 bei der die Abdeckung 32 rotatorisch bewegbar über ein Bewegungselement 34 an einer Gehäuseseite 22b des Gehäuses 22 angeordnet ist. Die Strahlumlenkeinrichtung 18 kann mit einem Verfahrschlitten 47 mechanisch verbunden sein. Der Verfahrschlitten 47 kann als mechanische Transporteinrichtung zum Bewegen zumindest der Strahlumlenkeinrichtung 18 verstanden werden. Die Vorrichtung 50 kann einen Aktor 33 umfassen, der ausgebildet ist, um den Verfahrschlitten 47 translatorisch zu bewegen. Der Aktor kann einen beliebigen Antrieb, etwa einen Schrittmotor, einen piezoelektrischen Antrieb oder einen Tauchspulenantrieb umfassen. Alternativ oder zusätzlich zu dem Aktor 33 kann die Vorrichtung 50 einen Aktor 33' umfassen, der ausgebildet ist, um eine mechanische Verriegelung 35 zu lösen, die die Abdeckung 32 und das Gehäuse an zumindest einer Gehäuseseite 22a verriegelt. Bspw. kann die Strahlumlenkeinrichtung oder der Verfahrschlitten 47 mittels einer Federkraft aus dem Gehäuse fahrbar sein, wenn die Verriegelung 33' gelöst wird. Das bedeutet, die Verriegelung 35 kann ausgebildet sein, um die Strahlumlenkeinrichtung 18 in der ersten Position zu halten. Der Verfahrschlitten 47 kann auch in Vorrichtung 40 angeordnet sein. Das bedeutet, der Verfahrschlitten 47 ist auch bei einer translatorischen Bewegung der Abdeckung 32 einsetzbar.

Fig. 19b zeigt eine schematische Seitenschnittansicht der Vorrichtung 50 bei der der Verfahrschlitten 47 entlang der translatorischen Bewegungsrichtung 42 bewegt ist, so dass die Strahlumlenkeinrichtung 18 aus dem Gehäusevolumen 24 herausbewegt ist. Der Bildsensor 12 und/oder Optiken der optischen Kanäle 16 können ebenfalls mit dem Verfahrschlitten 47 mechanisch verbunden sein und mit der Strahlumlenkeinrichtung 18 in einem gleichen Umfang mitbewegbar sein. Alternativ können der Bildsensor 12 und/oder die Optiken der optischen Kanäle 16 in einem geringeren Umfang als die Strahlumlenkeinrichtung 18 bewegbar sein, so dass ein Abstand zwischen dem Bildsensor 12, den Optiken und/oder Strahlumlenkeinrichtung 18 während eines Herausfahrens vergrößert wird. Alternativ oder zusätzlich können der Bildsensor 12 und/oder die Optiken der optischen Kanäle ortsfest bzgl. des Gehäuses angeordnet sein, so dass lediglich die Strahlumlenkeinrichtung 18 mittels des Verfahrschlittens 47 bewegt wird. Ein sich vergrö-ßernder Abstand zwischen dem Bildsensor 12, den Optiken und/oder Strahlumlenkeinrichtung 18 während eines Herausfahrens ermöglicht einen geringen Abstand der Komponenten in dem ersten Betriebszustand, so dass die Multiaperturabbildungsvorrichtung mit einem geringen Bauraumbedarf in dem Gehäuse 22 untergebracht werden kann.

Fig. 19c zeigt eine schematische Seitenschnittansicht der Vorrichtung 50 in dem zweiten Betriebszustand. Die Strahlumlenkeinrichtung kann rotatorisch gelagert sein, um die Rotationsbewegung 46 auszuführen, wie es bspw. für die Vorrichtung 40 beschrieben ist. Wie es im Zusammenhang mit Fig. 18b beschrieben ist, kann die Winkelorientierung der Strahlumlenkeinrichtung 18 verglichen mit dem ersten Betriebszustand aus Fig. 19a oder dem Zustand in Fig. 19b verändert sein, so dass die vom Strahlengang der Multiaperturabbildungsvorrichtung genutzte Fläche der Strahlumlenkeinheit verglichen mit dem ersten Betriebszustand zunimmt. Eine den optischen Kanälen 16 bzw. dem Bildsensor 12 zugewandte Seite der Strahlumlenkeinrichtung 18 kann eine Abmessung B senkrecht zu der translatorischen Bewegungsrichtung 42, bspw. entlang der y-Richtung aufweisen, die größer ist, als eine Abmessung A des Bildsensors 12 bzw. der optischen Kanäle 16 entlang dieser Richtung. Die Abmessung B ist bspw. senkrecht zu einer Zeilenerstreckungsrichtung des Arrays und parallel zu einer Oberfläche eines Bildsensors, auf den die optischen Kanäle treffen. Dies kann dazu führen, dass ein hohes Maß an Licht von der Stahlumlenkeinrichtung 18 umlenkbar ist und eine Helligkeit eines zu erfassenden Bildes hoch ist. In der in Fig. 19a gezeigten Stellung ist die Ausdehnung oder Abmessung B kleiner als in der in Fig. 19c gezeigten Stellung oder einer Stellung, in der die Strahlumlenkeinrichtung 18 den Strahlengang in eine andere Blickrichtung lenkt.

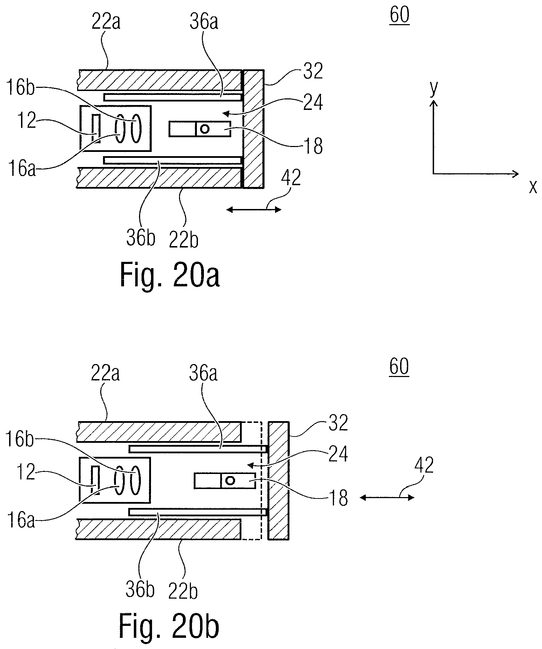

Fig. 20a zeigt eine schematische Seitenschnittansicht einer Vorrichtung 60 gemäß einem Ausführungsbeispiel in dem ersten Betriebszustand. Die Strahlumlenkeinrichtung 18 weist die erste Position auf. Verglichen mit der Vorrichtung 40 und der Vorrichtung, wie sie in den Fig. 18a und 18b beschrieben ist, weist die Vorrichtung 50 zumindest teilweise transparente Abdeckungen 36a und 36b auf, die mit der Abdeckung 32 verbunden sind und mit dieser entlang der translatorischen Bewegungsrichtung 42 bewegbar sind. Die zumindest teilweise transparenten Abdeckungen 36a und 36b können jeweils an voneinander verschiedenen Seiten der Strahlumlenkeinrichtung 18 zwischen selbiger und dem Gehäuse 22 angeordnet sein. In dem ersten Betriebszustand können die Abdeckungen 36a und 36b teilweise oder vollständig innerhalb des Gehäusevolumens 24 angeordnet sein. Die Abdeckungen 36a und 36b können bspw. an dem in den Fig. 19a-c dargestellten Verfahrschlitten 47 angeordnet oder transparente Bereiche des Verfahrschlittens 47 sein.

Fig. 20b zeigt eine schematische Seitenschnittansicht der Vorrichtung 60, bei der die Strahlumlenkeinrichtung 18 eine Zwischenposition zwischen der ersten Position und der zweiten Position aufweist. Bspw. kann die Zwischenposition der Strahlumlenkeinrichtung während eines Einfahrens oder eines Ausfahrens der Strahlumlenkeinrichtung 18 in das Gehäusevolumen 24 hinein bzw. aus dem Gehäusevolumen 24 heraus erhalten werden. Die Strahlumlenkeinrichtung 18 ist teilweise aus dem Gehäusevolumen 24 herausbewegt.

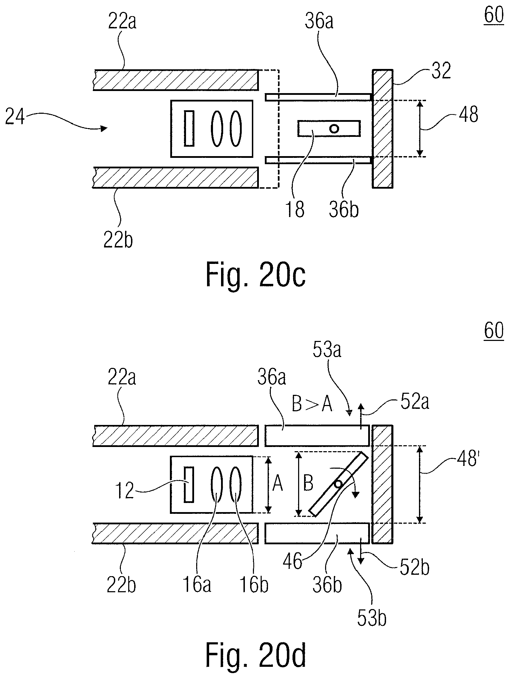

Fig. 20c zeigt eine schematische Seitenschnittansicht der Vorrichtung 60, bei der die Strahlumlenkeinrichtung 18 die zweite Position aufweist, d.h., die Strahlumlenkeinrichtung 18 ist bspw. vollständig aus dem Gehäusevolumen 24 herausgefahren. Die zumindest teilweise transparenten Abdeckungen 36a und 36b weisen einen Abstand 48 zueinander auf, der kleiner ist als ein vergleichbarer Abstand zwischen Seitenflächen des Gehäuses 22a und 22b.

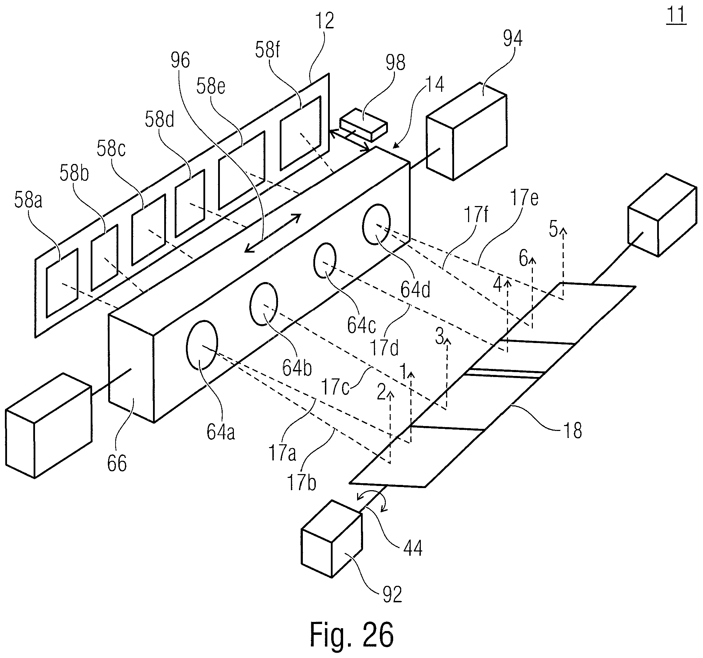

Fig. 20d zeigt eine schematische Seitenschnittansicht der Vorrichtung 60, bei der ein Abstand der zumindest teilweise transparenten Abdeckungen 36a und 36b verglichen mit den Fig. 20a-c vergrößert ist. Die zumindest teilweise transparenten Abdeckungen 36a und/oder 36b können entlang einer von der jeweils anderen zumindest teilweise transparenten Abdeckung 36a bzw. 36b abgewandte translatorische Bewegungsrichtung 52a bzw. 52b, bspw. entlang einer positiven oder negativen y-Richtung bewegbar sein. Der in den Fig. 20a-c dargestellte Zustand der zumindest teilweise transparenten Abdeckungen 36a und 36b kann als eingefahrener oder zusammengeklappter Zustand verstanden werden. Der in Fig. 20d dargestellte Zustand kann als ausgefahrener oder ausgeklappter Zustand verstanden werden, bei dem ein Abstand 48' zwischen den zumindest teilweise transparenten Abdeckungen 36a und 36b gegenüber dem Abstand 48 verändert, bspw. vergrößert ist. Der Abstand 48' kann bspw. größer oder gleich sein, als der Abstand zwischen den vergleichbaren Seiten des Gehäuses 22. Die Strahlumlenkeinrichtung 18 ist ausgebildet, um die Strahlengänge der optischen Kanäle so umzulenken, dass sie durch die zumindest teilweise transparenten Abdeckungen 36a und/oder 36b verlaufen. Wie es im Zusammenhang mit Fig. 18b, Fig. 19a und Fig. 19b beschrieben ist, kann die Winkelorientierung der Strahlumlenkeinrichtung 18 verglichen mit dem ersten Betriebszustand aus Fig. 20a oder dem Zustand in Fig. 20b oder 20c verändert sein, so dass die vom Strahlengang der Multiaperturabbildungsvorrichtung genutzte Fläche der Strahlumlenkeinheit verglichen mit dem ersten Betriebszustand zunimmt. Der vergrößerte Abstand 48' kann alternativ oder zusätzlich einen erhöhten Umfang der rotatorischen Bewegung 46 ermöglichen. Mit der rotatorischen Bewegung 46 kann die Strahlumlenkeinrichtung 18 zwischen zumindest einer ersten und einer weiteren Stellung umschaltbar sein, wobei jede Stellung einer Blickrichtung der Multiaperturabbildungsvorrichtung zugeordnet werden kann. Die Drehung des Spiegels kann analog oder bistabil oder mehrfach stabil erfolgen. Die rotatorische Bewegung 46 zur Veränderung einer Blickrichtung der Multiaperturabbildungsvorrichtung kann mit einer Rotationsbewegung der Strahlumlenkeinrichtung 18 zur optischen Bildstabilisierung kombiniert werden, was im Zusammenhang mit Fig. 26 beschrieben ist. Die Abdeckungen 36a und/oder 36b können die anderen Komponenten der Multiaperturabbildungsvorrichtung kapseln.

Die gegenüberliegend angeordneten Abdeckungen 36a und/oder 36b bzw. transparente Bereiche hiervon können eine schaltbare Blende aufweisen, so dass die schaltbare Blende bspw. ober- und/oder unterhalb oder entlang einer beliebigen anderen Richtung der Strahlumlenkeinrichtung eingebracht ist. Die Blende kann nach Betriebszustand und Blickrichtung der Kamera geschaltet werden. Bspw. kann jeweils eine nicht genutzt Blickrichtung der Multiaperturabbildungsvorrichtung von der Blende zumindest teilweise verschlossen werden, um einen Eintritt von Falschlicht zu reduzieren. Die Blenden können z. B. mechanisch bewegt oder elektrochrom sein. Die von der Blende beeinflussten Bereiche können zusätzlich mit einer schaltbaren Blende ausgestattet sein, die den optischen Aufbau für den Fall der Nichtbenutzung abdeckt. Die Blende kann elektrisch steuerbar sein und eine elektro-chrome Schicht(folge) umfassen. Die Blende kann ein mechanisch bewegtes Teil umfassen. Die Bewegung kann unter Nutzung pneumatischer, hydraulischer, piezoelektrischer Aktoren, DC-Motoren, Schrittmotoren, thermischer Aktoren, elektrostatischer Aktoren, elektrostriktiver und/oder magnetostriktiver Aktoren oder Antriebe erfolgen. In einem Zustand der Multiaperturabbildungsvorrichtung, bei der die Blickrichtung eine Blende durchdringt kann die Blende so geschaltet werden, um die Strahlengänge der optischen Kanäle durchzulassen. Das bedeutet, dass die Multiaperturabbildungsvorrichtung einen ersten Betriebszustand und einen zweiten Betriebszustand aufweisen kann. Die Strahlumlenkeinrichtung kann den Strahlengang der optischen Kanäle in dem ersten Betriebszustand so umlenken, dass dieser durch einen ersten transparenten Bereich der Abdeckung 36a verläuft. in dem zweiten Betriebszustand kann der Strahlengang der optischen Kanäle so umgelenkt werden, dass dieser durch einen zweiten transparenten Bereich der Abdeckung 36b verläuft. Eine erste Blende 53a kann ausgebildet sein, um den ersten transparenten Bereich in dem zweiten Betriebszustand optisch zumindest teilweise zu verschließen. Eine zweite Blende 53b kann ausgebildet sein, um den zweiten transparenten Bereich in dem ersten Betriebszustand optisch zeitweise zumindest teilweise zu verschließen. So kann ein Eintritt von Falschlicht aus einer Richtung, die nicht die aktuelle Blickrichtung der Multiaperturabbildungsvorrichtung ist, reduziert werden, was sich vorteilhaft auf die Bildqualität auswirkt. Die erste und/oder zweite Blende 53a-b kann für zumindest einen, für zumindest zwei oder für alle der optischen Kanäle wirksam sein. Bspw. können zumindest einer, zumindest zwei oder alle optischen Kanäle der Multiaperturabbildungsvorrichtung durch die erste Blende verlaufen, wenn der Strahlengang der optischen Kanäle durch den ersten transparenten Bereich gelenkt wird und durch die zweite Blende verlaufen, wenn der Strahlengang der optischen Kanäle durch den zweiten transparenten Bereich gelenkt wird.

Es wird darauf hingewiesen, dass es möglich ist, einen Mechanismus zum Ausklappen der Strahlumlenkeinrichtung gemäß den Fig. 16 und 17 mit einem Mechanismus zum translatorischen Bewegen zu kombinieren, d.h., es können Mischformen auftreten. Ein Aufklappen des Gehäuses und/oder ein Ausfahren der Strahlumlenkeinrichtung kann derart erfolgen, dass ggf. das Abbildungsmodul, d.h., die optischen Kanäle, Optiken davon und/oder der Bildsensor aus dem Gehäusevolumen bewegt werden. Eine Winkeländerung der Strahlumlenkeinrichtung kann ermöglichen, dass eine Ausdehnung der Multiaperturabbildungsvorrichtung in Dickenrichtung groß ist und/oder dass die Strahlumlenkeinrichtung den Strahlengang ungehindert nach "vorn" und "hinten" umlenken kann. Deckgläser, etwa die Abdeckungen 36 können auch bzgl. der ausgeklappten bzw. ausgefahrenen Elemente fixiert sein. Die Deckgläser können beliebige, ebene oder nicht-ebene Flächen aufweisen.

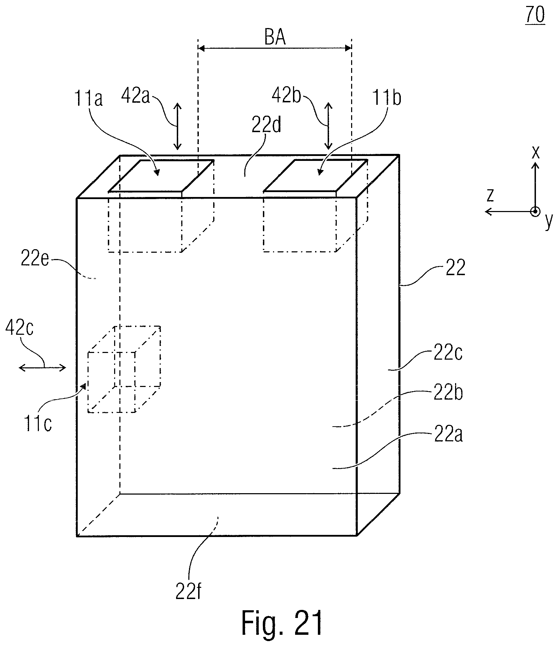

Fig. 21 zeigt eine schematische perspektivische Ansicht einer Vorrichtung 70 gemäß einem Ausführungsbeispiel, die drei Multiaperturabbildungsvorrichtungen 11a-c aufweist. Die Multiaperturabbildungsvorrichtungen 11a-c können translatorisch entlang einer jeweiligen translatorischen Bewegungsrichtung 42a-c bewegbar sein. Die Multiaperturabbildungsvorrichtungen 11a-c können in Nebenseiten 22c-f des Gehäuses 22 angeordnet sein. Das Gehäuse kann flach gebildet sein, das bedeutet, eine erste Ausdehnung des Gehäuses 22 entlang einer ersten Gehäuserichtung, bspw. eine x-Richtung, und eine zweite Ausdehnung des Gehäuses 22 entlang einer zweiten Gehäuserichtung, bspw. eine z-Richtung, kann mindestens eine dreifache Abmessung, mindestens eine fünffache oder mindestens eine siebenfache Abmessung verglichen mit einer dritten Ausdehnung des Gehäuses 22 entlang einer dritten Gehäuserichtung, etwa die y-Richtung, aufweisen. Eine Hauptseite 22a und/oder 22b des Gehäuses 22 kann die erste und die zweite Abmessung aufweisen und bspw. parallel zu einer x/z-Ebene im Raum angeordnet sein. Die Nebenseiten 22c-f können die Hauptseiten 22a und 22b verbinden bzw. dazwischen angeordnet sein.

Die Multiaperturabbildungsvorrichtungen 11a und 11b können in oder an derselben Seite 22d in dem Gehäuse 22 angeordnet sein und bspw. einen Basisabstand BA zueinander aufweisen, wie zum Beispiel zum Zweck der Stereoskopie. Mehr als zwei Module wären ebenfalls denkbar. So kann das Gesamtgesichtsfeld bspw. stereoskopisch oder höher durch eine Verwendung der Multiaperturabbildungsvorrichtung 11c und zumindest einer weiteren Multiaperturabbildungsvorrichtung 11a und/oder 11b erfasst werden. Die Multiaperturabbildungsvorrichtungen 11a, 11b und/oder 11c können einzeln bewegbar sein. Alternativ können zwei oder mehrere die Module auch gemeinsam als Gesamtsystem bewegbar sein.

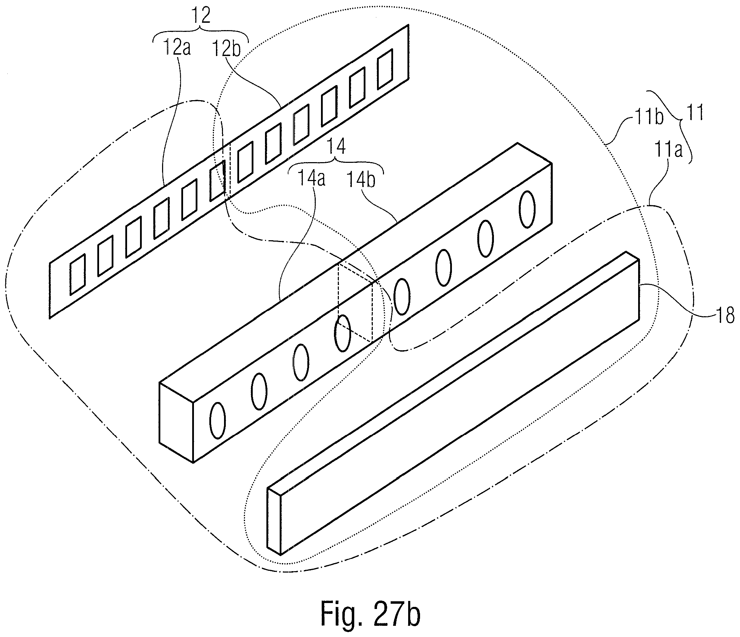

Wie es nachfolgend ausführlich beschrieben ist, kann die Vorrichtung 70 ausgebildet sein, um ein Gesamtgesichtsfeld zumindest stereoskopisch zu erfassen. Das Gesamtgesichtsfeld ist bspw. an einer der Hauptseite 22a oder 22b angeordnet, kann jedoch auch an einer Nebenseite 22c-f angeordnet sein. Beispielsweise können die Multiaperturabbildungsvorrichtungen 11a-c jeweils das Gesamtgesichtsfeld aufnehmen. Obwohl die Multiaperturabbildungsvorrichtungen 11a-c räumlich voneinander beabstandet angeordnet dargestellt sind, können die Multiaperturabbildungsvorrichtungen 11a, 11b und/oder 11c auch räumlich benachbart oder kombiniert angeordnet sein. Bspw. können die ggf. einzeilig gebildeten Arrays der Abbildungsvorrichtungen 11a und 11b nebeneinander oder parallel zu einander angeordnet sein, wie es bspw. im Zusammenhang mit Fig. 27b beschreiben ist. Die Arrays können Zeilen zueinander bilden, wobei jede Multiaperturabbildungsvorrichtung 11a und 11b ein einzeiliges Array aufweist. Die Abbildungsvorrichtungen 11a und 11b können eine gemeinsame Strahlumlenkeinrichtung und/oder einen gemeinsamen Träger von Optiken der optischen Kanäle und/oder ein gemeinsamen Bildsensor aufweisen.

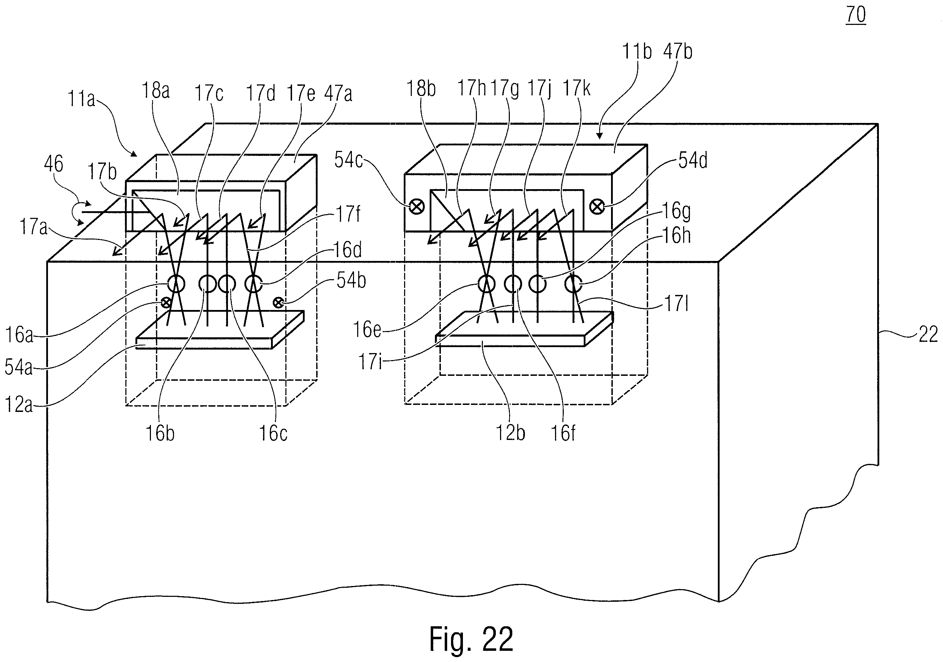

Fig. 22 zeigt eine vergrößerte perspektivische Ansicht eines Ausschnitts der Vorrichtung 70 und der Multiaperturabbildungsvorrichtungen 11a und 11b. Die Vorrichtung 70 weist den zweiten Betriebszustand auf. Bspw. ragt die Multiaperturabbildungsvorrichtung 11a und/oder 11b über die ursprüngliche Gehäuseseite heraus. Die Strahlumlenkeinrichtungen 18a und 18b sind basierend auf den translatorischen Bewegungsrichtungen 42a und 42b zumindest teilweise außerhalb des Gehäusevolumens bewegt. Alternativ kann in dem zweiten Betriebszustand auch lediglich ein Teil der Strahlumlenkeinrichtungen der Multiaperturabbildungsvorrichtungen 11a-b aus dem Gehäusevolumen des Gehäuses 22 bewegt sein.

Die Multiaperturabbildungsvorrichtungen 11a-b weisen bspw. jeweils vier optische Kanäle 16a-d und 16e-h auf. Die Strahlumlenkeinrichtungen 18a und 18b sind jeweils ausgebildet, um die Strahlengänge 17a-f bzw. 17g-l der optischen Kanäle 16a-d bzw. 16e-h umzulenken. Wie später ausführlich beschrieben ist, können andere Multiaperturabbildungsvorrichtungen eine voneinander verschiedene Anzahl von optischen Kanälen aufweisen. Die Multiaperturabbildungsvorrichtungen 11a-b können eine gleiche oder eine voneinander verschiedene Anzahl optischer Kanäle aufweisen.

Die Multiaperturabbildungsvorrichtungen 11a und 11b weisen jeweils Beleuchtungseinrichtungen 54a und 54b bzw. 54c und 54d auf. Die Beleuchtungseinrichtungen 54a-d sind ausgebildet, um das zu erfassende Gesamtgesichtsfeld zumindest teilweise zu beleuchten und können bspw. jeweils ausgebildet sein, um ein Zentrum des zu erfassenden Gesamtgesichtsfeldes (Objektbereich) zu beleuchten. Gemäß einem Ausführungsbeispiel kann zumindest eine der Beleuchtungseinrichtungen 54a oder 54b bzw. 54c oder 54d so angeordnet sein, dass sie entlang einer mittleren Blickrichtung der optischen Kanäle 16a-d bzw. 16e-h das Gesamtgesichtsfeld beleuchtet. Das Gesamtgesichtsfeld kann voneinander verschiedene Teilgesichtsfelder aufweisen, die jeweils von zumindest einem optischen Kanal 16a-d bzw. 16e-h erfasst werden. Eine mittlere Blickrichtung von optischen Kanälen 16a-d oder 16e-h kann bspw. ein geometrisches Mittel der Blickrichtungen oder ein Medianwert der Blickrichtungen sein.

Die Beleuchtungseinrichtungen 54a-b und 54c-d können als Blitzlicht der jeweiligen Multiaperturabbildungsvorrichtung 11a oder 11b betrieben werden und eine beliebige Lichtquelle umfassen. Vorteilhaft kann die Lichtquelle bspw. als lichtemittierende Diode (LED) ausgeführt sein, da diese einen geringen Bauraumbedarf und einen geringen Energiebedarf aufweisen. Gemäß weiteren Ausführungsbeispielen kann eine Multiaperturabbildungsvorrichtung keine, eine oder mehr als zwei Beleuchtungseinrichtungen 54a-d umfassen, wobei die Anzahl von Beleuchtungseinrichtungen 54a-d einer Multiaperturabbildungsvorrichtung von anderen Multiaperturabbildungsvorrichtungen einer Vorrichtung verschieden oder gleich sein kann. Zumindest eine der Beleuchtungseinrichtungen 54a-d kann ausgebildet ist, um mehrere Objektbereiche auszuleuchten. So kann bspw. Licht wahlweise in eine oder in mehrere Richtungen von der Beleuchtungseinrichtung ausgesendet werden. Die Beleuchtungseinrichtung kann entlang zumindest zweier Blickrichtungen der Multiaperturabbildungsvorrichtung Licht aussenden. Hierfür kann die Beleuchtungseinrichtung zumindest zwei Lichtquellen umfassen. Die Lichtquellen können Licht in gegenüberliegenden Seiten der Vorrichtung aussenden. Bspw. kann jeweils eine Lichtquelle auf einer Ober- und einer Unterseite, einer Vorder- und einer Rückseite und/oder einer linken und rechten Seite des Verfahrschlittens 47 angebracht sein, wobei jeweils nur die Lichtquelle(n) der Seite genutzt werden, die dem aufzunehmenden Objektbereich entsprechend der gewählten Orientierung und damit des Betriebszustands der Strahlumlenkeinrichtung 18 gegenüberliegt und in dessen Richtung Licht aussendet. Die oben erwähnten Vorder-, Rück-, Ober- und Unterseite sowie die Bezeichnungen links oder rechts sollen lediglich der Verdeutlichung dienen und nicht einschränkend verstanden werden, da sie mit jeder Orientierung im Raum wechselseitig vertauschbar sind. Das bedeutet bspw., dass Lichtquellen 54i auf Vorder- und Rückseite des Verfahrschlittens 47b angeordnet sein können und je nach Stellung der Strahlumlenkeinrichtung 18b entsprechende Lichtquellen genutzt werden können. Die anderen, gegenüberliegenden Lichtquellen können ungenutzt bleiben.

Beispielsweise sind die Beleuchtungseinrichtungen 54a und 54b zwischen der Strahlumlenkeinrichtung 18a und dem Bildsensor 12a der Multiaperturabbildungsvorrichtung 11a angeordnet. Die Strahlumlenkeinrichtung 18 kann ausgebildet sein, um eine von der Beleuchtungseinrichtung 54a und/oder 54b ausgesendete Beleuchtungsstrahlung, etwa ein Blitzlicht, umzulenken. Die Beleuchtungseinrichtungen 54a-b können in dem ersten Betriebszustand und in dem zweiten Betriebszustand der Vorrichtung 70 innerhalb des Gehäusevolumens angeordnet sein. Die Beleuchtungsstrahlung kann zumindest teilweise Teil der Strahlengänge 17a-f sein. Wie es bspw. für die Multiaperturabbildungsvorrichtung 11b dargestellt ist, kann eine Beleuchtungseinrichtung 54c und/oder 54d lateral neben der Strahlumlenkeinrichtung an dem Verfahrschlitten 47b angeordnet sein. Die Beleuchtungseinrichtungen 54c und 54d können mit der translatorischen Bewegung 42b in das Gehäuse 22 oder aus dem Gehäuse 22 bewegt werden. Obwohl die Beleuchtungseinrichtung im Zusammenhang mit der Vorrichtung 70 beschrieben sind, können auch andere hierin beschriebene Vorrichtungen oder Multiaperturabbildungsvorrichtungen eine Beleuchtungseinrichtung aufweisen.

Die Beleuchtungseinrichtungen 54c und 54d können mit dem Verfahrschlitten 47a mechanisch verbunden sein und damit im ersten Betriebszustand innerhalb des Volumens 24 angeordnet und mithin für einen Nutzer nicht sichtbar angeordnet sein. Die Beleuchtungseinrichtungen 54a und 54b können alternativ und/oder zusätzlich stationär in dem Gehäuse 22 angeordnet sein. Eine Bewegung des Verfahrschlittens 47b kann eine Bewegung der Beleuchtungseinrichtungen 54c und 54d bewirken.

Zusammen mit der Strahlumlenkeinrichtung 18a bzw. 18b können auch Optiken 16a-d oder 16e-h und ggf. der Bildsensor 12a bzw. 12b durch die Bewegung des Verfahrschlittens 47a bzw. 47b aus dem Gehäusevolumen bewegt werden.

In anderen Worten können auf den bewegten Teilen LEDs für die Realisierung einer zusätzlichen Beleuchtung (Blitzlicht) angebracht sein. Die LEDs können dabei so angebracht sein, dass sie in die mittlere Richtung der Kanäle strahlen bzw. können die Strahlumlenkeinrichtungen weitere Bereiche vorhalten, die zur Umlenkung der Strahlung genutzt wird.

Es wird an dieser Stelle darauf hingewiesen, dass die Anzahl von optischen Kanälen prinzipiell beliebig wählbar ist. Auch ist eine Anordnung derselben beliebig einstellbar, d. h., optische Kanäle mit zwei oder mehr Strahlengängen können benachbart zu gleichartigen und/oder benachbart zu optischen Kanälen angeordnet sein, die einen einzigen Strahlengang aufweisen. Eine vorteilhafte oder favorisierte Lösung sieht vier optische Kanäle vor, die insgesamt sechs Bildsensorbereiche aufweisen. Ein Schema für eine Anzahl der Strahlengänge je optischem Kanal kann gemäß "2/1/2/1" (von 16a nach 16d oder andersherum) implementiert sein. Alternativ oder zusätzlich können auch zwei benachbarte Kanäle zumindest zwei Strahlengänge aufweisen, was etwa zu einer Sortierung "2/2/1/1", "1/2/2/2" oder "2/2/2/2" führen kann.

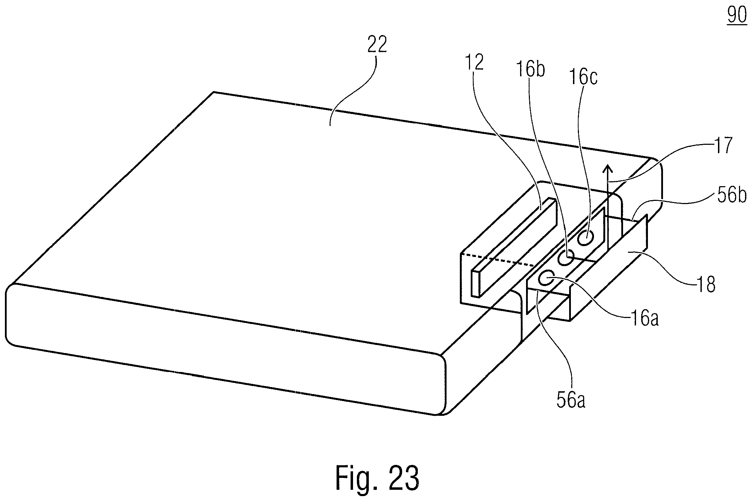

Fig. 23 zeigt eine schematische perspektivische Ansicht einer Vorrichtung 90 gemäß einem Ausführungsbeispiel, die den zweiten Betriebszustand aufweist. Die Strahlumlenkeinrichtung 18 kann mittels Befestigungselementen 56a und 56b mit der Multiaperturabbildungsvorrichtung verbunden sein. Die Befestigungselemente 56a und 56b können Teil eines Verfahrschlittens sein.

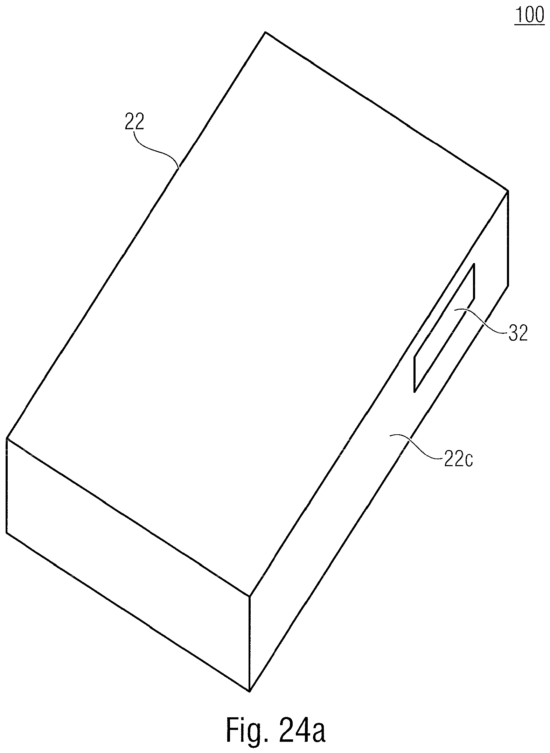

Fig. 24a zeigt eine schematische perspektivische Ansicht einer Vorrichtung 100 gemäß einem Ausführungsbeispiel in dem ersten Betriebszustand. Die Abdeckung 32 kann mit einer Gehäusehauptseite und/oder eine Gehäusenebenseite, bspw. die Gehäusenebenseite 22c eine Ebene bilden. Zwischen der Abdeckung 32 und der Gehäuseseite 22c kann kein Spalt oder lediglich eine kleiner Spalt, etwa kleiner oder gleich 1 mm, kleiner oder gleich 0,5 mm oder kleiner oder gleich 0,1 mm angeordnet sein, so dass ein Übergang zwischen der Abdeckung 32 und der Gehäuseseite 22c nicht oder kaum wahrnehmbar ist. Vereinfacht ausgedrückt kann die Abdeckung 32 nicht sichtbar sein.

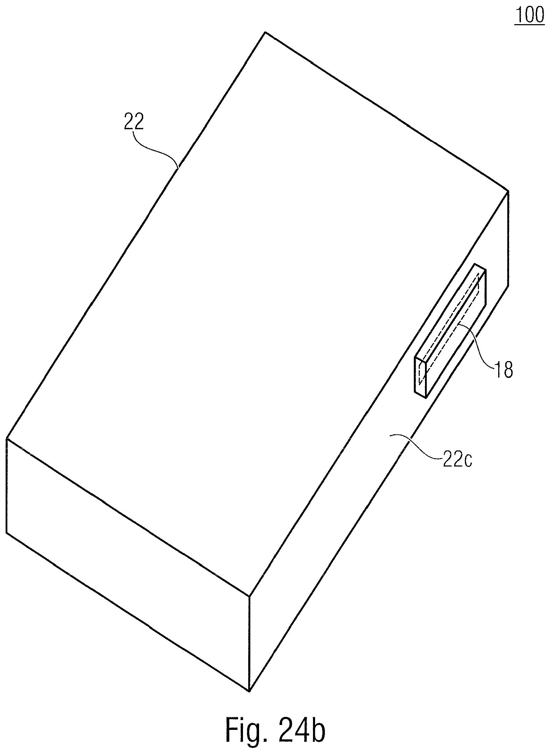

Fig. 24b zeigt eine schematische Ansicht der Vorrichtung 100 in dem zweiten Betriebszustand. Die Strahlumlenkeinrichtung 18 weist die zweite Position außerhalb des Gehäusevolumens auf. Von außen betrachtet kann die ausgefahrene Multiaperturabbildungsvorrichtung vom ruhendem Gehäuserahmen allseitig umschlossen sein und/oder ein Erscheinungsbild wie eine Taste aufweisen. Bspw. kann die Vorrichtung 100 ausgebildet sein, um bei einem mechanischen Druck auf die Abdeckung 32 gem. Fig. 24a eine mechanische Verriegelung zu lösen, so dass die Strahlumlenkeinrichtung aus dem Gehäuse 22 fahrbar ist, etwa basierend auf einer Federkraft. Der mechanische Druck kann bspw. durch einen Aktor und/oder durch einen Benutzer erzeugt werden, etwa durch einen Fingerdruck. Von der zweiten Position kann die Strahlumlenkeinrichtung mittels des Aktors oder mittels des mechanischen Drucks wieder in die erste Position bewegbar sein und dort eine Verriegelung betätigen. Der Aktor kann bspw. der Aktor 33 oder 33' sein. In anderen Worten kann die Bewegung auch manuell erfolgen, so dass der Nutzer die Teile bzw. das Gesamtsystem mit eigener Kraft ein- oder ausfährt bzw. ein- oder ausklappt. Die Bewegung kann insbesondere eine Kombination aus manueller Betätigung und Wirkung von Federkraft sein. So klappt bzw. schiebt der Nutzer manuell Teile bzw. das Gesamtsystem zum Ausschalten der Kamera ins Gehäuse des Gerätes, wie z.B. eines Smartphones ein, spannt dabei eine Feder und ein Verriegelungsmechanismus hält diese Stellung bei. Beim Einschalten der Kamera, z.B. mittels geeigneter Software am Smartphone, wird der schaltbare Verriegelungsmechanismus durch einen geeigneten steuerbaren Mechanismus, wie ein Elektrorelais, gelöst und die Federkraft der Feder bewirkt das Ausfahren bzw. Ausklappen von den Teilen der Kamera bzw. des Gesamtsystems. Des Weiteren kann die Abdeckung, die einen Teil des Gehäuses bildet, der ausfahrbare und/oder kippbare Teil und/oder ein weiterer hieran ansetzender Mechanismus so ausgeformt sein, dass ein (Finger-)Druck auf diese Abdeckung die Arretierung löst, die Teile oder auch das Gesamtsystem herausfahren bzw. -klappen und ggf. die Bildaufnahmesoftware auf dem Gerät startet. Die mitbewegte Abdeckung, die an den Seitenflächen einen Teil des Gehäuses bilden kann, kann vom ruhenden Gehäuse von außen sichtbar allseitig umschlossen sein oder die Seitenflächen über die gesamte Höhe (=Dickenrichtung des Gehäuse) unterbrechen.

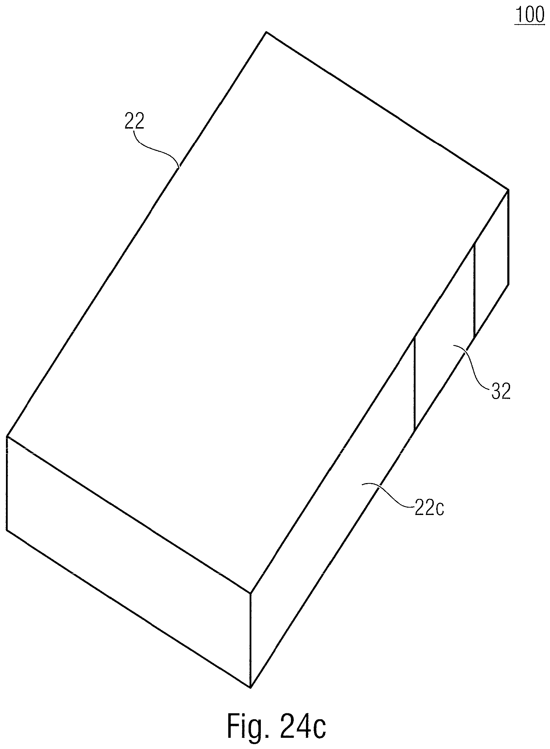

Fig. 24c zeigt eine schematische Darstellung einer Alternative zu Fig. 24a, bei der die Abdeckung 32 so gebildet ist, dass zwischen Hauptseiten des Gehäuses 22 in der Nebenseite 22c ein durchgehender Spalt gebildet ist. Dies ermöglicht, dass lediglich zwei anstelle von vier in Fig. 24a dargestellten Spalten in dem Gehäuse 22 wahrnehmbar sind. Die ausfahrbare oder ausklappbare Abdeckung 32 und/oder weitere Abdeckungen können als Teil(e) des Gehäuses 22 an einer oder mehreren Randseiten des flachen Gehäuses gebildet sein.

Nachfolgend wird Bezug genommen auf einige mögliche Ausführungsformen der Multiaperturabbildungsvorrichtung, wie sie gemäß Ausführungsbeispielen einsetzbar ist.

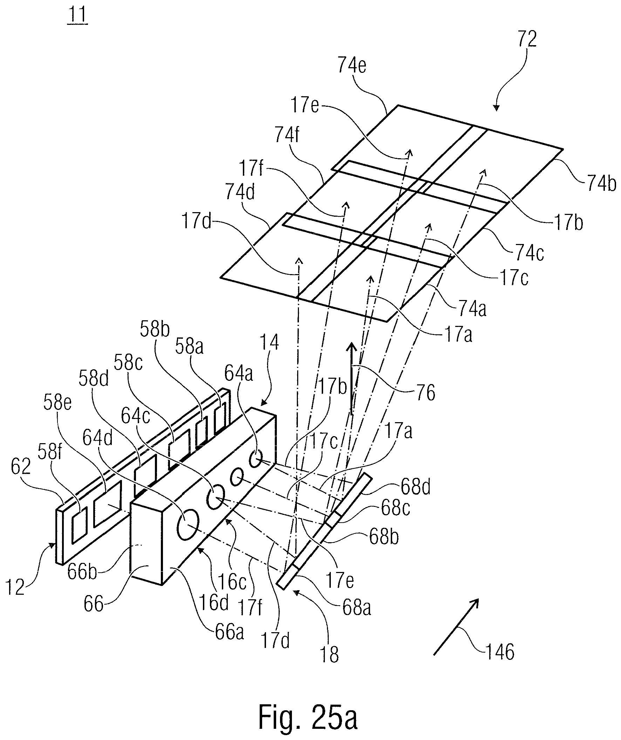

Fig. 25a-b zeigen eine Multiaperturabbildungsvorrichtung 11 gemäß einem Ausführungsbeispiel. Die Multiaperturabbildungsvorrichtung 11 von Fig. 25a-b umfasst ein einzeiliges Array 14 von nebeneinander angeordneten optischen Kanälen 16a-d. Der optische Kanal 16a beeinflusst den Strahlengang 17a zwischen dem Bildsensorbereich 58a und dem Teilbereich 74a. Der optische Kanal 16b beeinflusst die Strahlengänge 17b zwischen dem Bildsensorbereich 58b und dem Teilbereich 74b und den Strahlengang 17c zwischen dem Bildsensorbereich 58c und dem Teilbereich 74c. Der optische Kanal 16c beeinflusst den Strahlengang 17d dem Bildsensorbereich 58d und dem Teilbereich 74d. Der optische Kanal 16d beeinflusst die Strahlengänge 17e dem Bildsensorbereich 58e und dem Teilbereich 74e und den Strahlengang 17f dem Bildsensorbereich 58f und dem Teilbereich 74f.

Jeder optische Kanal 16a-d umfasst zur Beeinflussung der Strahlengänge eine Optik 64a-d und ggf. eine Teilbereichsoptik zur Abbildung eines jeweiligen Teilgesichtsfeldes 74a-f eines Gesamtgesichtsfeldes 72 der Vorrichtung 11, das dem Gesamtgesichtsfeld oder Gesamtobjektbereich 26 entsprechen kann, auf einen jeweils zugeordneten Bildsensorbereich 58a-d eines Bildsensors 12. Es wird an dieser Stelle draug hingewiesen, dass das Gesamtgesichtsfeld 72 die Teilbereiche 74a-f umfassen kann, wie sie im Zusammenhang mit der Fig. 3a beschrieben sind. Abweichende Nummerierungen a-f der Teilbereiche und/oder Strahlengänge sind beliebig mit einander vertauschbar und dienen lediglich der besseren Verständlichkeit. Die Teilbereiche 74b/74c und 74e/74f, die mittels Strahlengängen 17b/17c bzw. 17e/17f eines gemeinsamen optischen Kanals 16b bzw. 16d abgetastet werden, sind disjunkt zueinander.

Die Bildsensorbereiche 58a-f können beispielsweise jeweils aus einem Chip gebildet sein, der ein entsprechendes Pixelarray umfasst, wobei die Chips wie in den Fig. 25a-b angedeutet, auf einem gemeinsamen Substrat bzw. einer gemeinsamen Platine 62 montiert sein können. Alternativ wäre es natürlich auch möglich, dass die Bildsensorbereiche 58a-f jeweils aus einem Teil eines gemeinsamen Pixelarrays, das sich kontinuierlich über die Bildsensorbereiche 58a-f erstreckt, gebildet sind, wobei das gemeinsame Pixelarray beispielsweise auf einem einzelnen Chip gebildet ist. Beispielsweise werden dann lediglich die Pixelwerte des gemeinsamen Pixelarrays in den Bildsensorbereichen 58a-f ausgelesen. Verschiedene Mischungen dieser Alternativen sind natürlich ebenfalls möglich, wie z.B. das Vorhandensein eines Chips für zwei oder mehr Kanäle und eines weiteren Chips für wiederum andere Kanäle oder dergleichen. In dem Fall mehrerer Chips des Bildsensors 12 können diese beispielsweise auf einer oder mehreren Platinen montiert sein, wie z.B. alle gemeinsam oder gruppenweise oder dergleichen.

Bei dem Ausführungsbeispiel von Fig. 25a-b sind vier optischen Kanäle 16a-d einzeilig nebeneinander in Zeilenerstreckungsrichtung des Arrays 14 angeordnet, aber die Zahl vier ist lediglich exemplarisch und könnte auch jede andere Zahl größer Eins annehmen. Darüber hinaus kann das Array 14 auch weitere Zeilen aufweisen, die sich entlang der Zeilenerstreckungsrichtung erstrecken.

Optische Achsen bzw. die Strahlengänge 17a-d der optischen Kanäle 16a-d verlaufen zwischen den Bildsensorbereichen 58a-f und den Optiken 64a-d in einer Ebene. Optische Achsen bzw. die Strahlengänge 17a und 17d der optischen Kanäle 16a und 16c verlaufen zwischen den Bildsensorbereichen 58a und 58d und den Optiken 64a und 64c parallel zueinander. Dazu sind die Bildsensorbereiche 58a-f beispielsweise in einer gemeinsamen Ebene angeordnet und ebenso die optischen Zentren der Optiken 64a-d. Beide Ebenen sind parallel zueinander, d.h. parallel zu der gemeinsamen Ebene der Bildsensorbereiche 58a-f. Zudem fallen bei einer Projektion senkrecht auf die Ebene der Bildsensorbereiche 58a-f optische Zentren der Optiken 64a und 64d mit Zentren der Bildsensorbereiche 58a-f zusammen. In anderen Worten ausgedrückt sind in diesen parallelen Ebenen die Optiken 64a und 64c einerseits und die Bildsensorbereiche 58a und 58d mit gleichem Wiederholabstand in Zeilenerstreckungsrichtung angeordnet. Ein Schema der Anordnung der Anzahl der Strahlengänge pro optischem Kanal entspricht 1/2/1/2 entlang der Zeilenerstreckungsrichtung bzw. 2/1/2/1 in entgegengesetzter Richtung. Prinzipiell ist dieses Schema beliebig veränderbar.

Ein bildseitiger Abstand zwischen Bildsensorbereichen 58a und 58d und den zugehörigen Optiken 64a und 64c ist so eingestellt, dass die Abbildungen auf die Bildsensorbereiche 58a und 58d auf einen gewünschten Objektabstand eingestellt sind. Der Abstand liegt beispielsweise in einem Bereich gleich oder größer der Brennweite der Optiken 64a-d oder zum Beispiel in einem Bereich zwischen einem Einfachen und einem Zweifachen der Brennweite der Optiken 64a-d, beides inklusive. Der bildseitige Abstand entlang der optischen Achse 17a und 17d zwischen Bildsensorbereich 58a und 58d und Optik 64a und 64c kann auch einstellbar sein, wie z.B. manuell durch einen Benutzer oder automatisch über eine Autofokussteuerung.

Ohne zusätzliche Maßnahmen überlappten sich die Teilgesichtsfelder 74a und 74d der optischen Kanäle 16a und 16c im Wesentlichen vollständig aufgrund der Parallelität der Strahlengänge bzw. optischen Achsen 17a und 17d. Zur Abdeckung eines größeren Gesamtgesichtsfeldes 72 und damit sich die Teilgesichtsfelder 74a-f und insbesondere der Teilgesichtsfelder 74a und 74d lediglich räumlich teilweise überlappen, ist die Strahlumlenkeinrichtung 18 vorgesehen. Die Strahlumlenkeinrichtung 18 lenkt die Strahlengänge 17a-f bzw. optischen Achsen mit einer kanalindividuellen Abweichung in eine Gesamtgesichtsfeldrichtung 76 um. Die Gesamtgesichtsfeldrichtung 76 verläuft beispielsweise parallel zu einer Ebene, die senkrecht zur Zeilenerstreckungsrichtung des Arrays 14 und parallel zu dem Verlauf der optischen Achsen 17a-f vor bzw. ohne Strahlumlenkung ist. Beispielsweise geht die Gesamtgesichtsfeldrichtung 76 aus den optischen Achsen 17a-f durch Drehung um die Zeilenerstreckungsrichtung um einen Winkel hervor, der > 0° und < 180° ist und beispielsweise zwischen 80 und 100° liegt und beispielsweise 90° betragen kann. Das Gesamtgesichtsfeld der Vorrichtung 11, das der Gesamtabdeckung der Teilgesichtsfelder 74a-d entspricht, liegt also nicht in Richtung einer Verlängerung der Hintereinanderschaltung des Bildsensors 12 und des Arrays 14 in Richtung der optischen Achsen 17a-d, sondern durch die Strahlumlenkung befindet sich das Gesamtgesichtsfeld seitlich zu Bildsensor 12 und Array 14 in einer Richtung, in der die Bauhöhe der Vorrichtung 11 gemessen wird, d.h. die laterale Richtung senkrecht zur Zeilenerstreckungsrichtung. Zusätzlich aber lenkt die Strahlumlenkeinrichtung 18 jeden Strahlengang bzw. den Strahlengang jedes optischen Kanals 16a-d mit einer kanalindividuellen Abweichung von der soeben erwähnten zu der Richtung 76 führenden Umlenkung ab. Dazu umfasst die Strahlumlenkeinrichtung 18 für jeden Kanal 16a-d eine reflektierende Facette 68a-d. Diese sind gegenseitig leicht geneigt. Die gegenseitige Verkippung der Facetten 68a-d ist derart gewählt, dass bei Strahlumlenkung durch die Strahlumlenkeinrichtung 18 die Teilgesichtsfelder 74a-d mit einer leichten Divergenz versehen werden, derart, dass sich die Teilgesichtsfelder 74a-d lediglich teilweise überlappen. Dabei kann, wie es exemplarisch in Fig. 25a angedeutet ist, die individuelle Umlenkung auch derart gestaltet sein, dass die Teilgesichtsfelder 74a-d das Gesamtgesichtsfeld 72 zweidimensional abdecken, d.h. im Gesamtgesichtsfeld 72 zweidimensional verteilt angeordnet sind.

Es sei darauf hingewiesen, dass viele der bisher beschriebenen Details zur Vorrichtung 11 lediglich exemplarisch gewählt wurden. Das betraf beispielsweise schon die zuvor erwähnte Anzahl von optischen Kanälen. Die Strahlumlenkeinrichtung 18 kann ebenfalls anders gebildet sein als dies bisher beschrieben wurde. Beispielsweise wirkt die Strahlumlenkeinrichtung 18 nicht notwendigerweise reflektiv. Sie kann also auch anders ausgeführt sein als in Form eines Facettenspiegels, wie z.B. in Form transparenter Prismenkeile. In diesem Fall könnte beispielsweise die mittlere Strahlumlenkung 0° betragen, d.h. die Richtung 76 könnte beispielsweise parallel zu den Strahlengängen 17a-d noch vor oder ohne Strahlumlenkung sein bzw. in anderen Worten ausgedrückt könnte die Vorrichtung 11 trotz Strahlumlenkrichtung 18 weiterhin "geradeaus schauen". Die kanalindividuellen Umlenken durch die Strahlumlenkeinrichtung 18 würden wieder dazu führen, dass sich die Teilgesichtsfelder 74a-d lediglich geringfügig gegenseitig überlappen, wie z.B. paarweise mit einem Überlapp < 10 % bezogen auf die Raumwinkelbereiche der Teilgesichtsfelder 74a-d.

Auch könnten die Strahlengänge bzw. optischen Achsen von der beschrieben Parallelität abweichen und dennoch könnte die Parallelität der Strahlengänge der optischen Kanäle aber immer noch so ausgeprägt sein, dass sich die Teilgesichtsfelder, die durch die einzelnen Kanäle 16a-N abgedeckt bzw. auf die jeweiligen Bildsensorbereiche 58a-d abgebildet werden, ohne weitere Maßnahmen, wie nämlich die Strahlumlenkung, größtenteils überlappen würden, so dass, um ein größeres Gesamtgesichtsfeld durch die Multiaperturabbildungsvorrichtung 11 abzudecken, die Strahlumlenkrichtung 18 die Strahlengänge so mit einer zusätzlichen Divergenz versieht, dass sich die Teilgesichtsfelder von N optischen Kanälen 16a-N weniger gegenseitig überlappen. Die Strahlumlenkeinrichtung 18 sorgt beispielsweise dafür, dass das Gesamtgesichtsfeld einen Öffnungswinkel aufweist, der größer ist als 1,5-mal dem Öffnungswinkel der einzelnen Teilgesichtsfelder der optischen Kanäle 16a-N. Mit einer Art Vorab-Divergenz der Strahlengänge 17a-d wäre es auch möglich, dass sich beispielsweise nicht alle Facettenneigungen unterscheiden, sondern dass manche Gruppen von Kanälen beispielsweise die Facetten mit gleicher Neigung besitzen. Letztere können dann einstückig bzw. kontinuierlich ineinander übergehend gebildet werden, quasi als eine Facette, die dieser Gruppe von in Zeilenerstreckungsrichtung benachbarten Kanälen zugeordnet ist. Die Divergenz der optischen Achsen dieser Kanäle könnte dann von der Divergenz dieser optischen Achsen stammen, wie sie durch lateralen Versatz zwischen optischen Zentren der Optiken und Bildsensorbereichen der Kanäle oder Prismenstrukturen oder dezentrierten Linsenausschnitten erzielt wird. Die Vorab-Divergenz könnte sich beispielsweise auf eine Ebene beschränken. Die optischen Achsen könnten beispielsweise vor bzw. ohne Strahlumlenkung in einer gemeinsamen Ebene verlaufen, aber in dieser divergent, und die Facetten bewirken lediglich nur noch eine zusätzliche Divergenz in der anderen Transversalebene, d.h. sie sind alle parallel zur Zeilenerstreckungsrichtung und gegeneinander nur noch unterschiedlich zur vorerwähnten gemeinsamen Ebene der optischen Achsen geneigt, wobei hier wiederum mehrere Facetten gleichen Neigung besitzen können bzw. einer Gruppe von Kanälen gemeinsam zugeordnet sein könnten, deren optischen Achsen sich beispielsweise bereits in der vorerwähnten gemeinsamen Ebene der optischen Achsen paarweise vor bzw. ohne Strahlumlenkung unterscheiden.

Unter Weglassung der Strahlumlenkeinrichtung oder Ausbildung der Strahlumlenkeinrichtung als planer Spiegel oder dergleichen könnte auch die gesamte Divergenz durch den lateralen Versatz zwischen optischen Zentren der Optiken einerseits und Zentren der Bildsensorbereiche andererseits oder durch Prismenstrukturen oder dezentrierte Linsenausschnitte bewerkstelligt werden.

Die erwähnte möglicher Weise vorliegende Vorab-Divergenz kann beispielsweise erzielt werden, indem die optischen Zentren der Optiken auf einer Geraden entlang der Zeilenerstreckungsrichtung liegen, während die Zentren der Bildsensorbereiche von der Projektion der optischen Zentren entlang der Normalen der Ebene der Bildsensorbereiche auf Punkte auf einer Geraden in der Bildsensorebene abweichend angeordnet sind, wie z.B. an Punkten, die von den Punkten auf vorerwähnter Gerade in der Bildsensorebene kanalindividuell entlang der Zeilenerstreckungsrichtung und/oder entlang der Richtung senkrecht zur sowohl der Zeilenerstreckungsrichtung als auch der Bildsensornormalen abweichen. Alternativ kann Vorab-Divergenz erzielt werden, indem die Zentren der Bildsensoren auf einer Geraden entlang der Zeilenerstreckungsrichtung liegen, während die Zentren der Optiken von der Projektion der optischen Zentren der Bildsensoren entlang der Normalen der Ebene der optischen Zentren der Optiken auf Punkte auf einer Geraden in der Optikzentrenebene abweichend angeordnet sind, wie z.B. an Punkten, die von den Punkten auf vorerwähnter Gerade in der Optikzentrenebene kanalindividuell entlang der Zeilenerstreckungsrichtung und/oder entlang der Richtung senkrecht zur sowohl der Zeilenerstreckungsrichtung als auch der Normalen der Optikzentrenebene abweichen. Es wird bevorzugt, wenn vorerwähnte kanalindividuelle Abweichung von der jeweiligen Projektion lediglich in Zeilenerstreckungsrichtung verläuft, also die optischen Achsen sich lediglich in einer gemeinsamen Ebene befinden mit einer Vorabdivergenz versehen werden. Sowohl optische Zentren als auch Bildsensorbereichszentren liegen dann jeweils auf einer Geraden parallel zur Zeilenerstreckungsrichtung, aber mit unterschiedlichen Zwischenabständen. Ein lateraler Versatz zwischen Linsen und Bildsensoren in senkrechter lateraler Richtung zur Zeilenerstreckungsrichtung führte demgegenüber zu einer Vergrößerung der Bauhöhe. Ein rein In-Ebene-Versatz in Zeilenerstreckungsrichtung ändert die Bauhöhe nicht, aber es resultieren ggf. weniger Facetten und/oder die Facetten weisen nur eine Kippung in einer Winkelorientierung auf, was den Aufbau vereinfacht.

Ferner könnte es vorgesehen sein, dass manche optische Kanäle dem gleichen Teilgesichtsfeld zugeordnet sind, wie z.B. zum Zwecke der Superresolution bzw. zur Erhöhung der Auflösung, mit welcher das entsprechende Teilgesichtsfeld durch diese Kanäle abgetastet wird. Die optischen Kanäle innerhalb einer solchen Gruppe verliefen dann beispielsweise vor Strahlumlenkung parallel und würden durch eine Facette auf ein Teilgesichtsfeld umgelenkt werden. Vorteilhafterweise lägen Pixelbilder des Bildsensors eines Kanals einer Gruppe in Zwischenpositionen zwischen Bildern der Pixel des Bildsensors eines anderen Kanals dieser Gruppe.

Denkbar wäre beispielsweise auch ohne Superresolutionszwecken, sondern lediglich zu Stereoskopiezwecken eine Ausführung, bei denen eine Gruppe von unmittelbar benachbarten Kanälen in Zeilenerstreckungsrichtung mit ihren Teilgesichtsfeldern das Gesamtgesichtsfeld vollständig abdecken, und dass eine weitere Gruppe einander unmittelbar benachbarter Kanäle das Gesamtgesichtsfeld ihrerseits vollständig abdecken, und die Strahlengänge beider Kanalgruppen das Substrat bzw. einen Träger 66 durchlaufen. Das bedeutet, dass die Multiaperturabbildungsvorrichtung eine erste Vielzahl von optischen Kanälen aufweisen kann, die ausgebildet sind, um ein Gesamtgesichtsfeld, ggf. komplett, zu erfassen. Eine zweite Vielzahl von optischen Kanälen der Multiaperturabbildungsvorrichtung kann ausgebildet sein, um das Gesamtgesichtsfeld ebenfalls und ggf. komplett zu erfassen. Das Gesamtgesichtsfeld kann so zumindest stereoskopisch durch die erste Vielzahl von optischen Kanälen und durch die zweite Vielzahl von optischen Kanälen erfasst werden. Die erste Vielzahl von optischen Kanälen und die zweite Vielzahl von optischen Kanälen können auf einen gemeinsamen Bildsensor treffen, ein gemeinsames Array (Arrayoptik) nutzen und/oder von einer gemeinsamen Strahlumlenkeinrichtung umgelenkt werden. Im Gegensatz zu einem Array aus Einzelkameras wird eine zusammenhängende Array-Kamera gebildet, die gemeinsam als eine Vorrichtung steuerbar ist, bspw. in Bezug auf einen Fokus und/oder eine Bildstabilisierung, was vorteilhaft ist, da alle Kanäle gleichzeitig und unter Nutzung derselben Aktoren beeinflusst werden. Zusätzlich ergeben sich aus dem monolithischen Aufbau Vorteile hinsichtlich der mechanischen Stabilität der Gesamtanordnung insbesondere bei Temperaturänderungen. Dies ist vorteilhaft für Zusammensetzung des Gesamtbildes aus den Teilbilder der einzelnen Kanäle sowie bei der Gewinnung dreidimensionaler Objektdaten bei Nutzung in Stereo-, Tripple-, Quattro- usw. Systemen bei mehrfacher Abtastung des Gesamtgesichtsfeldes durch unterschiedliche Vielzahlen von Kanälen 16.

Die nachfolgende Erörterung beschäftigt sich mit den Optiken 64a-d, deren Linsenebenen ebenfalls parallel zu der gemeinsamen Ebene der Bildsensorbereiche 58a-f liegt. Wie es nachfolgend beschrieben wird, sind Linsen der Optiken 64a-d der optischen Kanäle 16a-d an einer Hauptseite 66a des Substrats 66 über einen oder mehrere Linsenhalter befestigt und über das Substrat 66 mechanisch miteinander verbunden. Insbesondere verlaufen die Strahlengänge 17a-f der Mehrzahl von optischen Kanälen 16a-d durch das Substrat 66. Das Substrat 66 ist also zumindest bereichsweise aus transparentem Material gebildet und ist plattenförmig oder besitzt beispielsweise die Form eines Parallelepipeds oder eines anderen konvexen Körpers mit einer planaren Hauptseite 66a und einer gegenüberliegenden, dazu ebenfalls planaren Hauptseite 66b. Die Hauptseiten sind vorzugsweise senkrecht zu den Strahlengängen 17a-f positioniert. Wie nachfolgend beschrieben, kann es gemäß Ausführungsbeispielen Abweichungen von der reinen Parallelepipedform geben, die auf eine mit dem Substrat einstückige Ausformung von Linsen der Optiken zurückzuführen sind.

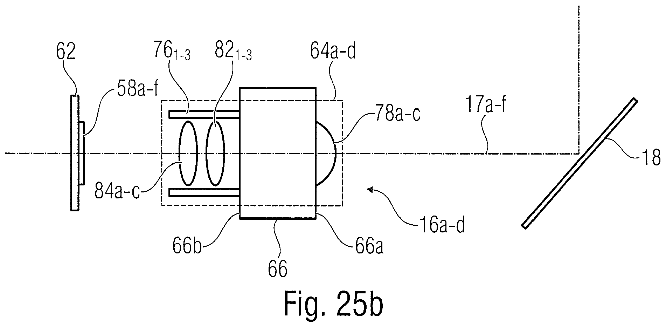

Bei dem Ausführungsbeispiel der Fig. 25a und Fig. 25b handelt es sich bei dem flachen Trägersubstrat 66 beispielsweise um ein Substrat aus Glas oder Polymer. Beispielsweise kann das Trägersubstrat 66 eine Glasplatte umfassen. Das Material des Substrats 66 kann nach Gesichtspunkten hoher optischer Transparenz und niedrigem Temperaturkoeffizienten oder weiteren mechanischen Eigenschaften wie Härte, Elastizitäts- oder Torsionsmodul ausgewählt sein.

Das Substrat 66 kann als einfaches planes Teil des Strahlenganges ausgebildet sein, ohne dass irgendwelche zusätzlichen Linsen direkt hierauf untergebracht sind. Zusätzlich können Blenden, wie z.B. Apertur- oder Falschlichtblenden, oder/und Filterschichten, wie z.B. IR-Blockfilter auf den Substratoberflächen angebracht sein oder aus mehreren Lagen verschiedener Substrate bestehen, auf deren Oberflächen Blenden und Filterschichten angebracht sein können, die sich wiederum kanalweise z.B. in ihrem spektralen Absorption unterscheiden können.

Das Substrat 66 kann aus Material bestehen, dass in unterschiedlichen Bereichen des elektromagnetischen Spektrums, welches vom Bildsensor detektiert werden kann, unterschiedliche Eigenschaften aufweist, insbesondere eine nicht-konstante Absorption.

Bei dem Ausführungsbeispiel von Fig. 25a und Fig. 25b umfasst jede Optik 64a-d drei Linsen. Die Anzahl der Linsen ist allerdings frei wählbar. Die Anzahl könnte 1, 2 oder jede andere beliebige Anzahl sein. Die Linsen können konvex, lediglich eine optisch abbildende Funktionsfläche wie z.B. eine sphärische, eine asphärische, eine Freiformfläche aufweisen, oder zwei, wie z.B. zwei einander gegenüberliegende, um beispielsweise eine konvexe oder eine konkave Linsenform zu ergeben. Auch mehrere optisch wirksame Linsenflächen sind möglich, wie z.B. durch Aufbau einer Linse aus mehreren Materialien.

Eine erste Linse 78a-d jedes optischen Kanals 16a-d oder Optik ist bei dem Ausführungsbeispiel von Fig. 25a-b an der Hauptseite 66a gebildet. Die Linsen 78a-d sind beispielsweise durch Abformung auf der Hauptseite 66a des Substrats 66 hergestellt worden und bestehen beispielsweise aus Polymer, wie z.B. aus UV-aushärtbarem Polymer. Die Abformung geschieht beispielsweise durch ein Abformwerkzeug und die Aushärtung kann beispielsweise über Temperatur und/oder über UV-Bestrahlung geschehen.

Bei dem Ausführungsbeispiel von Fig. 25a und Fig. 25b besitzt jede Optik 64a-d noch eine weitere zweite und dritte Linse 82a-d bzw. 84a-d. Diese Linsen sind exemplarisch über axial verlaufende röhrenförmige Linsenhalter 86a-dc gegenseitig im Inneren des jeweiligen Linsenhalters fixiert und über Letzteren an der Hauptseite 66b fixiert, wie z.B. mittels Klebens oder einer anderen Fügetechnik. Öffnungen 88a-d der Linsenhalter 86a-d sind beispielsweise mit kreisförmigem Querschnitt versehen, in dessen zylindrischen Innenseite die Linsen 82a-d bzw. 84a-d befestigt sind. Für jede Optik 64a-d liegen also die Linsen koaxial auf der jeweiligen optischen Achse der Strahlengänge 17a-f. Die Linsenhalter 86a-d können aber auch einen sich über ihre Länge bzw. entlang der jeweiligen optischen Achsen ändernden Querschnitt aufweisen. Hierbei kann der Querschnitt mit geringer werdendem Abstand zum Bildsensor 12 zunehmend rechteckigen oder quadratischen Charakter aufweisen. Die äußere Form der Linsenhalter kann sich somit auch von der Form der Öffnungen unterscheiden. Das Material der Linsenhalter kann lichtabsorbierend sein.

Die Befestigung über die vorerwähnten Linsenhalter geschieht beispielsweise so, dass Linsenscheitel der durch dieselben gehalterten Linsen von dem Substrat 66 beabstandet sind.

Wie es im Vorhergehenden bereits erwähnt wurde, ist es möglich, dass das Substrat 66 beidseitig planar ist und mithin keine Brechkraftwirkung aufweist. Allerdings wäre es auch möglich, dass das Substrat 66 mechanische Strukturen aufweist, wie z.B. Vertiefungen oder Vorsprünge, die eine leichte, form- und/oder kraftschlüssige Ausrichtung anschließender Bauteile ermöglichen, wie z.B. das Anschließen von Einzellinsen oder Gehäuseteilen. Bei dem Ausführungsbeispiel von Fig. 25a und Fig. 25b beispielsweise könnte das Substrat 66 an der Hauptseite 66b befestigungserleichternde oder die Ausrichtung erleichternde Strukturen an den Positionen aufweisen, an welchen das jeweilige Ende der Röhre des Linsenhalters 86a-d der jeweiligen Optik 64a-d befestigt ist. Bei diesen Strukturen kann es sich beispielsweise um eine kreisförmige Vertiefung handeln oder einer Vertiefung mit einer anderen Form, die der Form einer dem Substrat zugewandten Seite des jeweiligen Linsenhalters entspricht, in die die Seite der jeweiligen Linsenhalters 84a-d Eingriff nehmen kann. Es sei noch einmal hervorgehoben, dass auch andere Öffnungsquerschnitte und damit korrespondierend eventuell andere Linsenaperturen als kreisförmige möglich sind.

Das Ausführungsbeispiel von Fig. 25a und Fig. 25b löst sich also von einem klassischen Aufbau von Kameramodulen, die Einzellinsen aufweisen und zur Halterung der Einzellinsen einen diese komplett umschließenden, nicht transparenten Gehäuseträger aufweisen. Vielmehr verwendet obiges Ausführungsbeispiel einen transparenten Körper 66 als Substratträger. Dieser erstreckt sich über mehrere benachbarte optische Kanäle 16a-d, um von deren Abbildungsstrahlengang durchdrungen zu werden. Er stört die Abbildung nicht, aber er erhöht auch nicht die Bauhöhe.

Es wird allerdings auf verschiedene Möglichkeiten hingewiesen, wie das Ausführungsbeispiel von Fig. 25a und Fig. 25b variiert werden könnte. Beispielsweise erstreckt sich das Substrat 66 nicht notwendigerweise über alle Kanäle 16a-d der Multiaperturabbildungsvorrichtung 11. Anders als im Vorhergehenden beschrieben, wäre es möglich, dass jede Optik 64a-d über Linsenträger gehalterte Linsen auf beiden Seiten 66a und 66b aufweist.

Fig. 26 zeigt exemplarisch, dass die Multiaperturabbildungsvorrichtung 11 von Fig. 25a und Fig. 25b um eines oder mehrere der nachfolgend beschriebenen zusätzlichen Einrichtungen ergänzt werden könnte.

Beispielsweise zeigt Fig. 26, dass eine Einrichtung 92 vorhanden sein könnte, um die Strahlumlenkeinrichtung 18 um die Rotationsachse 44 zu drehen, die parallel zu der Zeilenerstreckungsrichtung des Arrays 14 ist. Die Rotationsachse 44 liegt beispielsweise in der Ebene der Strahlengänge 17a-f oder davon weniger als ein Viertel eines Durchmessers der Optiken 64a-d entfernt. Alternativ wäre es natürlich auch möglich, dass die Rotationsachse weiter entfernt liegt, wie z.B. weniger als ein Optikdurchmesser oder weniger als vier Optikdurchmesser. Die Einrichtung 92 kann beispielsweise vorgesehen sein, um die Strahlumlenkeinrichtung 18 mit kurzer Ansprechzeit in einem lediglich kleinen Winkelbereich, wie z.B. innerhalb einer Spanne von weniger als 1° oder weniger 10° oder weniger als 20° zu drehen, um Verwacklungen der Multiaperturabbildungsvorrichtung 11 durch beispielsweise einen Benutzer während einer Aufnahme auszugleichen. Die Einrichtung 92 würde in diesem Fall beispielsweise von einer Bildstabilisierungssteuerung angesteuert werden. Gegenüber der Darstellung in Fig. 25a und Fig. 25b weist die Multiaperturabbildungsvorrichtung 11 ein anderes Schema der Sortierung der Strahlengänge auf, etwa 2/1/1/2.

Alternativ oder zusätzlich könnte die Einrichtung 92 ausgebildet sein, um mit größeren Winkelverstellungen das Gesamtgesichtsfeld, das durch die Gesamtabdeckung der Teilgesichtsfelder 74a-f (Fig. 25a) definiert wird, in seiner Richtung zu verändern. Dabei wäre es ferner möglich, dass durch Rotation der Strahlumlenkeinrichtung 18 auch Ablenkungen erzielt werden, bei denen das Gesamtgesichtsfeld in der entgegengesetzten Richtung relativ zu der Vorrichtung 11 angeordnet ist, indem beispielsweise die Strahlumlenkeinrichtung 18 als ein beidseitig reflektives Spiegelarray ausgebildet ist.

Wiederum alternativ oder zusätzlich kann die Vorrichtung 11 eine Einrichtung 94 aufweisen, um die Optiken 64a-d vermittels des Substrats 66 bzw. das Substrat 66 selbst und damit die Optiken 64a-d translatorisch entlang der Zeilenerstreckungsrichtung zu bewegen. Die Einrichtung 94 könnte beispielsweise ebenfalls durch die vorerwähnte Bildstabilisierungssteuerung angesteuert werden, um durch eine Bewegung 96 entlang der Zeilenerstreckungsrichtung eine Bildstabilisierung quer zu der Bildstabilisierung zu erzielen, die durch die Rotation der Spiegelumlenkvorrichtung 18 verwirklicht wird.

Weiterhin kann zusätzlich oder alternativ die Vorrichtung 11 eine Einrichtung 98 zum Verändern des bildseitigen Abstands zwischen Bildsensor 12 und Optiken 64a-d bzw. zwischen Bildsensor 12 und dem Träger 66 aufweisen, um eine Schärfentiefeneinstellung zu erzielen. Die Einrichtung 98 kann durch eine manuelle Benutzersteuerung oder durch eine Autofokussteuerung bzw. Fokussiereinrichtung der Vorrichtung 11 gesteuert werden.

Die Einrichtung 94 dient also als Aufhängung des Substrats 66 und ist vorzugsweise, wie in Fig. 26 angedeutet seitlich neben dem Substrat 66 entlang der Zeilenerstreckungsrichtung angeordnet, um die Bauhöhe nicht zu erhöhen. Auch für die Einrichtungen 92 und 98 gilt, dass selbige vorzugsweise in der Ebene der optischen Strahlengänge angeordnet sind, um die Bauhöhe nicht zu erhöhen. Die Einrichtung 98 kann auch mit der Strahlumlenkeinrichtung 18 verbunden sein und diese simultan oder nahezu simultan bewegen, so dass bei einer Veränderung des bildseitigen Abstands zwischen Bildsensor 12 und Optiken 64a-d ein Abstand zwischen den Optiken 64a-d und der der Strahlumlenkeinrichtung 18 im Wesentlichen konstant oder konstant bleibt. Die Einrichtungen 92, 94 und/oder 98 können auf Basis pneumatischer, hydraulischer, piezoelektrischer Aktoren, DC-Motoren, Schrittmotoren, thermischer Aktoren, elektrostatischer Aktoren, elektrostriktiver und/oder magnetostriktiver Aktoren oder Antriebe implementiert sein.

Es sei darauf hingewiesen, dass die Optiken 64a-d nicht nur untereinander, wie z.B. über das schon erwähnte transparente Substrat, sondern auch relativ zu der Strahlumlenkeinrichtung in konstanter relativer Lage gehaltert sein können, wie z.B. über einen geeigneten Rahmen, der vorzugsweise die Bauhöhe nicht vergrößert und deshalb vorzugsweise in der Ebene der Komponenten 12, 14 und 18 bzw. in der Ebene der Strahlengänge verläuft. Die Konstanz der relativen Lage könnte sich auf den Abstand zwischen Optiken und Strahlumlenkeinrichtung entlang der optischen Achsen beschränken, so dass die Einrichtung 98 beispielsweise die Optiken 64a-d zusammen mit der Strahlumlenkeinrichtung translatorisch entlang der optischen Achsen bewegt. Der Optiken-zu-Strahlumlenkeinrichtung-Abstand könnte auf einen minimalen Abstand eingestellt werden, so dass der Strahlengang der Kanäle nicht durch die Segmente der Strahlumlenkeinrichtung 18 lateral eingeschränkt wird, was die Bauhöhe verringert, da andernfalls die Segmente 68a-d hinsichtlich der lateralen Ausdehnung für den größten Optiken-zu-Strahlumlenkeinrichtung-Abstand dimensioniert sein müssten, um den Strahlengang nicht einzuschneiden. Zusätzlich könnte die Konstanz der relativen Lage vorerwähnter Rahmen die Optiken und die Strahlumlenkeinrichtung entlang der x-Achse starr zueinander haltern, sodass die Einrichtung 94 die Optiken 64a-d zusammen mit der Strahlumlenkeinrichtung translatorisch entlang der Zeilenerstreckungsrichtung bewegen würde. Die gemeinsamen Strahlengänge 17a und 17b oder 17e und 17f eines optischen Kanals können durch eine gemeinsame Facette der Strahlumlenkeinrichtung 18 umgelenkt werden. Alternativ kann auch jeder Strahlengang einer individuellen Facette zugeordnet sein.

Die oben beschriebene Strahlumlenkeinrichtung 18 zum Umlenken des Strahlengangs der optischen Kanäle ermöglicht zusammen mit dem Aktor 92 zur Erzeugung der Rotationsbewegung der Strahlumlenkeinrichtung 18 einer optischen Bildstabilisierungssteuerung der Multiaperturabbildungsvorrichtung 11 eine Bild- bzw. Gesamtblickfeldstabilisierung in zwei Dimensionen, nämlich durch die translatorische Bewegung des Substrats 66 eine Bildstabilisierung entlang einer ersten Bildachse, die im Wesentlichen parallel zur Zeilenerstreckungsrichtung verläuft, und durch die Erzeugung der Rotationsbewegung der Strahlumlenkeinrichtung 18 eine Bildstabilisierung entlang einer zweiten Bildachse, die im Wesentlichen parallel zu den optischen Achsen vor bzw. ohne Strahlumlenkung verläuft, oder - betrachtet man die umgelenkten optischen Achsen - senkrecht zu den optischen Achsen und der Zeilenerstreckungsrichtung. Zusätzlich kann die beschriebene Anordnung eine translatorische Bewegung der im angesprochenen Rahmen fixierten Strahlumlenkeinrichtung und des Arrays 14 senkrecht zur Zeilenerstreckungsrichtung bewirken, wie z.B. durch den beschriebenen Aktor 98, die für die Realisierung einer Fokuseinstellung und damit einer Autofokusfunktion genutzt werden kann.

Alternativ oder zusätzlich zu der Rotationsbewegung zum Erhalten einer Bildstabilisierung entlang der zweiten Bildachse auch eine translatorische Relativbewegung zwischen dem Bildsensor 12 und dem Array 14 implementierbar ist. Diese Relativbewegung kann bspw. von der Einrichtung 94 und/oder der Einrichtung 98 bereitgestellt werden.

Es sei zu den obigen Ausführungen der Vollständigkeit halber noch darauf hingewiesen, dass die Vorrichtung bei einer Aufnahme über die Bildsensorbereiche ein Bild einer Szene pro Kanal aufnimmt, die durch die Kanäle auf die Bildsensorbereiche abgebildet worden sind, und dass die Vorrichtung optional über einen Prozessor verfügen kann, der die Bilder zu einem Gesamtbild zusammenfügt oder verschmelzt, das der Szene in dem Gesamtgesichtsfeld entspricht, und/oder zusätzliche Daten bereitstellt, wie zum Beispiel 3D-Bilddaten und Tiefeninformationen der Objektszene zur Erstellung von Tiefenkarten und zur softwaretechnischen Realisierung wie z.B. von Refocusing (Festlegung der Bildschärfebereiche nach der eigentlichen Aufnahme), All-in-Focus-Bildern, Virtual Green Screen (Trennung von Vorder- und Hintergrund) u.a.. Letztere Aufgaben könnten ebenfalls von jenem Prozessor erledigt werden oder extern. Der Prozessor könnte allerdings auch eine zu der Multiaperturabbildungsvorrichtung externe Komponente darstellen.

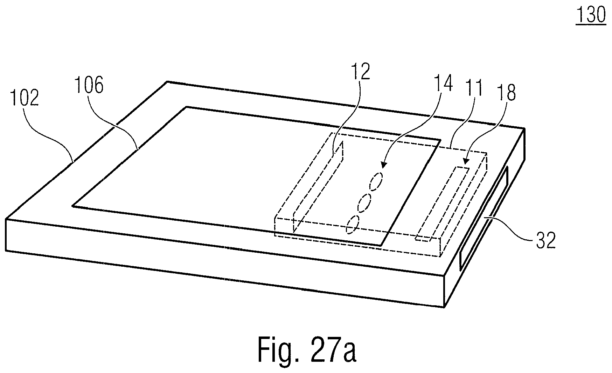

Fig. 27a illustriert, dass Vorrichtungen 11 der vorher beschrieben Alternativen beispielsweise in einem flachen Gehäuse eines tragbaren Geräts 130 eingebaut sein können, wie zum Beispiel eines Mobiltelefons, ein Smartphone oder Mediaplayers oder dergleichen, wobei dann beispielsweise die Ebenen des Bildsensors 12 bzw. der Bildsensorbereiche und die Linsenebenen der Optiken der optischen Kanäle 16 senkrecht zu der flachen Erstreckungsrichtung des flachen Gehäuses bzw. parallel zur Dickenrichtung ausgerichtet sind. Auf diese Weise würde beispielsweise die Strahlumlenkeinrichtung 18 dafür sorgen, dass das Gesamtgesichtsfeld der Multiaperturabbildungsvorrichtung 11 vor einer Vorderseite 102 des flachen Gehäuses liegt, das beispielsweise auch einen Bildschirm aufweist. Alternativ wäre auch eine Umlenkung derart möglich, dass sich das Gesichtsfeld vor einer Rückseite des flachen Gehäuses, die der Vorderseite 102 gegenüberliegt, befindet. Das Gehäuse 22 des Geräts 130 bzw. das Gerät selbst kann flach sein, da durch die illustrierte Lage der Vorrichtung 11 in dem Gehäuse, die Bauhöhe der Vorrichtung 11, die zur Dicke des Gehäuses parallel ist, gering gehalten werden kann. Eine Umschaltbarkeit könnte ebenfalls vorgesehen werden, indem ein Fenster auf der der Seite 102 gegenüberliegenden Seite vorgesehen wird und beispielsweise die Strahlumlenkeinrichtung zwischen zwei Stellungen bewegt wird, indem letztere beispielsweise als vor- und rückseitig spiegelnder Spiegel ausgeführt wird und von der einen in die andere Stellung gedreht wird, oder als Facettenspiegel mit einem Satz von Facetten für die eine Stellung und einem anderen Satz von Facetten für die andere Stellung, wobei die Facettensätze in Zeilenerstreckungsrichtung nebeneinander liegen und durch translatorische Hin- und Her-Bewegung der Strahlumlenkeinrichtung entlang der Zeilenerstreckungsrichtung zwischen den Stellungen umgeschaltet wird. Ein Verbau der Vorrichtung 11 in ein anderes ggf. nicht tragbares Gerät, wie z.B. eine Auto, wäre natürlich ebenfalls möglich.

Mehrere Module 11, deren Teilgesichtsfelder ihrer Kanäle das gleiche Gesichtsfeld vollständig und optional sogar in kongruenter Weise abdecken, können mit einem Basisabstand BA (vgl. Fig. 21) zueinander entlang einer für beide Module gleichen Zeilenerstreckungsrichtung in dem Gerät 130 verbaut sein, wie zum Beispiel zum Zweck der Stereoskopie. Mehr als zwei Module wären ebenfalls denkbar. Die Zeilenerstreckungsrichtungen der Module 11 könnten auch nicht kollinear, sondern lediglich parallel zueinander sein. Es sei jedoch noch einmal erwähnt, dass, wie im vorgehenden erwähnt, auch eine Vorrichtung 11 bzw. ein Modul mit Kanälen so ausgestattet sein könnte, dass dieselben gruppenweise dasselbe Gesamtgesichtsfeld jeweils vollständig abdecken. Die Module können in einer/mehreren Zeile(n)/Reihe(n) oder an beliebiger Stelle der Vorrichtung angeordnet sein. Bei einer Anordnung mehrerer Module können diese gleich oder verschieden gebildet sein. Bspw. kann ein erstes Modul ausgebildet sein, um eine stereoskopische Erfassung des Gesamtgesichtsfeldes auszuführen. Ein zweites Modul kann ausgebildet sein, um eine einfache Erfassung, eine stereoskopische Erfassung oder eine Erfassung höherer Ordnung auszuführen.

Es sei noch erwähnt, das die Strahlumlenkeinrichtung bei alternativen Ausführungsbeispielen verglichen zu den oben beschrieben Ausführungbespielen auch fehlen könnte. Wenn eine lediglich teilweise gegenseitige Überlappung der Teilgesichtsfelder gewünscht ist, dann könnte dies zum Beispiel über gegenseitige laterale Versätze zwischen dem Zentrum des Bildsensorbereichs und des optischen Zentrums der Optik des entsprechenden Kanals erzielt werden. Die Aktoren gemäß Fig. 26 könnten natürlich dennoch Anwendung finden, wobei im Ersatz für die Einrichtung 92 beispielsweise der Aktor 94 zusätzlich zu einer translatorischen Bewegung der Optiken bzw. des Trägers 66 in der Lage ist.

Noch einmal in anderen Worten ausgeführt zeigen obige Ausführungsbeispiele also eine Multiaperturabbildungsvorrichtung mit einzeiligem Array von nebeneinander angeordneten optischen Kanälen, bei der sich irgendwo im Strahlengang der Multiaperturabbildungsvorrichtung ein sich über die Kanäle erstreckendes Substrat aus beispielsweise Glas oder Polymer zur Verbesserung der Stabilität erstreckt. Das Substrat kann zusätzlich bereits auf Vorder- und/oder Rückseite Linsen beinhalten. Die Linsen können aus dem Material des Substrats bestehen (wie z.B. durch Heizprägen entstanden) oder darauf abgeformt sein. Vor und hinter dem Substrat können sich weitere Linsen befinden, die sich nicht auf Substraten befinden und einzeln montiert werden. Es können mehrere Substrate in einem Aufbau, sowohl entlang als auch senkrecht zur Zeilenerstreckungsrichtung vorhanden sein. Es wäre es dabei auch möglich, mehrere Substrate mit Linsen entlang der Strahlengänge hintereinanderzuschalten, d.h. sie anderweitig hintereinander in einer vorbestimmten Lagebeziehung zueinander zu halten, wie z.B. über einen Rahmen, ohne dass ein Aneinanderfügen notwendig wäre. Auf diese Weise stünden für das Vorsehen bzw. Befestigen von Linsen zweimal so viele Hauptseiten zur Verfügung, wie Trägersubstrate verwendet werden, etwa ein Substrat 66, das gemäß obiger Beispiele mit Linsen bestückt sein kann, hier exemplarisch gemäß Fig. 25b, und ein Substrat, das ebenfalls gemäß obiger Beispiele mit Linsen bestückt sein kann, also unter anderem mit Linsen, die über Linsenhalter an den Hauptseiten 66a und/oder 66b befestigt sind, hier aber exemplarisch als einstückig durch beispielsweise Spritzguss oder dergleichen so hergestellt dargestellt ist, dass Linsen an den beiden Seiten 66a und 66b geformt sind, wie wohl natürlich auch abgeformte Linsen anderen Materials als das Material des parallelepipedförmigen Substrats 66 möglich wären sowie Linsen an nur einer der Seiten 66a oder 66b. Beide Substrate sind transparent und werden von den Strahlengängen durchdrungen, und zwar durch die Hauptseiten 66a und 66b hindurch. Obige Ausführungsbeispiele lassen sich also in Form einer Multiaperturabbildungsvorrichtung implementieren, und zwar mit einzeiliger Kanalanordnung, wobei jeder Kanal ein Teilgesichtsfeld eines Gesamtgesichtsfeldes überträgt und sich die Teilgesichtsfelder teilweise überlappen. Ein Aufbau mit mehreren der solchen Multiaperturabbildungsvorrichtungen für Stereo- Trio-, Quattro usw. Aufbauten für die 3D-Bildaufnahme ist möglich. Die Mehrzahl von Modulen kann dabei als eine zusammenhängende Zeile ausgeführt sein. Die zusammenhängende Zeile könnte identische Aktoren und ein gemeinsames Strahlumlenkelement nutzen. Ein oder mehrere eventuell im Strahlengang vorhandene mechanisch verstärkende Substrate können sich über die gesamte Zeile, die einen Stereo-, Trio, Quattro-Aufbau bilden kann, erstrecken. Es können Verfahren der Superresolution genutzt werden, wobei mehrere Kanäle dieselben Teilbildbereiche abbilden. Die optischen Achsen können auch bereits ohne Strahlumlenkeinrichtung divergent verlaufen, so dass weniger Facetten auf der Strahlumlenkeinheit benötigt werden. Die Facetten besitzen dann vorteilhafter Weise nur eine Winkelkomponente. Der Bildsensor kann einteilig sein, nur eine zusammenhängende Pixelmatrix oder mehrere unterbrochene aufweisen. Der Bildsensor kann aus vielen Teilsensoren zusammengesetzt sein, die z.B. auf einer Leiterplatte nebeneinander angeordnet sind. Ein Autofokusantrieb eine Fokussiereinrichtung kann so ausgeführt sein, dass das Strahlumlenkelement synchron mit den Optiken bewegt wird, oder ruhend ist. Bei einer Abwesenheit einer Vorab-Divergenz sehen es Ausführungsbeispiele vor, dass die Strahlengänge zwischen dem Bildsensor 12 und der Strahlumlenkeinrichtung 18 im Wesentlichen oder vollständig parallel verlaufen.

Fig. 27b zeigt einen schematischen Aufbau umfassend eine erste Multiaperturabbildungsvorrichtung 11a und eine zweite Multiaperturabbildungsvorrichtung 11b, wie er bspw. in dem Gerät 130 angeordnet sein kann. Die beiden Multiaperturabbildungsvorrichtungen 11a und 11b können eine gemeinsame Multiaperturabbildungsvorrichtung 11 bilden und einen gemeinsamen Bildsensor 12 und/oder ein gemeinsames Array 14 aufweisen. Die einzeiligen Arrays 14a und 14b bilden bspw. eine gemeinsame Zeile in dem gemeinsamen Array 14. Die Bildsensoren 12a und 12b können den gemeinsamen Bildsensor 12 bilden und bspw. auf einem gemeinsamen Substrat bzw. auf einem gemeinsamen Schaltungsträger wie einer gemeinsamen Platine oder einem gemeinsamen Flexboard montiert sein. Alternativ können die Bildsensoren 12a und 12b auch voneinander verschiedene Substrate umfassen. Verschiedene Mischungen dieser Alternativen sind natürlich ebenfalls möglich, wie etwa Multiaperturabbildungsvorrichtungen umfassend einen gemeinsamen Bildsensor, ein gemeinsames Array und/oder eine gemeinsame Strahlumlenkeinrichtung 18 sowie weitere Multiaperturabbildungsvorrichtungen, die separate Komponenten aufweisen. Vorteilhaft an einem gemeinsamen Bildsensor, einem gemeinsamen einzeiligen Array und/oder einer gemeinsamen Strahlumlenkeinrichtung ist, dass eine Bewegung einer jeweiligen Komponente mit einer großen Präzision durch ansteuern einer geringen Menge von Aktoren erhalten werden kann und eine Synchronisierung zwischen Aktoren reduziert oder vermieden werden kann. Ferner kann eine hohe thermische Stabilität erhalten werden. Alternativ oder zusätzlich können auch weitere Multiaperturabbildungsvorrichtungen ein gemeinsames Array, einen gemeinsamen Bildsensor und/oder eine gemeinsame Strahlumlenkeinrichtung aufweisen. Der Aufbau der Multiaperturabbildungsvorrichtung 11 kann bspw. für eine stereoskopische Erfassung eines Gesamt- oder Teilgesichtsfeldes nutzbar sein, wenn optische Kanäle verschiedener Teil-Multiaperturabbildungsvorrichtungen 11a und 11b auf ein gleiches Teilgesichtsfeld gelenkt werden. In vergleichbarer Weise können weitere Teil-Multiaperturabbildungsvorrichtungen in die gemeinsame Multiaperturabbildungsvorrichtungen integriert werden, so dass eine Erfassung höherer Ordnung im Vergleich zu Stereo ermöglicht ist.

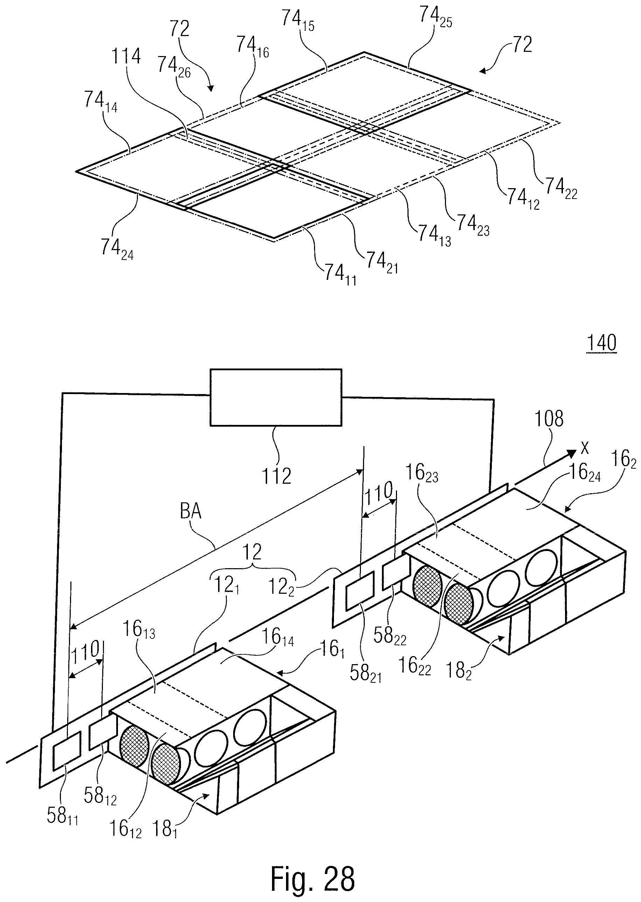

Fig. 28 zeigt eine 3D-Multiaperturabbildungsvorrichtung 140, wie sie gemäß hier beschriebenen Ausführungsbeispielen einsetzbar ist. Sie besitzt einen Bildsensor, der, wie es in Fig. 28 angedeutet ist, in zwei Komponenten $12_1$ bzw. $12_2$ aufgeteilt sein kann, eine Komponente $12_1$ für die "rechten" optischen Kanäle $16_1$ und die andere Komponente $12_2$ für die "linken" Kanäle $16_2$. Die rechten und die linken optischen Kanäle $16_1$ und $16_2$ sind bei dem Beispiel von Fig. 28 identisch aufgebaut, allerdings um den Basisabstand BA lateral versetzt voneinander angeordnet, um möglichst viele Tiefeninformationen bezüglich der im Gesichtsfeld der Vorrichtung 140 befindlichen Szene zu erhalten. Beispielsweise kann es die 3D-Multiaperturabbildungsvorrichtung durch zwei oder mehr Multiaperturabbildungsvorrichtungen 11 gebildet sein. Die Elemente, die mit einem Bezugszeichen versehen sind, das mit einem Index 1 an der ersten Position von links versehen ist, gehören somit zu der ersten Komponente 1 oder einem ersten Modul für die rechten Kanäle, Modul 1, der Vorrichtung 140 und die Elemente, die mit einem Bezugszeichen versehen sind, das mit einem Index 2 an der ersten Position von links versehen ist, gehören somit zu der zweiten Komponente 2 oder einem zweiten Modul für die linken Kanäle, Modul 2, der Vorrichtung 140. Obwohl die Anzahl der Module in Fig. 28 zwei ist, könnte die Vorrichtung auch mehr besitzen, die mit einem jeweiligen Basisabstand zueinander angeordnet sind.

In dem exemplarischen Fall von Fig. 28 umfasst jede Mehrzahl $16_1$ und $16_2$ von optischen Kanälen vier nebeneinander angeordnete optische Kanäle. Die einzelnen "rechten" Kanäle seien durch den zweiten tiefgestellten Index unterschieden. Die Kanäle seien dabei von rechts nach links indexiert. D.h., der optische Kanal $16_{11}$, der in Fig. 28 wegen einer zum Zwecke der Übersichtlichkeit gewählten Teilwegnahme nicht dargestellt ist, ist beispielsweise entlang der Basisabstandsrichtung 108, entlang welcher die linken und die rechten Kanäle voneinander unter dem Basisabstand BA versetzt zueinander angeordnet sind, am äußersten rechten Rand angeordnet, d.h. am weitesten entfernt von der Mehrzahl $16_2$ linker Kanäle, wobei die anderen rechten Kanäle $16_{12}$ - $16_{14}$ entlang der Basisabstandsrichtung 108 folgen. Die Kanäle $16_{11}$ - $16_{14}$ bilden also ein einzeiliges Array von optischen Kanälen, dessen Zeilenerstreckungsrichtung der Basisabstandsrichtung 108 entspricht. Ebenso sind auch die linken Kanäle $16_2$ aufgebaut. Auch sie seien durch den zweiten tiefgestellten Index voneinander unterschieden. Die linken Kanäle $16_{21}$ - $16_{24}$ sind nebeneinander und in der gleichen Richtung aufeinanderfolgend angeordnet wie die rechten Kanäle $16_{11}$ - $16_{14}$, nämlich so, dass der Kanal $16_{21}$ den rechten Kanälen am nächsten ist und der Kanal $16_{24}$ am weitesten entfernt von Letztgenannten.

Jeder der rechten Kanäle $16_{11}$ - $16_{14}$ umfasst eine entsprechende Optik, die, wie es in Fig. 28 angedeutet ist, aus einem Linsensystem bestehen kann. Alternativ könnte jeder Kanal eine Linse aufweisen. Jeder optische Kanal $16_{11}$ - $16_{14}$ nimmt eines von sich überlappenden Teilgesichtsfeldern 74a-f des Gesamtgesichtsfeldes 72 auf, die sich gegenseitig überlappen, wie es im Zusammenhang mit der Fig. 25a beschrieben ist. Zur besseren Veranschaulichung sind die Teilgesichtsfelder 74a-f aus Fig. 25a mit den Indizes 1-6 bezeichnet, deren Reihenfolge auf die Reihenfolge der Buchstaben im Alphabet übertragbar ist. Ferner weisen die Teilgesichtsfelder die Indizes 1 und 2 zur Zuordnung zu den Modulen auf. Der Kanal $16_{11}$ bildet beispielsweise die Teilgesichtsfelder $74_{11}$ und $74_{12}$ auf den Bildsensorbereich $58_{11}$ und $58_{12}$ ab. Der optische Kanal $16_{12}$ bildet das Teilgesichtsfeld $74_{13}$ auf den Bildsensorbereich $58_{13}$, der optische Kanal $16_{13}$ die zugeordneten Teilgesichtsfelder $74_{14}$ und $74_{15}$ auf die entsprechenden in Fig. 28 nicht sichtbaren Bildsensorbereiche $58_{14}$ und $58_{15}$ des Bildsensors 12 und der optische Kanal $16_{14}$ ein zugeordnetes Teilgesichtsfeld $74_{16}$ auf einen entsprechenden Bildsensorbereich $58_{16}$, der ebenfalls in Fig. 28 wegen Verdeckung nicht gezeigt ist.

In Fig. 28 sind die Bildsensorbereiche $58_{11}$ - $58_{16}$ des Bildsensors 12 bzw. der Komponente $12_1$ des Bildsensors 12 in einer Ebene parallel zur Basisabstandsrichtung BA bzw. parallel zur Zeilenerstreckungsrichtung 108 angeordnet, und zu dieser Ebene sind auch Linsenebenen der Optiken der optischen Kanäle $16_{11}$ - $16_{14}$ parallel. Zudem sind die Bildsensorbereiche $58_{11}$ - $58_{16}$ untereinander mit entsprechenden lateralen Interkanalabständen 110 angeordnet, die durch die Optiken der optischen Kanäle $16_{11}$ - $16_{14}$ in dieser Richtung vorgegeben sind, so dass die optischen Achsen und Strahlengänge der optischen Kanäle $16_{11}$ - $16_{14}$ zwischen den Bildsensorbereichen $58_{11}$ - $58_{16}$ und den Optiken $16_{11}$ - $16_{14}$ parallel zueinander verlaufen. Beispielsweise sind Zentren der Bildsensorbereiche $58_{13}$ und $58_{16}$ und optische Zentren der Optiken der optischen Kanäle $16_{12}$ und $16_{13}$ auf der jeweiligen optischen Achse angeordnet, die senkrecht zu der vorerwähnten gemeinsamen Ebene der Bildsensorbereiche $58_{13}$ und $58_{16}$ verlaufen.

Die optischen Achsen bzw. Strahlengänge der optischen Kanäle $16_{11}$ - $16_{14}$ werden durch eine Strahlumlenkeinrichtung $18_1$ umgelenkt und damit mit einer Divergenz versehen, die dazu führt, dass sich die Teilgesichtsfelder $74_{11}$ - $74_{16}$ der optischen Kanäle $16_{11}$ - $16_{14}$ gegenseitig nur teilweise überlappen, wie z.B. so, dass sich paarweise die Teilgesichtsfelder $74_{11}$ - $74_{16}$ höchstens zu 50 % im Raumwinkelsinne überlappen und auch teilweise disjunkte Bildinhalte aufweisen. Die Strahlumlenkeinrichtung $18_1$ kann, wie es in Fig. 28 angedeutet ist, beispielsweise für jeden optischen Kanal $16_{11}$ - $16_{14}$ eine reflektive Facette aufweisen, die unter den Kanälen $16_{11}$ - $16_{14}$ unterschiedlich gegeneinander verkippt sind. Eine mittlere Neigung der reflektiven Facetten gegenüber der Bildsensorebene lenkt das Gesamtgesichtsfeld der rechten Kanäle $16_{11}$ - $16_{14}$ in eine Richtung um, die beispielsweise senkrecht zu der Ebene steht, in welcher die optischen Achsen der Optiken der optischen Kanäle $16_{11}$ - $16_{14}$ vor bzw. ohne Strahlumlenkung durch die Vorrichtung $18_1$ verlaufen, oder weicht von dieser senkrechten Richtung weniger als 10° ab. Alternativ könnte die Strahlumlenkeinrichtung $18_1$ auch Prismen zur Strahlumlenkung der einzelnen optischen Achsen bzw. Strahlengänge der optischen Kanäle $16_{11}$ - $16_{14}$ verwenden.

Die Strahlumlenkeinrichtung $18_1$ versieht die Strahlengänge der optischen Kanäle $16_{11}$-$16_{14}$ mit einer Divergenz derart, dass die eigentlich linear in der Richtung 108 nebeneinander angeordneten Kanäle $16_{11}$ - $16_{14}$ das Gesamtgesichtsfeld 72 zweidimensional abdecken.

Es sei darauf hingewiesen, dass die Strahlengänge bzw. optischen Achsen auch von der beschriebenen Parallelität abweichen könnte, dass dennoch die Parallelität der Strahlengänge der optischen Kanäle aber immer noch so ausgeprägt sein könnte, dass sich die Teilgesichtsfelder, die durch die einzelnen Kanäle $16_{11}$ - $16_{14}$ abgedeckt bzw. auf die jeweiligen Bildsensorbereiche

$58_{11}$ - $58_{16}$ abgebildet werden, ohne weitere Maßnahmen, wie nämlich die Strahlumlenkung, größtenteils überlappen würden, so dass, um ein größeres Gesamtgesichtsfeld durch die Multiaperturabbildungsvorrichtung 140 abzudecken, die Strahlumlenkeinrichtung 18 die Strahlengänge so mit einer zusätzlichen Divergenz versieht, dass sich die Teilgesichtsfelder der Kanäle $16_{11}$ - $16_{14}$ weniger gegenseitig überlappen. Die Strahlumlenkeinrichtung $18_1$ sorgt beispielsweise dafür, dass das Gesamtgesichtsfeld einen über alle azimutalen Winkel bzw. über alle Transversalrichtungen gemittelten Öffnungswinkel aufweist, der größer ist als 1,5-mal dem entsprechenden mittleren Öffnungswinkel der Teilgesichtsfelder der optischen Kanäle $16_{11}$ - $16_{14}$.

Ebenso wie die rechten Kanäle $16_{11}$ - $16_{14}$ sind nun auch die linken Kanäle $16_{21}$ - $16_{24}$ aufgebaut und relativ zu jeweiligen zugeordneten Bildsensorbereichen $58_{21}$ - $58_{26}$ positioniert, wobei die in der gleichen Ebene wie die optischen Achsen der Kanäle $16_{11}$ - $16_{14}$ parallel zueinander verlaufenden optischen Achsen der optischen Kanäle $16_{21}$ - $16_{24}$ durch eine korrespondierende Strahlumlenkeinrichtung $18_2$ umgelenkt werden, so dass die optischen Kanäle $16_{21}$ - $16_{24}$ das gleiche Gesamtgesichtsfeld 72 in nahezu kongruenter Art und Weise aufnehmen, nämlich in Teilgesichtsfeldern $74_{21}$ - $74_{26}$, in die das Gesamtgesichtsfeld 72 zweidimensional aufgeteilt ist, die sich gegenseitig überlappen, und von denen jedes nahezu vollständig mit dem entsprechenden Teilgesichtsfeld $74_{11}$ - $74_{16}$ eines entsprechenden Kanals der rechten Kanäle $16_{11}$ - $16_{14}$ überlappt. Beispielsweise überlappen die Teilgesichtsfelder $74_{11}$ und das Teilgesichtsfeld $74_{21}$ nahezu vollständig miteinander, die Teilgesichtsfelder $74_{12}$ und $74_{22}$ usw. Die Bildsensorbereiche $58_{11}$ - $58_{26}$ können beispielsweise jeweils aus einem Chip gebildet sein, wie es für den Bildsensor 12 in Fig. 25 beschrieben ist.

Zusätzlich den vorerwähnten Komponenten umfasst die 3D-Multiaperturabbildungsvorrichtung einen Prozessor 112, der die Aufgabe übernimmt, beispielsweise die Bilder, die bei einer Aufnahme durch die 3D-Multiaperturabbildungsvorrichtung 10 durch die rechten optischen Kanäle $16_{11}$ - $16_{14}$ aufgenommen worden sind, zu einem ersten Gesamtbild zu verschmelzen. Das Problem, das dabei zu bewältigen ist, ist das Folgende: Aufgrund der Interkanalabstände 110 zwischen benachbarten Kanälen der rechten Kanäle $16_{11}$ - $16_{14}$ können die Bilder, die bei einer Aufnahme durch die Kanäle $16_{11}$ - $16_{14}$ in den Bildbereichen $58_{11}$ - $58_{16}$ aufgenommen werden, nicht einfach bzw. translatorisch gegenseitig verschoben und aufeinander gelegt werden. In anderen Worten ausgedrückt, lassen sie sich nicht ohne weiteres aneinanderfügen. Disparität nennt man den lateralen Versatz entlang der Richtung B, 108 bzw. 110 in den Bildern der Bildsensorbereiche $58_{11}$ - $58_{16}$ bei Aufnahme einer gleichen Szene, die einander korrespondieren sich aber in unterschiedlichen Bildern befinden. Die Disparität einander korrespondierender Bildinhalte hängt aber wiederum von der Entfernung dieses Bildinhalts in der Szene ab, d.h. der Entfernung des entsprechenden Objekts von der Vorrichtung 140. Der Prozessor 112 könnte nun versuchen, Disparitäten unter den Bildern der Bildsensorbereiche $58_{11}$ - $58_{16}$ selbst auszuwerten, um diese Bilder miteinander zu einem ersten Gesamtbild, nämlich zu einem "rechten Gesamtbild" zu verschmelzen. Nachteilig ist allerdings, dass die Interkanalabstand 110 zwar vorhanden ist, und damit eben erst das Problem hervorruft, dass der Interkanalabstand 110 aber andererseits auch relativ gering ist, so dass die Tiefenauflösung bzw. -abschätzung lediglich ungenau ist. Der Versuch, einander korrespondierende Bildinhalte in einem Überlappbereich zwischen zwei Bildern, wie z.B. in dem Überlappbereich 114 zwischen den Bildern der Bildsensorbereiche $58_{11}$ und $58_{12}$ beispielsweise mittels Korrelation zu ermitteln, ist deshalb schwierig.

Der Prozessor von Fig. 28 verwendet deshalb in dem Überlappbereich 114 zwischen den Teilgesichtsfeldern $74_{11}$ und $74_{12}$ zur Verschmelzung Disparitäten in einem Paar von Bildern, von denen eines durch einen der linken Kanäle $16_{21}$ oder $16_{22}$ aufgenommen ist, dessen abgebildetes zweites Teilgesichtsfeld, nämlich $74_{21}$ bzw. $74_{22}$, mit dem Überlappbereich 114 überlappt. Beispielsweise wertet der Prozess 112 zur Verschmelzung der Bilder der Bildsensorbereiche $58_{11}$ und $58_{12}$ Disparitäten in Bildern aus, von denen eines durch einen der Bildsensorbereiche $58_{21}$ oder $58_{22}$ und ein anderes durch einen der an dem Überlappbereich 114 beteiligten Kanäle aufgenommen ist, d.h. ein Bild, das durch einen der Bildsensorbereiche $58_{11}$ oder $58_{12}$ aufgenommen ist. Ein solches Paar besitzt dann einen Basisabstand von Grundbasisabstand BA plus/minus einem oder keinem eines Kanalbasisabstands 110. Letzterer Basisabstand ist deutlich größer als ein einzelner Kanalbasisabstand 110, weshalb sich die Disparitäten in dem Überlappbereich 86 für den Prozessor 112 leichter ermitteln lassen. Der Prozessor 112 wertet deshalb für die Verschmelzung der Bilder der rechten Kanäle Disparitäten aus, die sich mit einem Bild der linken Kanäle ergibt und zwar vorzugsweise, aber nicht ausschließlich, zwischen Bildern von einem der rechten Kanäle und einem der linken Kanäle.

Spezifischer ausgedrückt, ist es möglich, dass der Prozessor 112 denjenigen Teil des Teilgesichtsfeldes $74_{11}$, der nicht mit einem der anderen Teilgesichtsfelder der rechten Kanäle überlappt, mehr oder weniger direkt aus dem Bild $58_{11}$ übernimmt und das Gleiche unternimmt für die nicht-überlappenden Bereiche der Teilgesichtsfelder $74_{12}$, $74_{13}$, $74_{14}$, $74_{15}$ und $74_{16}$ auf Basis der Bilder der Bildsensorbereiche $58_{12}$ - $58_{16}$, wobei die Bilder der Bildsensorbereiche $58_{11}$ - $58_{16}$ beispielsweise gleichzeitig aufgenommen wurden. Lediglich in den Überlappbereichen benachbarter Teilgesichtsfelder, wie z.B. der Teilgesichtsfelder $74_{11}$ und $74_{12}$, zieht dann der Prozessor 112 Disparitäten aus Bildpaaren heran, deren Überlapp im Gesamtgesichtsfeld 72 im Überlappbereich überlappt, aber von denen in der Mehrzahl aber nicht ausschließlich eines durch einen der rechten Kanäle aufgenommen wurde und das andere durch einen der linken Kanäle, wie z.B. wiederum zur gleichen Zeit.

Gemäß einer alternativen Vorgehensweise wäre es allerdings ebenfalls möglich, dass der Prozessor 112 alle Bilder des rechten Kanals warpt, und zwar gemäß einer Auswertung von Disparitäten zwischen Paaren von Bildern, von denen jeweils eines durch die rechten Kanäle und das andere durch die linken Kanäle aufgenommen wurde. So könnte beispielsweise das Gesamtbild, das durch den Prozessor 112 für die Bilder der rechten Kanäle berechnet wird, virtuell nicht nur im Überlappbereich der Teilgesichtsfelder $74_{11}$ - $74_{16}$ der rechten Kanäle, sondern auch in dem Nicht-Überlappbereich virtuell auf einen Blick-Punkt "gewarpt" werden, der beispielsweise lateral in der Mitte zwischen den rechten Kanälen $16_{11}$ - $16_{14}$ liegt, und zwar indem auch für diejenigen Bereiche der Teilgesichtsfelder $74_{11}$ - $74_{16}$, die sich nicht gegenseitig überlappen, Disparitäten aus Bildpaaren durch den Prozessor 85 ausgewertet werden, bei denen ein Bild durch einen der rechten Kanäle und ein anderes Bild durch einen der linken Kanäle aufgenommen wurde.

Die 3D-Multiaperturabbildungsvorrichtung 140 von Fig. 28 ist nicht nur in der Lage, ein Gesamtbild aus den Bildern der rechten Kanäle zu erzeugen, sondern die 3D-Multiaperturabbildungsvorrichtung 140 von Fig. 28 ist zumindest auch in einem Betriebsmodus in der Lage, aus einer Aufnahme zusätzlich zu dem Gesamtbild der ersten Kanäle auch ein Gesamtbild der Bilder der linken Kanäle und/oder zusätzlich zu dem Gesamtbild der rechten Kanäle eine Tiefenkarte zu erzeugen.

Gemäß der ersten Alternative ist der Prozessor 112 beispielsweise ausgebildet, um Bilder, die durch die linken optischen Kanäle $16_{21}$ - $16_{24}$ bzw. die Bildsensorbereiche $58_{21}$ - $58_{26}$ aufgenommen sind, zu einem zweiten Gesamtbild zu verschmelzen, nämlich einem Gesamtbild linken Kanals, und dabei in einem Überlappbereich von lateral benachbarten der Teilgesichtsfelder $74_{21}$ - $74_{26}$ der linken optischen Kanäle Disparitäten in einem Paar von Bildern zu verwenden, von denen in der Mehrzahl aber nicht ausschließlich eines durch einen rechten optischen Kanal $16_{11}$ - $16_{14}$ aufgenommen ist und mit dem entsprechenden Überlappbereich des Paars von Teilgesichtsfeldern $74_{21}$ - $74_{26}$ überlappt, und das andere vorzugsweise durch einen der linken optischen Kanäle aufgenommen ist, dessen Teilgesichtsfeld mit dem jeweiligen Überlappbereich überlappt.

Gemäß der ersten Alternative gibt also für eine Aufnahme der Prozessor 112 zwei Gesamtbilder aus, nämlich eines für die rechten optischen Kanäle und das andere für die linken optischen Kanäle. Diese beiden Gesamtbilder könnten beispielsweise einem Benutzer der beiden Augen des Benutzers getrennt zugeführt werden und somit zu einem dreidimensionalen Eindruck der aufgenommenen Szene führen.

Gemäß der anderen vorerwähnten Alternative erzeugt der Prozessor 112 zusätzlich zu dem Gesamtbild zu den rechten Kanälen eine Tiefenkarte, und zwar unter Verwendung von Disparitäten in Paaren von Bildern, die zumindest für jedes der rechten Kanäle $16_{11}$-$16_{14}$ zumindest ein Paar aufweisen, das ein Bild aufweist, das durch den jeweiligen rechten Kanal aufgenommen ist, und ein weiteres Bild, das durch eines der linken Kanäle aufgenommen ist.

Bei dem Ausführungsbeispiel, bei dem die Tiefenkarte durch den Prozessor 112 erzeugt wird, ist es auch möglich, dass vorerwähnte Warpen für die gesamten Bilder, die durch die rechten Kanäle aufgenommen sind, auf Basis der Tiefenkarte vorzunehmen. Da die Tiefenkarte über das Gesamtgesichtsfeld 72 hinweg Tiefeninformationen aufweist, ist es möglich, die gesamten Bilder, die durch die rechten Kanäle aufgenommen sind, d.h. nicht nur in den Überlappbereichen derselben, sondern auch in den Nicht-Überlapp-bereichen, auf einen virtuellen gemeinsamen Aperturpunkt bzw. ein virtuelles optisches Zentrum zu warpen.

Die beiden Alternativen können auch beide durch den Prozessor 112 abgearbeitet werden: Er könnte zunächst die beiden Gesamtbilder, nämlich eines für die rechten optischen Kanäle und das andere für die linken optischen Kanäle, wie oben beschrieben erzeugen, indem bei der Verschmelzung der Bilder der rechten Kanäle in den Überlappbereichen zwischen den Bildern der rechten Kanäle auch Disparitäten aus Paaren von Bildern verwendet werden, von denen eines zu den Bildern der linken Kanäle gehört, und bei der Verschmelzung der Bilder der linken Kanäle in den Überlappbereichen zwischen den Bildern der linken Kanäle auch Disparitäten aus Paaren von Bildern verwendet werden, von denen eines zu den Bildern der rechten Kanäle gehört, um dann aus den so gewonnen Gesamtbildern, die die Szene in dem Gesamtgesichtsfeld aus unterschiedlichen Perspektiven darstellen, ein Gesamtbild mit zugehöriger Tiefenkarte zu erzeugen, wie z.B. ein Gesamtbild, das zu einer virtuellen Ansicht bzw. bzw. zu einem virtuellen optischen Zentrum zwischen den optischen Zentren der Optiken der rechten und linken optischen Kanäle liegt, möglicher Weise aber nicht ausschließlich mittig dazwischen. Zur Berechnung der Tiefenkarte und zum Warpen eines der beiden Gesamtbilder oder Warpen und Verschmelzen beider Gesamtbilder in die virtuelle Ansicht verwendete der Prozessor 85 dann das rechte und linke Gesamtbild, quasi als Zwischenergebnis aus der vorangegangenen Verschmelzung der linken bzw. rechten Einzelbilder. Der Prozessor wertete hier also Disparitäten in den beiden Zwischenergebnisgesamtbildern aus, um die Tiefenkarte zu erhalten und das Warpen oder Warpen/Verschmelzen derselben durchzuführen.

Es sei erwähnt, dass der Prozessor 112 die Auswertung von Disparitäten in einem Paar von Bildern beispielsweise vermittels Kreuzkorrelation von Bildbereichen durchführt.

Es sei erwähnt, dass bei einer anderen Abdeckung des Gesamtgesichtsfeldes 72 durch die Teilgesichtsfelder der linken Kanäle einerseits und durch die Teilgesichtsfelder der rechten Kanäle andererseits sich ggf. auch mehr als vier Kanäle (unbeachtlich ihrer Zugehörigkeit zu den linken oder rechten Kanälen) einander gegenseitig überlappen, wie es z.B. ja auch an dem gegenseitigen Überlapp zwischen den Überlappbereichen von in Zeilenrichtung oder Spaltenrichtung benachbarten Teilgesichtsfeldern der bisherigen Beispiele der Fall war, wo die Teilgesichtsfelder der rechten Kanäle sowie die Teilgesichtsfelder der linken Kanäle jeweils für sich in Spalten und Zeilen angeordnet waren. Dann gilt für die Anzahl an Disparitätsquellen ganz allgemein, dass sie ($\binom{N}{2}$), wobei N die Anzahl der Kanäle mit sich miteinander überlappenden Teilgesichtsfeldern bezeichne.

Zusätzlich zur vorhergehenden Beschreibung sei noch erwähnt, dass der Prozessor 112 optional u.a. noch eine kanalweise Korrektur perspektivischer Abbildungsstörungen des jeweiligen Kanals vornimmt.

Es sei darauf hingewiesen, dass das Ausführungsbeispiel von Fig. 28 in vielerlei Hinsicht lediglich exemplarisch war. Das betrifft beispielsweise die Anzahl an optischen Kanälen. Beispielsweise beträgt die Anzahl an rechten optischen Kanälen nicht Vier, sondern ist irgendwie größer gleich 2 oder liegt zwischen 2 und 10, beides inklusive, und der Überlappbereich der Teilgesichtsfelder der rechten optischen Kanäle kann, soweit für jedes Teilgesichtsfeld bzw. jeden Kanal, das Paar mit dem größten Überlapp zu dem jeweiligen Teilgesichtsfeld betrachtet wird, flächenmäßig für all diese Paare zwischen 1/2 und 1/1000 einer mittleren Bildgröße der Bilder, die von den Bildbereichen $58_{11}$ - $58_{14}$ aufgenommen werden, liegen, gemessen beispielsweise in der Bildebene, d.h. der Ebene der Bildsensorbereiche. Gleiches gilt beispielsweise für die linken Kanäle. Die Anzahl kann allerdings zwischen den rechten Kanälen und den linken Kanälen unterschiedlich sein. D.h., dass die Anzahl der linken optischen Kanäle, $N_L$, und rechten optischen Kanäle, $N_R$, nicht unbedingt gleich sein muss und eine Aufteilung des Gesamtgesichtsfeldes 72 in die Teilgesichtsfelder der linken Kanäle und die Teilgesichtsfelder der rechten Kanäle nicht in etwa gleich zu sein hat, wie dies bei Fig. 28 der Fall war. Hinsichtlich der Teilgesichtsfelder und deren Überlapp kann es sich beispielsweise so verhalten, dass die Teilgesichtsfelder beispielsweise um mindestens 20 Pixel ineinander ragen, soweit eine Bildentfernung bzw. Objektentfernung von 10 m betrachtet wird, jedenfalls für alle Paare mit größtem Überlapp, wobei dies für die rechten Kanäle ebenso wie für die linken Kanäle gelten kann.

Anders als im Vorhergehenden erörtert, ist es zudem nicht notwendig, dass die linken optischen Kanäle bzw. die rechten optischen Kanäle einzeilig gebildet sind. Die linken und/oder die rechten Kanäle könnten auch ein zweidimensionales Array von optischen Kanälen bilden. Zudem ist es nicht notwendig, dass die einzeiligen Arrays eine kollineare Zeilenerstreckungsrichtung aufweisen. Die Anordnung von Fig. 28 ist allerdings vorteilhaft, da sie zu einer minimalen Bauhöhe senkrecht zu der Ebene ergibt, in welcher die optischen Achsen der optischen Kanäle, d.h. sowohl der rechten als auch der linken Kanäle, vor bzw. ohne Strahlumlenkung, führt. Hinsichtlich des Bildsensors 12 war bereits erwähnt worden, dass selbiger aus ein, zwei oder mehreren Chips gebildet sein kann. Beispielsweise könnte ein Chip pro Bildsensorbereich $58_{11}$ - $58_{16}$ und $58_{21}$ - $58_{26}$ vorgesehen sein, wobei in dem Fall mehrerer Chips selbige auf einem oder mehreren Platinen befestigt sein können, wie z.B. eine Platine für die linken Kanäle bzw. die Bildsensoren der linken Kanäle und eine Platine für die Bildsensoren der rechten Kanäle.

Bei dem Ausführungsbeispiel von Fig. 28 ist es also möglich, benachbarte Kanäle innerhalb der Kanäle der rechten oder linken Kanäle so dicht wie möglich zu platzieren, wobei im optimalen Fall der Kanalabstand 110 dem Linsendurchmesser entspricht. Hieraus ergibt sich ein geringer Kanalabstand und mithin eine geringe Disparität. Die rechten Kanäle einerseits und die linken Kanäle andererseits können aber zueinander mit einem beliebigen Abstand BA angeordnet werden, so dass sich große Disparitäten realisieren lassen. Insgesamt ergibt sich die Möglichkeit einer artefaktreduzierten oder auch -freien Bildfusion und eine Erstellung von Tiefenkarten mit einem passiven optischen Abbildungssystem.

Gegenüber obigen Beispielen wäre es möglich, mehr als nur zwei Gruppen von Kanälen $16_1$ und $16_2$ zu verwenden, sondern mehr. Die Gruppenanzahl könnte mit N bezeichnet werden. Wären dann auch in diesem Fall die Anzahl von Kanälen pro Gruppe gleich sowie die Gesamtgesichtsfeldaufteilung in Teilgesichtsfelder für alle Gruppen gleich, dann ergäbe sich pro Überlappbereich von Teilgesichtsfeldern der Gruppe $16_1$ beispielsweise eine Anzahl von Disparitätsquellen von ($\binom{2N}{2}$). Eine unterschiedliche Gesamtgesichtsfeldaufteilung für die Gruppen von Kanälen ist aber ebenfalls denkbar, wie oben schon erwähnt wurde.

Schließlich wird darauf hingewiesen, dass bei der vorhergehenden Beschreibung lediglich der exemplarische Fall aufgegriffen wurde, dass der Prozessor 112 die Bilder der rechten Kanäle verschmilzt. Selbiges Vorgehen könnte von dem Prozessor 112 wie im Vorhergehenden erwähnt für beide bzw. alle Kanalgruppen durchgeführt werden, oder auch für die linke oder dergleichen.

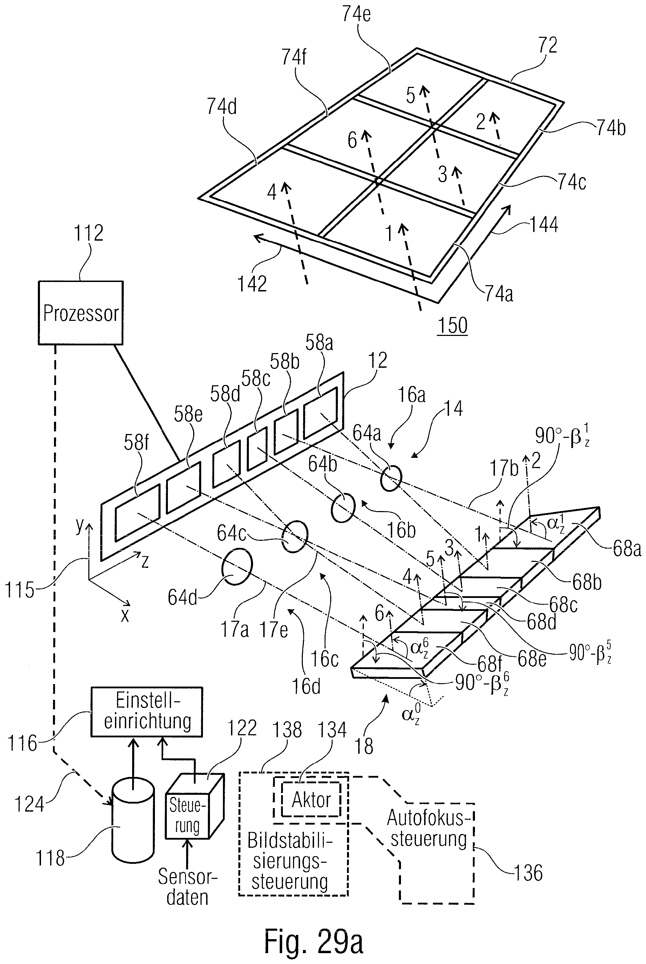

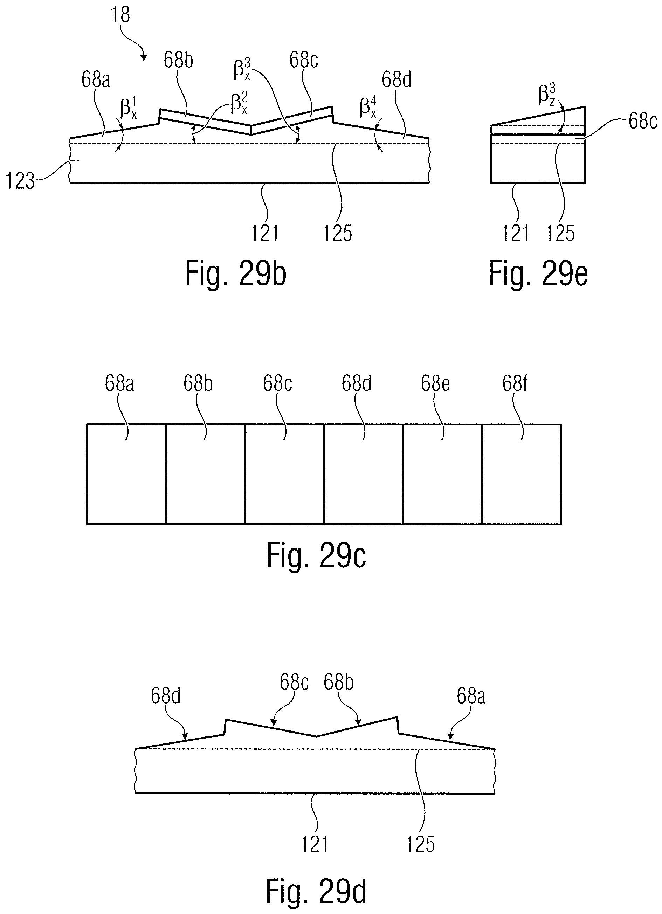

Fig. 29a zeigt ein Ausführungsbeispiel einer Multiaperturabbildungsvorrichtung 150. Vorzugsweise sind die Bildsensorbereiche 58a-d in einer gemeinsamen Ebene angeordnet, nämlich der Bildebene der optischen Kanäle 16 bzw. derer Optiken. In Fig. 29a ist diese Ebene exemplarisch parallel zu der Ebene, die durch eine z- und eine y-Achse eines kartesischen Koordinatensystems aufgespannt wird, das in Fig. 29a zur Vereinfachung der nachfolgenden Beschreibung eingezeichnet und mit dem Bezugszeichen 115 versehen ist.

Bei einem linearen Array von optischen Kanälen ist die Größenausdehnung der Multiaperturabbildungsvorrichtung 150, wie sie durch den Bildsensor 12 und die Optiken 64 nach unten hin beschränkt wird, entlang der Zeilenerstreckungsrichtung größer als der Durchmesser eine Linse. Die minimale Ausdehnung der Multiaperturabbildungsvorrichtung 150, wie sie durch die gegenseitige Anordnung von Bildsensor 12 zu Optiken 64 entlang der z-Achse, d.h. entlang der optischen Achsen bzw. Strahlengänge der optischen Kanäle 16a-d, bestimmt wird, ist zwar kleiner als die minimale Ausdehnung entlang der z-Achse, sie ist aber aufgrund der Ausgestaltung der optischen Kanäle 16a-d als einzeiliges Array größer als die Minimalausdehnung der Multiaperturabbildungsvorrichtung in der zu der Zeilenerstreckungsrichtung z senkrechten lateralen Richtung y. Letztere ist durch die laterale Ausdehnung jedes einzelnen optischen Kanals 16a-d, wie z.B. die Ausdehnung der Optiken 64a-d entlang der y-Achse, eventuell inklusive einer hierfür geeigneten Halterung, gegeben.

Wie es im Vorhergehenden beschrieben wurde, sind bei dem Ausführungsbeispiel von Fig. 29a die optischen Achsen 17a-d vor der bzw. ohne die Umlenkung durch die Strahlumlenkeinrichtung 18 bzw. an beispielsweise den Optiken 64a-d parallel zueinander, wie es in Fig. 29a gezeigt ist, oder aber sie weichen hiervon nur wenig ab. Die damit korrespondierende zentrierte Positionierung von Optiken 64a-d sowie der Bildsensorbereiche 58a-f ist einfach herzustellen und günstig hinsichtlich der Minimierung des Bauraums. Die Parallelität der Strahlengänge der optischen Kanäle bedingt aber auch, dass sich die Teilgesichtsfelder, die durch die einzelnen Kanäle 16a-d abgedeckt bzw. auf die jeweiligen Bildsensorbereiche 58a-d abgebildet werden, ohne weitere Maßnahmen, wie nämlich die Strahlumlenkung, nahezu vollständig überlappen würden. Um ein größeres Gesamtgesichtsfeld durch die Multiaperturabbildungsvorrichtung 150 abzudecken, besteht nun eine weitere Funktion der Strahlumlenkeinrichtung 18 darin, die Strahlengänge so mit einer Divergenz zu versehen, dass sich die Teilgesichtsfelder der Kanäle 16a-d weniger gegenseitig überlappen.

Beispielsweise sei angenommen, dass die optischen Achsen 17a-f der Strahlengänge der optischen Kanäle 16a-d vor bzw. ohne die Strahlumlenkeinrichtung 18 parallel zueinander sind oder gegenüber einer parallelen Ausrichtung entlang der über alle Kanäle gemittelten Ausrichtung um weniger als ein Zehntel eines minimalen Öffnungswinkels der Teilgesichtsfelder der optischen Kanäle 16a-d abweichen. Ohne zusätzliche Maßnahmen überlappten dann die Teilgesichtsfelder größtenteils. Die Strahlumlenkeinrichtung 18 von Fig. 29a umfasst deshalb für jeden optischen Kanal 16a-d eine diesem Kanal eindeutig zugeordnete reflektierende Facette 68a-d, die jeweils optisch planar sind und gegeneinander geneigt sind, nämlich so, dass die Teilgesichtsfelder der optischen Kanäle raumwinkelmäßig weniger überlappen und beispielsweise ein Gesamtgesichtsfeld abdecken, das einen Öffnungswinkel aufweist, der beispielsweise größer ist als 1,5 mal dem Öffnungswinkel der einzelnen Teilgesichtsfelder der optischen Kanäle 16a-d. In dem exemplarischen Fall von Fig. 29a sorgt die gegenseitige Neigung der reflektierenden Facette 68a-d beispielsweise dafür, dass die eigentlich linear entlang der z-Achse nebeneinander angeordneten optischen Kanäle 16a-d das Gesamtgesichtsfeld 72 gemäß einer zweidimensionalen Anordnung der Teilgesichtsfelder 74a-d abdecken.

Betrachtet man bei dem Ausführungsbeispiel von Fig. 29a die angulare Ablenkung der optischen Achsen 17a-d des optischen Kanals 16a-d in der Ebene, die durch die gemittelte Richtung der optischen Achsen vor der Strahlumlenkung und der gemittelten Richtung der optischen Achsen nach der Strahlumlenkung aufgespannt wird, d.h. in der zy-Ebene in dem Beispiel von Fig. 29a, einerseits und in der Ebene, die senkrecht zu der letztgenannten Eben und parallel zur gemittelten Richtung der optischen Achse nach Strahlumlenkung verläuft, andererseits, so entspricht das Beispiel von Fig. 29a dem exemplarischen Fall, dass die mittlere Richtung nach Strahlumlenkung der y-Achse entspricht. Im Mittel werden die optischen Achsen der optischen Kanäle also um 90° in der yz-Ebene um die z-Achse umgelenkt und im Mittel werden die optischen Achsen nicht aus der yz-Ebene herausgekippt.

Es bezeichnet beispielsweise $\beta_x^1$ den Neigungswinkel der Facette 68a gegenüber der xz-Ebene, gemessen in der xy-Ebene, d.h. die Verkippung der Facette 68a um die z-Achse gegenüber der xz-Ebene, in welcher die optischen Achsen 17a-d verlaufen. $\beta_z^1 = 0°$ entspricht einer Ausrichtung der Facette 68a parallel zu der xz-Ebene. Es gilt demzufolge $\alpha_z^1 = 2 \cdot \beta_z^1$. Entsprechend definiere $\beta_x^1$ den Neigungswinkel der Facette 68a gegenüber einer Ebene, die gegenüber der xz-Ebene die Neigung $\beta_z^1$ aufweist und parallel zu der z-Achse verläuft und zwar gemessen entlang der z-Achse. Es gilt demzufolge entsprechend $\alpha_x^1 = 2 \cdot \beta_x^1$. Die gleichen Definitionen sollen für die anderen Kanäle gelten: $\alpha_x^i = 2 \cdot \beta_x^i$, $\alpha_z^i = 2 \cdot \beta_z^i$. Für jeden optischen Kanal kann der Anstellwinkel größer sein, als ein Neigungswinkel der Neigung der diesem Kanal zugeordneten reflektierenden Facette gegenüber dem Trägersubstrat, durch den die optischen Kanäle verlaufen. Hierbei kann das Trägersubstrat parallel zu einer Zeilenerstreckungsrichtung des Arrays 14 positioniert sein und der Anstellwinkel in einer Ebene senkrecht zu der Zeilenerstreckungsrichtung liegen.

Fig. 29b-29e zeigen Seitenansichten einer Strahlumlenkvorrichtung gemäß einem Ausführungsbeispiel für exemplarisch vier optische Kanäle, die linear bzw. einseitig angeordnet sind. Die Strahlumlenkvorrichtung 18 von Fig. 29b-29e könnte als Strahlumlenkvorrichtung von Fig. 25a verwendet werden, wobei dann allerdings die Teilgesichtsfelder nicht wie in Fig. 25a auch anders zugeordnet werden können. Beispielhaft ist dargestellt, dass eine Facette 68a-f einem Strahlengang zugeordnet ist. Alternativ kann auch zumindest eine Facette einem optischen Kanal 16a-d so zugeordnet sein, dass zumindest zwei Strahlengänge des optischen Kanals von derselben Facette abgelenkt werden. Die Neigungswinkel der Facetten 68a-d sind in Fig. 29b-e eingezeichnet. Sie sind durch hochgestellte Indizes 1-4 voneinander unterschieden bzw. dem jeweiligen Kanal zugeordnet. $\beta_x^1$ ist hier ebenso wie $\beta_x^4$ 0°, wobei der besseren Übersichtlichkeit lediglich die Facetten 68a-d dargestellt sind. Die Rückseite des Trägersubstrats, d.h. die Seite, die der mit den Facetten 68a-d versehenen Oberfläche gegenüberliegt, ist in Fig. 29b-29e mit 121 angezeigt. Das den parallelepipedförmigen Anteil des Trägersubstrats 123 bildenden Material befindet sich unterhalb der gestrichelten Linie 125. Es ist ersichtlich, dass das zusätzliche Material, das diesem hinzukommt, wenig Volumen aufweist, so dass eine Abformung erleichtert wird.

Das Trägersubstrat 123 wird mit einem Anstellwinkel $\alpha_x^0$ gegenüber dem Bildsensor 12 geneigt platziert, nämlich um die Achse, um die die mittlere Richtung der optischen Achsen der optischen Kanäle umgelenkt wird, d.h. die z-Achse in Fig. 29a. Dieser Anstellwinkel sorgt dafür, dass die den Bildsensor 12 zugewandte Oberfläche der Strahlumlenkvorrichtung 18 bereits eine "Grobumlenkung" der Strahlengänge der optischen Kanäle bewirkt.

Das bedeutet für die Umlenkwinkel des Umlenkens des Strahlengangs jedes optischen Kanals durch die Strahlumlenkvorrichtung 18, dass dieselben jeweils auf dem Anstellwinkel $\alpha_x^0$ basieren sowie auf der jeweiligen Neigung der dem optischen Kanal zugeordneten reflektierenden Facette bezogen auf das Trägersubstrat 123 selbst. Diese erwähnten Facetten-individuellen Neigungen der Facetten 68a-d können wie soeben beschrieben durch einen Neigungswinkel in der xy-Ebene und einen Neigungswinkel gegenüber der Normalen des Trägersubstrats 123 in der dazu senkrechten Ebene beschrieben werden. Es wird bevorzugt, wenn gilt, dass für jeden Kanal der Anstellwinkel $\alpha_x^0$ größer ist als die Neigung, d.h. $\alpha_x^0 > \max(|\beta_x|, |\beta_z|)$ für alle Kanäle. Es wird noch mehr bevorzugt, wenn besagte Ungleichung bereits für $\alpha_x^0/2$ oder sogar für $\alpha_x^0/3$ erfüllt ist. In anderen Worten ausgedrückt, wird es bevorzugt, wenn der Anstellwinkel verglichen zu den Neigungswinkeln der Facetten 68a-d groß ist, so dass das zusätzliche Material gegenüber einer rein parallelepipedförmigen Form der Strahlumlenkvorrichtung 18 gering ist. $\alpha_x^0$ kann beispielsweise zwischen 30° und 60° jeweils inklusive liegen.

Die Herstellung der Strahlumlenkvorrichtung 18 von Fig. 29b-29e kann beispielsweise dadurch erfolgen, dass auf das Trägersubstrat 123 das zusätzliche Material durch ein Abformwerkzeug abgeformt wird. Das Trägersubstrat 123 könnte hierbei beispielsweise Glas sein, während das abgeformte zusätzliche Material darauf Polymer ist. Eine weitere Möglichkeit bestünde darin, dass die Strahlumlenkvorrichtung 18 von Fig. 29b-29e einstückig durch Spritzguss oder dergleichen gebildet wird. Das führt dazu, dass die dem Bildsensor zugewandte Oberfläche der Strahlumlenkeinrichtung zumindest an den den optischen Kanälen zugeordneten reflektierenden Facetten verspiegelt ist. Das Trägersubstrat kann drehbar rotatorisch gelagert sein, wie es bspw. im Zusammenhang mit Fig. 18b beschrieben ist.

Manche Aspekte des bisher beschriebenen Aufbaus von Multiaperturabbildungsvorrichtungen betraf quasi eine Wunsch- oder Momentaneinstellung vor bzw. zum Zeitpunkt der Aufnahme eines Gesamtbildes beispielsweise. Die Multiaperturabbildungsvorrichtung 150 von Fig. 29a umfasst beispielsweise einen Prozessor, wie etwa den Prozessor 112, der Bilder, die durch die Bildsensorbereiche 58a-f zu beispielsweise einem gleichen Zeitpunkt aufgenommen worden sind, und zwar mit den vorerwähnten Einstellungen, zu einem Gesamtbild zusammenfügt, das die Szene in dem Gesamtgesichtsfeld 72 repräsentiert. Der Algorithmus, den der Prozessor 112 verwendet, um die Bilder, die durch die optischen Kanäle 16a-d auf die Bildsensorbereiche 58a-f abgebildet und von letzteren aufgenommen worden sind, zusammenzufügen bzw. zu dem Gesamtbild zu verschmelzen, ist beispielsweise so entworfen, dass Annahmen über die Einhaltung bestimmter Parameter der vorbeschriebenen Komponenten der Multiaperturabbildungsvorrichtung 150 eingehalten werden sollten, damit die Qualität des Gesamtbildes eine bestimmte Vorgabe erfüllt oder der Algorithmus überhaupt angewendet werden kann. Beispielsweise geht der Algorithmus von der Einhaltung eines oder mehrerer der folgenden Annahmen aus:

1) Die Optik-zu-Bildsensorbereich-Abstände entlang der x-Achse sind für alle optischen Kanäle 16a-d gleich;

2) Die relative Lage der Teilgesichtsfelder 74a-f und insbesondere der Überlapp zwischen denselben entspricht einer vorbestimmten Vorgabe oder weicht von letzterer um weniger als eine vorbestimmte Maximalabweichung ab.

Aus unterschiedlichen Gründen kann es nun aber sein, dass eine oder mehrere der soeben genannten Annahmen nicht eingehalten werden oder nicht ausreichend eingehalten werden. Gründe für das Nicht-Einhalten können beispielsweise in der Nicht-Einhaltung von Herstellungsvarianzen bestehen, wie z.B. Ungenauigkeiten der relativen Lagen der Optiken 64a-d zueinander und relativ zu dem Bildsensor 12. Herstellungsungenauigkeiten können auch eine Ungenauigkeit des Einbaus der Spiegelumlenkvorrichtung 18 und ggf. der relativen Lagen der Facetten 68a-f (alternativ 68a-d, wenn eine Facette pro Kanal angeordnet ist) zueinander umfassen, wenn die Strahlumlenkeinrichtung 18 Facetten 68a-f aufweist. Zusätzlich oder alternativ zu den herstellungsbedingten Toleranzabweichungen können Temperaturschwankungen dafür sorgen, dass eine oder mehrere der oben genannten Annahmen nicht zutreffen oder nicht ausreichend eingehalten wird.

Bis zu einem gewissen Maße kann der durch den Prozessor 112 ausgeführte Algorithmus zur Zusammenfügung bzw. Verschmelzung der Bilder der Bildsensorbereiche 58af zu dem Gesamtbild ggf. Abweichungen von einer optimalen Ausrichtung und Anordnung der Komponenten ausgleichen, wie z.B. Abweichungen der Positionen der Teilgesichtsfelder 74a-f innerhalb des Gesamtgesichtsfeldes 72 von einer Sollkonstellation relativer Lagen der Teilgesichtsfelder zueinander. Beim Zusammenfügen bzw. Verschmelzen der Bilder könnte der Prozessor 112 beispielsweise in einem gewissen Maße solche Abweichungen ausgleichen. Bei Überschreitung gewisser Abweichungsgrenzen jedoch (Nicht-Einhaltung der Annahme 2) würde beispielsweise der Prozessor 112 nicht in der Lage sein, die Abweichungen auszugleichen.

Eine Herstellung der Multiaperturabbildungsvorrichtung 150 so, dass die soeben erwähnten Annahmen stets eingehalten werden, wie z.B. über einen gewissen Temperaturbereich hinweg, tendiert aber dazu, Herstellungskosten der Multiaperturabbildungsvorrichtung 150 zu erhöhen. Um dies zu vermeiden, umfasst die Multiaperturabbildungsvorrichtung 150 von Fig. 29a eine Einstelleinrichtung 116 zum kanalindividuellen Ändern einer relativen Lage zwischen dem Bildsensorbereich 58i eines jeweiligen optischen Kanals 16i, der Optik 64i des jeweiligen optischen Kanals 16i und der Strahlumlenkeinrichtung 18 bzw. des entsprechenden Segments 68i derselben oder zum kanalindividuellen Ändern einer optischen Eigenschaft 16i oder einer optischen Eigenschaft des die Umlenkung des Strahlengangs des jeweiligen optischen Kanals betreffenden Segments 68i der Strahlumlenkeinrichtung 18. Die Einstelleinrichtung 116 wird durch Vorgabewerte angesteuert bzw. führt die Einstellungsaufgaben gemäß den Vorgabewerten durch. Diese werden durch einen Speicher 118 und/oder eine Steuerung 122 bereitgestellt, die im Folgenden erläutert werden.

Die Vorrichtung 150 besitzt beispielsweise einen Speicher 118 mit eingespeicherten Vorgabewerten zur kanalindividuellen Ansteuerung der Einstelleinrichtung 116. Die Vorgabewerte können herstellerseitig vorgegeben und in den Speicher 118 eingespeichert sein.

Zusätzlich kann der Prozessor 112 beispielsweise, wie es in Fig. 29a mit einer gestrichelten Linie 124 angedeutet ist, über Auswertungen von aufgenommenen Bildern der Bildsensorbereiche 58a-f, wie z.B. Bildern, die von dem Prozessor 112 zusammenzufügen bzw. zu einem Gesamtbild zu verschmelzen sind, in der Lage sein, die eingespeicherten Vorgabewerte in dem Speicher 118 zu verbessern bzw. zu aktualisieren. Beispielsweise nimmt der Prozessor 112 eine Szene auf, indem die Multiaperturabbildungsvorrichtung 150 über die Einstelleinrichtung 116 mit aktuellen eingespeicherten Vorgabewerten eingestellt wird, wie es im Nachfolgenden noch näher beschrieben wird. Dazu werden die Vorgabewerte aus dem Speicher 118 gelesen und durch die Einstelleinrichtung 116 zur kanalindividuellen Einstellung verwendet. Der Prozessor 112 gewinnt durch Analyse der so aufgenommenen Bilder der Bildsensorbereiche 58a-f Informationen darüber, wie die eingespeicherten und soeben zur Aufnahme verwendeten Vorgabewerte in dem Speicher 118 modifiziert werden sollten, um bei der nächsten Aufnahme unter Verwendung dieser verbesserten bzw. aktualisierten Vorgabewerte bei der nächsten Aufnahme zu einer genaueren bzw. verbesserten Einhaltung obiger Annahmen zu führen.

Die eingespeicherten Vorgabewerte können einen vollständigen Satz von Einstellwerten aufweisen, d.h. eine Satz von Einstellwerten, um die Vorrichtung 150 komplett einzustellen. Sie sind wie oben beschrieben und unten weiter ausgeführt ausgewählt, um bestimmte kanalindividuelle Abweichungen der optischen Eigenschaften der Kanäle von einer Sollcharakteristik zu verringern oder zu beseitigen

Es kann sein, dass die Vorgabewerte mehrere Sätze von Einstellwerten, wie z.B. einen pro einer Folge von aneinander anschließenden Temperaturintervallen, aufweisen, so dass für eine Bildaufnahme stets der Satz von Einstellwerten verwendet wird, der für eine aktuelle Situation gerade geeignet ist. Dazu kann beispielsweise die Steuerung 122 einen Zugriff bzw. einen Nachschlag in die Tabelle von Zuordnungen zwischen Vorgabewertsätzen und unterschiedlichen vorbestimmten Situationen in dem Speicher 118 ausführen. Die Steuerung 122 erhält für diesen Zugriff Sensordaten, die die aktuelle Situation widerspiegeln, wie z.B. Daten betreffend Temperatur, Druck, Feuchte, Lage der Vorrichtung 150 im Raum und/oder eine momentane Beschleunigung oder momentane Drehrate der Vorrichtung 150, und bestimmt aus diesen Daten einen aus den mehreren Vorgabewertsätzen in dem Speicher 118, nämlich denjenigen, der der vorbestimmten Situation zugeordnet ist, die der aktuellen Situation, wie sie durch die Sensordaten beschrieben wird, am nächsten kommt. Sensordaten können auch aus den Bildsensordaten der Bildsensorbereiche selbst gewonnen sein. Beispielsweise wird durch die Steuerung 122 ein Satz ausgewählt, in dessen zugehöriges Temperaturintervall die aktuelle Temperatur fällt. Die für eine bestimmte Bildaufnahme durch die Einstelleinrichtung 116 verwendeten Vorgabewerte des ausgewählten Satzes aus dem Speicher 118 können dann wieder aktualisiert werden, wenn die optionale Rückkopplung 124 verwendet wird.

Die eingespeicherten Vorgabenwerte können zum Beispiel derart ausgebildet sein, dass ein Maß für eine Dispersion einer Verteilung eines oder mehrerer Eigenschaften unter den optischen Kanäle durch die Ansteuerung der Einstellvorrichtung mittels der eingespeicherten Vorgabenwerte reduziert wird, nämlich eine transversale Abweichung der Teilgesichtsfelder von einer regelmäßigen Verteilung der Teilgesichtsfelder, Brennweiten der Optiken, oder Schärfentiefentfernungen der optischen Kanäle.

Alternativ könnten die Vorgabewerte in der Steuerung 122 ohne einen Speicher 118 ermittelt werden, nämlich indem beispielsweise in der Steuerung 122 eine Abbildung von den aktuellen Sensordaten auf geeignete Vorgabewerte fest integriert ist. Die Abbildung kann durch einen funktionellen Zusammenhang zwischen Sensordaten und Vorgabewerten beschrieben sein. Der funktionelle Zusammenhang könnte durch Parameter adaptierbar sein. Die Parameter könnten über die Rückkopplung 124 adaptiert werden.

Der Speicher 118 kann beispielsweise ein nichtflüchtiger Speicher sein. Möglicherweise handelt es sich um einen Nurlesespeicher, aber ein wiederbeschreibbarer Speicher ist ebenfalls möglich. Die Steuerung 122 und der Prozessor 112 können in Software, Hardware oder in programmierbarer Hardware implementiert sein. Es kann sich um auf einem gemeinsamen Mikroprozessor ausgeführte Programme handeln. Die Sensoren zur Lieferung der Sensordaten für die Steuerung 122 können zur Vorrichtung 150 gehören, wie z.B. die Bildsensorbereiche, oder aber externe Komponenten sein, wie Komponenten des Geräts, in das die Vorrichtung eingebaut ist, wie es bezüglich nachfolgender Figuren noch erläutert wird.

Nachfolgend werden nun mögliche Ausgestaltungen für die Einstelleinrichtung 116 beschrieben. Die Einstelleinrichtung 116 von Fig. 29a kann dabei auf eine, mehrere oder alle der nachfolgend beschriebenen Ausgestaltungsvarianten zutreffen. Auf spezielle Kombinationen wird ebenfalls nachfolgend eingegangen.

In der gezeigten Variante umfasst die Einstelleinrichtung 116 beispielsweise einen Aktor 126i für jeden Kanal 16i, der die Optik 64i des entsprechenden Kanals 16i in axialer Richtung entlang der optischen Achse 17i bzw. längs des Strahlengangs und/oder transversal bzw. quer dazu entlang der z-Achse und/oder der y-Achse bewegt. Alternativ könnte der Aktor 126i beispielsweise auch den Bildsensor 12 oder einen einzelnen Bildsensorbereich 58i bewegen. Ganz allgemein könnte der Aktor 126i eine relative Bewegung von Bildsensorbereich 58i, Optik 64i und/oder dem entsprechenden Segment 64i der Strahlumlenkeinrichtung 24 bewirken.

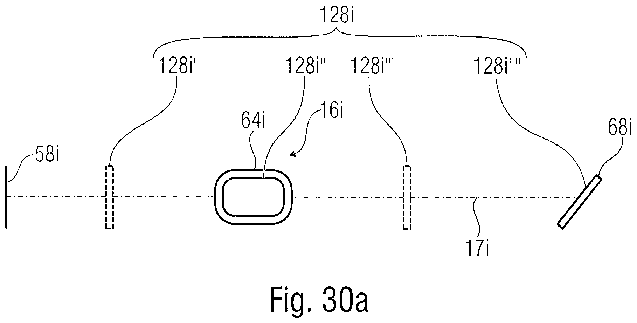

Gemäß einer Variante, auf die sich Fig. 30a bezieht, umfasst die Einstelleinrichtung 116 ein phasenänderndes optisches Element bzw. ein Phasenänderungselement 128i für jeden Kanal 16i, das, wie in Fig. 30a angedeutet, in die jeweilige Optik 64ai integriert sein kann (128i''), in das Segment 68i integriert sein kann (128i''''), zwischen Bildsensorbereich 58i und Optik 64i (128i') oder zwischen Optik 64i und Strahlumlenkeinrichtungssegment 68i (128i''') positioniert sein kann, wobei auch Kombinationen der vorerwähnten Möglichkeiten möglich sind. Das phasenändernde optische Element 128i kann beispielsweise eine ortsabhängige Änderung eines Brechungsindex, also eine lokale Verteilung desselben, bewirken, wie z.B. durch Flüssigkeitskristalle. Alternativ oder zusätzlich bewirkt das phasenändernde optische Element 128i eine Änderung der Form einer optisch aktiven Oberfläche, wie z.B. durch Nutzung von Piezos, die auf flexible, feste, transparente Materialien mechanisch einwirken und eine Verformung bewirken oder durch Nutzung des Elektrobenetzungseffekts. Das Phasenänderungselement 128i'' könnte beispielsweise den Brechungsindex der Optik 64i ändern. Alternativ könnte das Phasenänderungselement 128i'' eine Form einer optischen Linsenfläche der Optik 64i verändern und dadurch die effektive Brechkraft der Optik 64i verändern. Das Phasenänderungselement 128i'''' könnte beispielsweise auf einer optisch relevanten Oberfläche der Segmente 68i, wie z.B. auf der reflektiven Facette, ein sinusförmiges Phasengitter erzeugen, um eine virtuelle Verkippung der entsprechenden Oberfläche zu bewirken. Auf ähnliche Weise könnte das Phasenänderungselement 128i' oder Phasenänderungselement 128i'' die optische Achse umlenken.

In anderen Worten ausgedrückt, kann die Phasenänderung, die durch das phasenändernde optische Element 128i bewirkt wird, weitgehend rotationssymmetrisch, wie z.B. rotationssymmetrisch um die optische Achse 17i sein, und somit in dem Fall 128i'' beispielsweise eine Änderung der Brennweite der Optik 64i bewirken. Die Phasenänderung, die durch das Element 128i bewirkt wird, kann allerdings auch weitgehend linear sein, wie z.B. linear entlang der z-Achse oder linear entlang der y-Achse, um eine Änderung des Ablenkwinkels bzw. eine Ablenkung der optischen Achse 17i in der entsprechenden Richtung zu bewirken.

Die rotationssymmetrische Phasenänderung kann zur Fokussierung verwendet werden, und die lineare Phasenänderung zur Lagekorrektur des Teilgesichtsfeldes des entsprechenden optischen Kanals 16i.

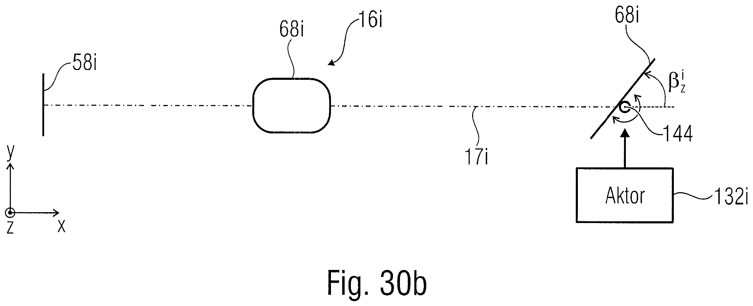

Gemäß einer weiteren Variante, die in Fig. 30b dargestellt ist, umfasst die Einstelleinrichtung 116 für jeden Kanal 16i einen Aktor 132i, der das Segment 68i, wie z.B. die reflektierende Facette des jeweiligen Kanals 16i, in seiner Winkelorientierung bezüglich der optischen Achse 17i ändert, d.h. den Anstellwinkel $\beta_x^i$. Dabei sei erwähnt, dass das Segment 68i nicht auf eine reflektierende Facette beschränkt ist. Jedes Segment 68i könnte auch als Prisma ausgebildet sein, das die Richtung der optischen Achse 17i in der yz-Ebene umlenkt, während das Prisma von dem Strahlengang des optischen Kanals 16i durchlaufen wird.

Zur Realisierung der relativen Bewegungen durch die Aktoren 126i bzw. 132i, d.h. zur Erzeugung der Bewegung der Optik 68i, die beispielsweise translatorisch ausgeführt sein kann, sowie zum Verkippen des Segments 68i durch den Aktor 132i und die z-Achse, kann beispielsweise ein pneumatischer, hydraulischer, piezoelektrischer, thermischer, elektrostatischer oder elektrodynamischer Antrieb oder ein DC- oder Schrittmotor oder wiederum ein Tauchspulenantrieb verwendet werden.

Zurückkehrend zur Fig. 29a ist mit gestrichelten Linien angedeutet, dass die Multiaperturabbildungsvorrichtung 150 optional zusätzlich zu der Einstelleinrichtung 116 einen oder mehrere Aktoren 134 zum Erzeugen einer kanalglobalen, d.h. für alle optischen Kanäle 16a-d gleichen, Relativbewegung zwischen Bildsensor 12, Optikarray 14 und Strahlumlenkeinrichtung 18 umfassen kann. Der eine oder die mehreren zusätzlichen Aktoren 134 kann/können dabei, wie es in Fig. 29a angedeutet ist, Teil einer optional vorhandenen Autofokussteuerung 136 (Fokusiereinrichtung) und/oder einer optional vorhandenen Bildstabilisierungssteuerung der Multiaperturabbildungsvorrichtung sein.

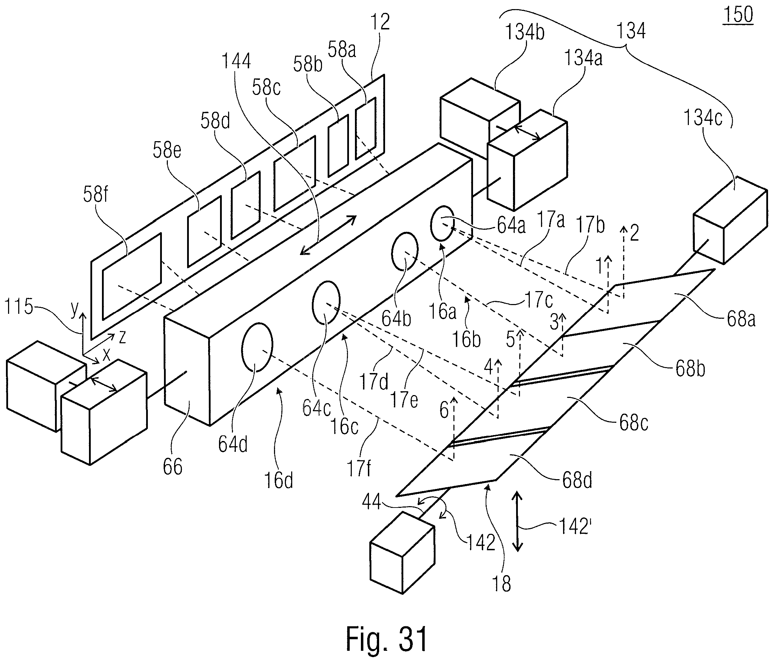

Ein konkretes Beispiel einer um zusätzliche Aktoren ergänzten Vorrichtung 150 von Fig. 29a ist in Fig. 31 gezeigt. Fig. 31 zeigt die Multiaperturabbildungsvorrichtung 150 von Fig. 29a, wobei die Optiken 64a-d der optischen Kanäle 16a-d über den gemeinsamen Träger 66 gegeneinander mechanisch fixiert sind. Über diesen gemeinsamen Halter ist es nun möglich, die Optiken 64a-d einer globalen für alle Kanäle gleichen Bewegung zu unterziehen, wie z.B. durch eine translatorische Bewegung des Trägers 66 in der z-Richtung, d.h. entlang der Zeilenerstreckungsrichtung des Arrays 14. Hierzu ist ein Aktor 134a vorgesehen. Der Aktor 134a erzeugt also eine translatorische Bewegung der Optiken 64a-d, die für alle optischen Kanäle 16a-d gleich ist, indem der Aktor 134a den gemeinsamen Träger 66 der translatorischen Bewegung entlang der x-Achse unterzieht. Hinsichtlich des Typs von Aktor 134a wird auf die Beispiele hingewiesen, auf die Bezug nehmend auf die Fig. 30a und 30b hingewiesen wurde. Ferner umfasst die Vorrichtung 150 einen Aktor 134b zum kanalglobalen, d.h. für alle optischen Kanäle 16a-d gleichen, Ändern des Bildsensor-58i-zu-Optik-64i-Abstands entlang der x-Achse bzw. entlang der optischen Achse 17i. Wie es in Fig. 31 angedeutet ist, unterzieht beispielsweise der Aktor 134b die Optiken 64a-d der translatorischen Bewegung entlang der z-Achse zur Änderung des Abstands von den zugeordneten Bildsensorabschnitten 58a-d nicht über den Träger 66, sondern auch via den Aktor 134a, der somit ebenfalls der translatorischen Bewegung entlang der x-Achse unterzogen wird und quasi als Aufhängung für den Träger 66 dient.

Zusätzlich umfasst die Vorrichtung 150 von Fig. 31 einen Aktor 134c zum Drehen der Strahlumlenkeinrichtung 18 um eine Achse, die parallel zur z-Achse verläuft und in oder nicht weit entfernt von der Ebene liegt, in welcher die optischen Achsen 17a-d verlaufen. Auch bezüglich der Aktoren 134b und 134c wird bezüglich möglicher Implementierungsbeispiele auf die Auflistung von Beispielen verwiesen, die Bezug nehmend auf die Fig. 30a und 30b im Vorhergehenden geliefert wurde. Die Rotationsbewegung bzw. Drehbewegung, die durch den Aktor 134c auf die Strahlumlenkeinrichtung 18 ausgeübt wird, wirkt sich auf die Segmente 68a-d der Strahlumlenkeinrichtung 18 für alle Kanäle 16a-d gleichermaßen aus, d.h. ist kanalglobal.

Über den Aktor 134b ist nun die Autofokussteuerung 136 beispielsweise in der Lage, den Fokus einer Aufnahme durch die Vorrichtung 150 vermittels der Kanäle 16a-d im kanalglobalen Sinne zu steuern. Die Bildstabilisierungssteuerung 138 ist in der Lage, das Gesamtgesichtsfeld 72 vermittels des Aktors 134c in einer ersten Richtung 142 und vermittels des Aktors 134a in einer dazu senkrechten Richtung 144 vor Verwacklungen durch einen Benutzer beispielsweise zu stabilisieren. Die erste Richtung 142 kann durch eine Rotationsbewegung um die Rotationsachse 44 erhalten werden. Wie es durch die erste Richtung 142' angedeutet ist, kann alternativ oder zusätzlich auch eine translatorische Bewegung der Strahlumlenkeinrichtung 18 und/oder des Arrays 14 von dem Aktor 134 erzeugt werden. Die Richtungen 142, 142' und 144 können dabei parallel zu den Bildachsen sein, in einer Ebene der Richtung oder diesen entsprechen. Hierin beschriebene Bildstabilisatoren können ausgebildet sein, um für zwei, eine Vielzahl oder alle Strahlengänge der optischen Kanäle gemeinsam zu wirken. Das bedeutet, auf eine kanalindividuelle Bildstabilisierung kann verzichtet werden, was vorteilhaft ist.

Beispielsweise weist dazu die Vorrichtung 150 von Fig. 29a für jeden Kanal 16a-d einen Aktor, etwa einen Aktor 126i für jeden Kanal 16i auf, um die Bildsensorbereiche 58a-d kanalindividuell einer translatorischen Bewegung entlang der z-Achse und/oder entlang der y-Achse zu unterziehen, um beispielsweise Herstellungsungenauigkeiten oder temperaturbedingte Drifts der Teilgesichtsfelder innerhalb des Gesamtgesichtsfeldes auszugleichen. Die Vorrichtung 150 von Fig. 29a könnte alternativ oder zusätzlich einen Aktor 128i'' aufweisen, um Brennweitenunterschiede der Optiken 64a-d, die herstellungsbedingt unerwünschter Weise aufgetreten sind, auszugleichen. Zusätzlich oder alternativ kann die Vorrichtung 150 von Fig. 29a einen Aktor 128i''' aufweisen, um herstellungsbedingt oder temperaturbedingt entstandene Abweichungen der relativen Neigungen der Segmente 68a-d untereinander so zu kompensieren, dass die relativen Neigungen zu der gewünschten Abdeckung des Gesamtgesichtsfeldes 72 durch die Teilgesichtsfelder 74a-d führen. Zusätzlich oder alternativ kann die Vorrichtung 150 dann schließlich noch Aktoren des Typs 128i' bzw. 128i''' aufweisen.

Noch einmal zusammenfassend kann die Vorrichtung 150 also einen Aktor 134c aufweisen, der ausgebildet ist, um die Strahlumlenkeinrichtung 18 um eine Achse zu drehen, die parallel zu der Zeilenerstreckungsrichtung z des Arrays 14 ist. Die Drehachse liegt beispielsweise in der Ebene der optischen Achsen 17a-f oder davon weniger als ein Viertel eines Durchmessers der Optiken 64a-d entfernt. Alternativ wäre es natürlich auch möglich, dass die Drehachse weiter entfernt liegt, wie z.B. weniger als ein Optikdurchmesser oder weniger als vier Optikdurchmesser. Der Aktor 134c kann beispielsweise vorgesehen sein, um die Strahlumlenkeinrichtung 18 mit kurzer Ansprechzeit in einem lediglich kleinen Winkelbereich, wie z.B. innerhalb einer Spanne von weniger als 5° oder weniger als 10° zu drehen, um Verwacklungen der Multiaperturabbildungsvorrichtung 150 durch beispielsweise einen Benutzer während einer Aufnahme auszugleichen. Der Aktor 134c würde in diesem Fall beispielsweise von der Bildstabilisierungssteuerung 138 angesteuert werden.

Alternativ oder zusätzlich könnte Aktor 134c ausgebildet sein, um mit größeren Winkelverstellungen das Gesamtgesichtsfeld 72, das durch die Gesamtabdeckung der Teilgesichtsfelder 74a-f (Fig. 29a) definiert wird, in seiner Richtung zu verändern. Dabei wäre es ferner möglich, dass durch Rotation der Strahlumlenkeinrichtung 18 auch Ablenkungen erzielt werden, bei denen das Gesamtgesichtsfeld in der entgegengesetzten Richtung relativ zu der Vorrichtung 150 angeordnet ist, indem beispielsweise die Strahlumlenkeinrichtung 18 als ein beidseitig reflektives Spiegelarray ausgebildet ist.

Wiederum alternativ oder zusätzlich kann die Vorrichtung 150 einen Aktor 134a aufweisen, der ausgebildet ist, um die Optiken 64a-d vermittels des Substrats 66 bzw. das Substrat 66 selbst und damit die Optiken 64a-d translatorisch entlang der Zeilenerstreckungsrichtung zu bewegen. Der Aktor 134a könnte beispielsweise ebenfalls durch die vorerwähnte Bildstabilisierungssteuerung angesteuert werden, um durch die Bewegung 96 entlang der Zeilenerstreckungsrichtung eine Bildstabilisierung quer zu der Bildstabilisierung zu erzielen, die durch die Rotation der Spiegelumlenkvorrichtung 18 verwirklicht wird.

Weiterhin kann zusätzlich oder alternativ die Vorrichtung 150 einen Aktor 134b zum Verändern des bildseitigen Abstands zwischen Bildsensor 12 und Optiken 64a-d bzw. zwischen Bildsensor 12 und Körper 66 aufweisen, um eine Schärfentiefeneinstellung zu erzielen, vgl. Fig. 26. Die Einrichtung 98 kann durch eine manuelle Benutzersteuerung oder durch eine Autofokussteuerung der Vorrichtung 150 gesteuert werden.

Der Aktor 134a dient also als Aufhängung des Substrats 66 und ist vorzugsweise, wie in Fig. 29a angedeutet seitlich neben dem Substrat 66 entlang der Zeilenerstreckungsrichtung angeordnet, um die Bauhöhe nicht zu erhöhen. Auch für die Aktoren 134b und 134c gilt, dass selbige vorzugsweise in der Ebene der optischen Strahlengänge angeordnet sind, um die Bauhöhe nicht zu erhöhen.

Es sei darauf hingewiesen, dass die Optiken 64a-d nicht nur untereinander, wie z.B. über das schon erwähnte transparente Substrat, sondern auch relativ zu der Strahlumlenkeinrichtung in konstanter relativer Lage gehaltert sein können, wie z.B. über einen geeigneten Rahmen, der vorzugsweise die Bauhöhe nicht vergrößert und deshalb vorzugsweise in der Ebene der Komponenten 12, 14 und 66 bzw. in der Ebene der Strahlengänge verläuft. Die Konstanz der relativen Lage könnte sich auf den Abstand zwischen Optiken und Strahlumlenkeinrichtung entlang der optischen Achsen beschränken, so dass der Aktor 134b beispielsweise die Optiken 64a-d zusammen mit der Strahlumlenkeinrichtung 18 translatorisch entlang der optischen Achsen bewegt. Der Optiken-zu-Strahlumlenkeinrichtung-Abstand könnte auf einen minimalen Abstand eingestellt sein, so dass der Strahlengang der Kanäle nicht durch die Segmente der Strahlumlenkeinrichtung 18 lateral eingeschränkt wird, was die Bauhöhe verringert, da andernfalls die Segmente 68i hinsichtlich der lateralen Ausdehnung für den größten Optiken-zu-Strahlumlenkeinrichtung-Abstand dimensioniert sein müssten, um den Strahlengang nicht einzuschneiden. Zusätzlich könnte die Konstanz der relativen Lage bedeuten, dass vorerwähnter Rahmen die Optiken und die Strahlumlenkeinrichtung entlang der z-Achse starr zueinander haltert, sodass der Aktor 134a die Optiken 64a-d zusammen mit der Strahlumlenkeinrichtung translatorisch entlang der Zeilenerstreckungsrichtung bewegen würde.

Die oben beschriebene Strahlumlenkeinrichtung 18 zum Umlenken des Strahlengangs der optischen Kanäle ermöglicht zusammen mit dem Aktor 134c zur Erzeugung der Rotationsbewegung der Strahlumlenkeinrichtung 18 und dem Aktor 134a einer optischen Bildstabilisierungssteuerung der Multiaperturabbildungsvorrichtung 150 eine Bild- bzw. Gesamtbildfeldstabilisierung in zwei Dimensionen, nämlich durch die translatorische Bewegung des Substrats 66 eine Bildstabilisierung entlang einer ersten Bildachse, die im Wesentlichen parallel zur Zeilenerstreckungsrichtung verläuft, und durch die Erzeugung der Rotationsbewegung der Strahlumlenkeinrichtung 18 eine Bildstabilisierung entlang einer zweiten Bildachse, die im Wesentlichen parallel zu den optischen Achsen vor bzw. ohne Strahlumlenkung verläuft, oder - betrachtet man die umgelenkten optischen Achsen - senkrecht zu den optischen Achsen und der Zeilenerstreckungsrichtung. Zusätzlich kann die beschriebene Anordnung eine translatorische Bewegung der im angesprochenen Rahmen fixierten Strahlumlenkeinrichtung und des Arrays 14 senkrecht zur Zeilenerstreckungsrichtung bewirken, wie z.B. durch den beschriebenen Aktor 54, die für die Realisierung einer Fokuseinstellung und damit einer Autofokusfunktion genutzt werden kann.

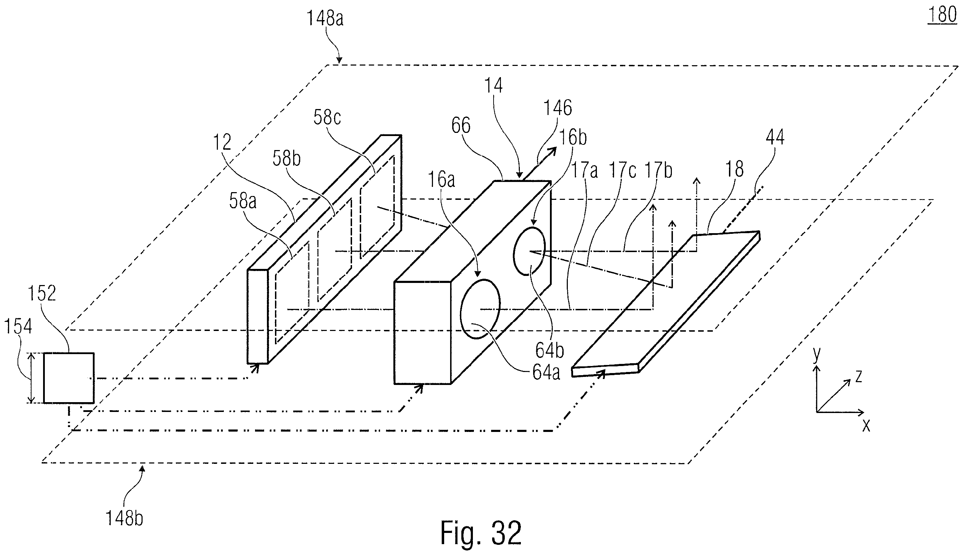

Fig. 32 zeigt eine schematische Ansicht einer Multiaperturabbildungsvorrichtung 180 zur Verdeutlichung einer vorteilhaften Anordnung von Aktoren, etwa zur Bildstabilisierung und/oder zur Einstellung eines Fokus. Der Bildsensor 12, das Array 14 und die Strahlumlenkeinrichtung 18 können einen Quader im Raum aufspannen. Der Quader kann auch als virtueller Quader verstanden werden und kann beispielsweise ein minimales Volumen und insbesondere eine minimale senkrechte Ausdehnung entlang einer Richtung parallel zu der y-Richtung bzw. einer Dickenrichtung aufweisen und den Bildsensor 12, das einzeilige Array 14 und die Strahlumlenkeinrichtung 18 umfassen. Das minimale Volumen kann auch so verstanden werden, dass es einen Quader beschreibt, der durch die Anordnung und/oder betriebsgemäße Bewegung des Bildsensors 12, des Arrays 14 und/oder der Strahlumlenkeinrichtung 18 aufgespannt ist. Das Array 14 kann eine Zeilenerstreckungsrichtung 146 aufweisen, entlang derer die optischen Kanäle 16a und 16b nebeneinander, ggf. parallel zueinander, angeordnet sind. Die Zeilenerstreckungsrichtung 146 kann ortsfest im Raum angeordnet sein.

Der virtuelle Quader kann zwei Seiten aufweisen, die gegenüberliegend parallel zueinander, parallel zu der Zeilenerstreckungsrichtung 146 des einzeiligen Arrays 14 sowie parallel zu einem Teil des Strahlengangs 17a und/oder 17b und/oder 17c, d.h., die Strahlengänge 17b und 17c verlaufen mit einem gleichem Abstand zu den Seiten, der optischen Kanäle 16a bzw. 16b zwischen dem Bildsensor 12 und der Strahlumlenkeinrichtung 18 ausgerichtet sind. Vereinfacht, jedoch ohne einschränkende Wirkung, können dies beispielsweise eine Oberseite und eine Unterseite des virtuellen Quaders sein. Die zwei Seiten können eine erste Ebene 148a und eine zweite Ebene 148b aufspannen. D.h., die beiden Seiten des Quaders können jeweils Teil der Ebene 148a bzw. 148b sein. Weitere Komponenten der Multiaperturabbildungsvorrichtung können vollständig, zumindest aber teilweise innerhalb des Bereichs zwischen den Ebenen 148a und 148b angeordnet sein, so dass ein Bauraumbedarf der Multiaperturabbildungsvorrichtung 180 entlang einer Richtung parallel zu einer Oberflächennormalen der Ebenen 148a und/oder 148b gering ist, was vorteilhaft ist. Ein Volumen der Multiaperturabbildungsvorrichtung kann einen geringen oder minimalen Bauraum zwischen den Ebenen 148a und 148b aufweisen. Entlang der lateralen Seiten oder Erstreckungsrichtungen der Ebenen 148a und/oder 148b kann ein Bauraum der Multiaperturabbildungsvorrichtung groß oder beliebig groß sein. Das Volumen des virtuellen Quaders ist bspw. von einer Anordnung des Bildsensors 12, des einzeiligen Arrays 14 und der Strahlumlenkeinrichtung 18 beeinflusst, wobei die Anordnung dieser Komponenten gemäß der hierin beschriebenen Ausführungsbeispiele so erfolgen kann, dass der Bauraum dieser Komponenten entlang der Richtung senkrecht zu den Ebenen und mithin der Abstand der Ebenen 148a und 148b zueinander gering oder minimal wird. Gegenüber anderen Anordnungen der Komponenten kann das Volumen und/oder der Abstand anderer Seiten des virtuellen Quaders vergrößert sein.

Die Multiaperturabbildungsvorrichtung 180 umfasst eine Aktoreinrichtung 152 zum Erzeugen einer Relativbewegung zwischen dem Bildsensor 12, dem einzeiligen Array 14 und der Strahlumlenkeinrichtung 18. Die Aktoreinrichtung 152 ist zumindest teilweise zwischen den Ebenen 148a und 148b angeordnet. Die Aktoreinrichtung 152 kann ausgebildet sein, um zumindest eines aus dem Bildsensor 12, dem einzeiligen Array 14 oder der Strahlumlenkeinrichtung 18 rotatorisch um zumindest eine Achse und/oder translatorisch entlang einer oder mehrerer Richtungen oder zu bewegen. Hierfür kann die Aktoreinrichtung 152 zumindest einen Aktor aufweisen, etwa den Aktor 128i, 132i und/oder 134, zum kanalindividuellen Ändern einer relativen Lage zwischen dem Bildsensorbereich 58i eines jeweiligen optischen Kanals 16i, der Optik 64i des jeweiligen optischen Kanals 16i und der Strahlumlenkeinrichtung 18 bzw. des entsprechenden Segments 68i derselben oder zum kanalindividuellen Ändern einer optischen Eigenschaft 16i oder einer optischen Eigenschaft des die Umlenkung des zumindest einen Strahlengangs des jeweiligen optischen Kanals betreffenden Segments 68i der Strahlumlenkeinrichtung 18. Alternativ oder zusätzlich kann die Aktoreinrichtung einen Autofokus und/oder eine optische Bildstabilisierung implementieren, wie es vorangehend beschrieben ist.

Die Aktoreinrichtung 152 kann eine Abmessung oder Ausdehnung 154 parallel zu der Dickenrichtung aufweisen. Ein Anteil von höchstens 50 %, höchstens 30 % oder höchstens 10 % der Abmessung 154 kann ausgehend von einem Bereich zwischen den Ebenen 148a und 148b über die Ebene 148a und/oder 148b hinausragen oder aus dem Bereich herausragen. Das bedeutet, dass die Aktoreinrichtung 152 höchstens unwesentlich über die Ebene 148a und/oder 148b hinausragt. Gemäß Ausführungsbeispielen ragt die Aktoreinrichtung 152 nicht über die Ebenen 148a und 148b hinaus. Vorteilhaft daran ist, dass eine Ausdehnung der Multiaperturabbildungsvorrichtung 180 entlang der Dickenrichtung durch die Aktoreinrichtung 152 nicht vergrößert wird.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Multiaperturabbildungsvorrichtung (11; 1000; 4000, 4000', 7000, 7000, 8000, 10000, 10000', 11000, 13000; 13000') mit:

   zumindest einem Bildsensor (12; 12a-h); und einem Array (14) von nebeneinander angeordneten optischen Kanälen (16a-h), wobei jeder optische Kanal (16a-d) eine Optik (64a-h) zur Abbildung zumindest eines Teilbereichs (74a-d) eines Objektbereichs (72) auf einen Bildsensorbereich des Bildsensors (12; 12a-h) aufweist;

   wobei eine erste Optik (64a) eines ersten optischen Kanals (16a) konfiguriert ist, um durch eine gemeinsame Linse einen ersten Teilbereich (74a) des Objektbereichs (72) auf einen ersten Bildsensorbereich (58a) und einen zweiten Teilbereich (74b) des Objektbereichs (72) auf einen zweiten Bildsensorbereich (58b) abzubilden, der von dem ersten Bildsensorbereich verschieden ist und der benachbart zu dem ersten Bildsensorbereich angeordnet ist;

   wobei eine zweite Optik (64b) eines zweiten optischen Kanals (16b) konfiguriert ist, um zumindest einen dritten Teilbereich (74c) des Objektbereichs (72) auf einen dritten Bildsensorbereich (58c) abzubilden; und

   wobei der erste Teilbereich (74a) und der zweite Teilbereich (74b) in dem Objektbereich (72) disjunkt sind und entfernt zueinander sind , und wobei der dritte Teilbereich (74c) mit dem ersten Teilbereich (74a) unvollständig überlappt;

   wobei eine Gesamtzahl der optischen Kanäle (16a-h) konfiguriert ist, um den Objektbereich vollständig zu übertragen;

   wobei der dritte Teilbereich in dem Objektbereich zwischen dem ersten Teilbereich und dem zweiten Teilbereich angeordnet ist;

   wobei zwischen dem ersten Bildsensorbereich (58a) und dem zweiten Bildsensorbereich (58b) eine bautechnische Lücke angeordnet ist; und

   wobei der erste Bildsensorbereich benachbart zu dem zweiten Bildsensorbereich angeordnet ist, und der dritte Bildsensorbereich benachbart zu dem ersten oder zweiten Bildsensorbereich angeordnet ist.

2. Multiaperturabbildungsvorrichtung gemäß Anspruch 1, bei der der dritte Teilbereich (74c) ferner mit dem zweiten Teilbereich (74b) unvollständig überlappt.

3. Multiaperturabbildungsvorrichtung gemäß Anspruch 1 oder 2, bei der zwischen dem ersten Bildsensorbereich (58a) und dem zweiten Bildsensorbereich (58b) eine zumindest teilweise opake Struktur (1004a-b) zur Verringerung von Falschlicht zwischen dem ersten Bildsensorbereich (58a) und dem zweiten Bildsensorbereich (58b) angeordnet ist.

4. Multiaperturabbildungsvorrichtung gemäß einem der vorangehenden Ansprüche, die ferner eine erste Teilbereichsoptik (1006a) aufweist, die ausschließlich dem ersten Teilbereich (74a) zugeordnet ist und die Abbildung des ersten Teilbereichs (74a) auf den ersten Bildsensorbereich (58a) beeinflusst.

5. Multiaperturabbildungsvorrichtung gemäß einem der vorangehenden Ansprüche, bei der die zweite Optik (64b) konfiguriert ist, um einen vierten Teilbereich (74d) des Objektbereichs (72) auf einen vierten Bildsensorbereich (58d) abzubilden; wobei der dritte Teilbereich (74c) und der vierte Teilbereich (74d) in dem Objektbereich (72) disjunkt sind.

6. Multiaperturabbildungsvorrichtung gemäß einem der vorangehenden Ansprüche, bei der die erste Optik (64a) des ersten Kanals (16a) oder eine Kombination der ersten Optik (64a) und einer ersten Teilbereichsoptik (1006a), die ausschließlich dem ersten Teilbereich (74a) zugeordnet ist, mit von NULL steigendem Feldwinkel (w) eine mit einer ersten Änderungssteigung (dV/dw) der Verzeichnung (V) betragsmäßig zunehmend negative Verzeichnung (V) aufweist, bis ein erster Feldwinkelschwellwert ($w_1$) erreicht ist, wobei eine zweite Änderungssteigung der Verzeichnung (V) bei über den Feldwinkelschwellwert ($w_1$) zunehmenden Feldwinkel (w) geringer ist, als die erste Änderungssteigung (dV/dw).

7. Multiaperturabbildungsvorrichtung gemäß einem der vorangehenden Ansprüche, bei der das Array (14) zum Erfassen des Objektbereichs (72) einzeilig gebildet ist.

8. Multiaperturabbildungsvorrichtung gemäß einem der vorangehenden Ansprüche, bei der die erste Optik (64a) des ersten Kanals (16a) oder eine Kombination der ersten Optik (64a) und einer ersten Teilbereichsoptik (1006a), die ausschließlich dem ersten Teilbereich (74a) zugeordnet ist, eine Spiegelsymmetrie zu einer Ebene (1008), die die optischen Achse (1012) der von den Teilbereichsoptiken (1006a-b) gemeinsam genutzten Optik (64a) enthält und senkrecht zu einer Zeilenstreckungsrichtung (146) des Arrays (14) verläuft, aufweist, so dass eine Brechung von Licht durch die erste Optik (64a) symmetrisch für einen Strahlengang (17a) hin zu dem ersten Teilbereich (74a) und einen Strahlengang (17b) hin zu dem zweiten Teilbereich (74b) ist, wobei die Symmetrie in Abwesenheit einer Rotationssymmetrie bezüglich der der optischen Achse (1012) vorliegt.

9. Multiaperturabbildungsvorrichtung gemäß einem der vorangehenden Ansprüche, mit einer Strahlumlenkeinrichtung (18), die zwischen dem Array (14) und dem Objektbereich (72) angeordnet ist, und ausgebildet ist, um einen Strahlengang (17a-d) der optischen Kanäle (64a-d) umzulenken.

10. Multiaperturabbildungsvorrichtung gemäß Anspruch 9, bei der die Strahlumlenkeinrichtung (18) als Array von Facetten (68a-d; 68i), die entlang einer Zeilenerstreckungsrichtung (z; 146) des Arrays (14) von optischen Kanälen (16a-d; 16N) angeordnet sind, gebildet ist, und bei der jedem optischen Kanal (16a-d) eine Facette zugeordnet ist.

11. Multiaperturabbildungsvorrichtung gemäß Anspruch 9 oder 10, bei der die Strahlumlenkeinrichtung (18) als Array von Facetten (68a-d; 68i), die entlang einer Zeilenerstreckungsrichtung (z; 146) des Arrays (14) von optischen Kanälen (16a-d; 16N) angeordnet sind, gebildet ist, und ein erster Strahlengang eines ersten optischen Kanals (16a-d) und mindestens ein weiterer Strahlengang eines weiteren optischen Kanals (16a-d) einer Facette zugeordnet sind.

12. Multiaperturabbildungsvorrichtung gemäß einem der vorangehenden Ansprüche, bei der jeder Teilbereich des Objektbereichs durch zumindest zwei optische Kanäle auf zumindest zwei Bildsensorbereiche abgebildet wird.

13. Multiaperturabbildungsvorrichtung gemäß einem der vorangehenden Ansprüche, bei dem eine Gesamtmenge der optischen Kanäle des Arrays (14) eine Gesamtmenge von Teilbereichen des Objektbereichs auf eine Gesamtmenge von Bildsensorbereichen des zumindest einen Bildsensors (12; 12a-h) abbildet und wobei die Gesamtmenge der Teilbereiche den zu erfassenden Objektbereich vollständig abbildet.

14. Abbildungssystem (9000) mit zumindest einer ersten und mindestens einer zweiten Multiaperturabbildungsvorrichtung gemäß einem der Ansprüche 1 bis 13.

15. Verfahren zum Erfassen eines Objektbereichs mit einem Bildsensor (12) mit folgenden Schritten:

Abbilden eines Objektbereichs mit einem Array (14) von nebeneinander angeordneten optischen Kanälen, wobei jeder optische Kanal (16a-d) eine Optik zur Abbildung zumindest eines Teilbereichs eines Objektbereichs auf einen Bildsensorbereich des Bildsensors (12; 12a-h) aufweist;

Abbilden, durch eine gemeinsame Linse, eines ersten Teilbereichs des Objektbereichs auf einen ersten Bildsensorbereich und Abbilden eines zweiten Teilbereichs des Objektbereichs auf einen zweiten Bildsensorbereich, der von dem ersten Bildsensorbereich verschieden ist durch eine erste Optik eines ersten optischen Kanals (16a-d); und

Abbilden eines dritten Teilbereichs des Objektbereichs durch eine zweite Optik eines zweiten optischen Kanals (16a-d);

so dass der erste Teilbereich und der zweite Teilbereich in dem Objektbereich disjunkt sind und entfernt zueinander sind dazwischen aufweisen, und so dass der dritte Teilbereich mit dem ersten Teilbereich unvollständig überlappt;

so dass eine Gesamtzahl der optischen Kanäle (16a-h) konfiguriert ist, um das Objektbereich vollständig zu übertragen;

so dass der dritte Teilbereich in dem Objektbereich zwischen dem ersten Teilbereich und dem zweiten Teilbereich angeordnet ist;

so dass zwischen dem ersten Bildsensorbereich (58a) und dem zweiten Bildsensorbereich (58b) eine bautechnische Lücke angeordnet ist; und

so dass der erste Bildsensorbereich benachbart zu dem zweiten Bildsensorbereich angeordnet ist, und der dritte Bildsensorbereich benachbart zu dem ersten oder zweiten Bildsensorbereich angeordnet ist.

**Claims**

1. Multi-aperture imaging device (11; 1000; 4000, 4000', 7000, 7000, 8000, 10000, 10000', 11000, 13000; 13000') comprising:

at least one image sensor (12; 12a-h); and an array (14) of juxtaposed optical channels (16a-h), wherein each optical channel (16a-d) comprises optics (64a-h) for projecting at least one partial area (74a-d) of an object area (72) on an image sensor area of the image sensor (12; 12a-h);

wherein a first optics (64a) of a first optical channel (16a) is configured to project, through a shared lens, a first partial area (74a) of the object area (72) on a first image sensor area (58a) and a second partial area (74b) of the object area (72) on a second image sensor area (58b), which is different from the first image sensor area and is arranged adjacent to the first image sensor area;

wherein a second optics (64b) of a second optical channel (16b) is configured to project at least a third partial area (74c) of the object area (72) on a third image sensor area (58c); and wherein the first partial area (74a) and the second partial area (74b) are disjoint in the object area (72) and are distant from each other, and wherein the third partial area (74c) overlaps incompletely with the first partial area (74a); wherein a total number of the optical channels (16a-h) are configured to fully transfer the object area; wherein the third partial area is arranged within the object area between the first partial area and the second partial area; wherein a structural gap is arranged between the first image sensor area (58a) and the second image sensor area (58b); and wherein the first image sensor area is arranged adjacent to the second image sensor area, and the third image sensor area is arranged adjacent to the first or second image sensor areas.

2. Multi-aperture imaging device according to claim 1, wherein the third partial area (74c) further overlaps incompletely with the second partial area (74b).

3. Multi-aperture imaging device according to claim 1 or 2, wherein an at least partly opaque structure (1004a-b) for reducing stray light between the first image sensor area (58a) and the second image sensor area (58b) is arranged between the first image sensor area (58a) and the second image sensor area (58b).

4. Multi-aperture imaging device according to one of the preceding claims, further comprising first partial area optics (1006a) that is exclusively allocated to the first partial area (74a) and influences the projection of the first partial area (74a) on the first image sensor area (58a).

5. Multi-aperture imaging device according to one of the preceding claims, wherein the second optics (64b) is configured to project a fourth partial area (74d) of the object area (72) on a fourth image sensor area (58d); wherein the third partial area (74c) and the fourth partial area (74d) are disjoint in the object area (72).

6. Multi-aperture imaging device according to one of the preceding claims, wherein the first optics (64a) of the first channel (16a) or a combination of the first optics (64a) and a first partial area optics (1006a) that is exclusively allocated to the first partial area (74a) comprises a negative distortion (V) increasing according to amount from a field angle (w) increasing from ZERO with a first gradient of change (dV/dw) of the distortion (V) until a first field angle threshold ($w_1$) is reached, wherein a second gradient of change of the distortion (V) with a field angle (w) increasing beyond the field angle threshold ($w_1$) is lower than the first gradient of change (dV/dw).

7. Multi-aperture imaging device according to one of the preceding claims, wherein the array (14) for capturing the object area (72) is formed in a single line.

8. Multi-aperture imaging device according to one of the preceding claims, wherein the first optics (64a) of the first channel (16a) or a combination of the first optics (64a) and a first partial area optics (1006a) that is exclusively allocated to the first partial area (74a) includes mirror symmetry to a plane (1008) including the optical axis (1012) of the optics (64a) shared by the partial area optics (1006a-b) and running perpendicular to a line-extension direction (146) of the array (14), such that refraction of light through the first optics (64a) is symmetrical for an optical path (17a) towards the first partial area (74a) and an optical path (17b) towards the second partial area (74b), wherein the symmetry exists in absence of rotational symmetry with respect to the optical axis (1012).

9. Multi-aperture imaging device according to one of the preceding claims comprising beam-deflecting means (18) that is arranged between the array (14) and the object area (72) and that is configured to deflect an optical path (17a-d) of the optical channels (64a-d).

10. Multi-aperture imaging device according to claim 9, wherein the beam-deflecting means (18) is formed as an array of facets (68a-d; 68i) that are arranged along a line-extension direction (z; 146) of the array (14) of optical channels (16a-d; 16N), and wherein one facet is allocated to each optical channel (16a-d).

11. Multi-aperture imaging device according to claim 9 or 10, wherein the beam-deflecting means (18) is formed as an array of facets (68a-d; 68i) that are arranged along a line-extension direction (z; 146) of the array (14) of optical channels (16a-d; 16N), and a first optical path of a first optical channel (16a-d) and at least a further optical path of a further optical channel (16a-d) are allocated to a facet.

12. Multi-aperture imaging device according to one of the preceding claims, wherein each partial area of the object area is projected on at least two image sensor areas by at least two optical channels.

13. Multi-aperture imaging device according to one of the preceding claims, wherein a total amount of the optical channels of the array (14) projects a total amount of partial areas of the object area on a total amount of image sensor areas of the at least one image sensor (12; 12a-h) and wherein the total amount of the partial areas completely projects the object area to be captured.

14. Imaging system (9000) having at least a first and at least a second multi-aperture imaging device according to one of claims 1 to 13.

15. Method for capturing an object area with an image sensor (12), comprising:

projecting an object area with an array (14) of juxtaposed optical channels, wherein each optical channel (16a-d) comprises optics for projecting at least one partial area of an object area on an image sensor area of the image sensor (12; 12a-h);

projecting, through a shared lens, a first partial area of the object area on a first image sensor area and projecting a second partial area of the object area on a second image sensor area, which is different from the first image sensor area, by a first optics of a first optical channel (16a-d); and

projecting a third partial area of the object area by a second optics of a second optical channel (16a-d);

such that the first partial area and the second partial area are disjoint in the object area and are distant from each other, and such that the third partial area incompletely overlaps with the first partial area;

such that a total number of the optical channels (16a-h) are configured to fully transfer the object area;

such that the third partial area is arranged within the object area between the first partial area and the second partial area;

such that a structural gap is arranged between the first image sensor area (58a) and the second image sensor area (58b); and

such that the first image sensor area is arranged adjacent to the second image sensor area, and the third image sensor area is arranged adjacent to the first or second image sensor areas.

**Revendications**

1. Dispositif de reproduction à ouvertures multiples (11; 1000; 4000, 4000', 7000, 7000, 8000, 10000, 10000', 11000, 13000; 130001 avec:

au moins un capteur d'image (12; 12a à h); et
un réseau (14) de canaux optiques (16a à h) disposés l'un à côté de l'autre, où chaque canal optique (16a à d) présente une optique (64a à h) destinée à reproduire au moins une zone partielle (74a à d) d'une zone d'objet (72) sur une zone de capteur d'image du capteur d'image (12; 12aà h);

dans lequel une première optique (64a) d'un premier canal optique (16a) est configurée pour reproduire, par une lentille commune, une première zone partielle (74a) de la zone objet (72) sur une première zone de capteur d'image (58a) et une deuxième zone partielle (74b) de la zone objet (72) sur une deuxième zone de capteur d'image (58b) qui est différente de la première zone de capteur d'image et qui est disposée adjacente à la première zone de capteur d'image;

dans lequel une deuxième optique (64b) d'un deuxième canal optique (16b) est configurée pour reproduire au moins une troisième zone partielle (74c) de la zone objet (72) sur une troisième zone de capteur d'image (58c); et

dans lequel la première zone partielle (74a) et la deuxième zone partielle (74b) sont disjointes et éloignées l'une de l'autre dans la zone d'objet (72), et dans lequel la troisième zone partielle (74c) vient en chevauchement incomplet avec la première zone partielle (74a);

dans lequel un nombre total des canaux optiques (16a à h) est configuré pour transmettre complètement la zone d'objet;

dans lequel la troisième zone partielle est disposée dans la zone d'objet entre la première zone partielle et la deuxième zone partielle;

dans lequel est disposé, entre la première zone de capteur d'image (58a) et la deuxième zone de capteur d'image (58b), un espace vide de technique de construction; et

dans lequel la première zone de capteur d'image est disposée adjacente à la deuxième zone de capteur d'image, et la troisième zone de capteur d'image est disposée adjacente à la première ou à la deuxième zone de capteur d'image.

2. Dispositif de reproduction à ouvertures multiples selon la revendication 1, dans lequel la troisième zone partielle (74c) vient par ailleurs en chevauchement incomplet avec la deuxième zone partielle (74b).

3. Dispositif de reproduction à ouvertures multiples selon la revendication 1 ou 2, dans lequel est disposée, entre la première zone de capteur d'image (58a) et la deuxième zone de capteur d'image (58b), une structure au moins partiellement opaque (1004a-b) destinée à réduire la fausse lumière entre la première zone de capteur d'image (58a) et la deuxième zone de capteur d'image (58b).

4. Dispositif de reproduction à ouvertures multiples selon l'une des revendications précédentes, qui présente par ailleurs une première optique de zone partielle (1006a) qui est associée exclusivement à la première zone partielle (74a) et influence la reproduction de la première zone partielle (74a) sur la première zone de capteur d'image (58a).

5. Dispositif de reproduction à ouvertures multiples selon l'une des revendications précédentes, dans lequel la deuxième optique (64b) est configurée pour reproduire une quatrième zone partielle (74d) de la zone d'objet (72) sur une quatrième zone de capteur d'image (58d);

   dans lequel la troisième zone partielle (74c) et la quatrième zone partielle (74d) sont disjointes dans la zone d'objet (72).

6. Dispositif de reproduction à ouvertures multiples selon l'une des revendications précédentes, dans lequel la première optique (64a) du premier canal (16a) ou une combinaison de la première optique (64a) et d'une première optique de zone partielle (1006a), qui est associée exclusivement à la première zone partielle (74a), présente, avec un angle de champ (w) augmentant à partir de ZÉRO, une distorsion (V) de plus en plus négative en quantité à une première augmentation de changement (dV/dw) de la distorsion (V), jusqu'à ce que soit atteinte une première valeur de seuil d'angle de champ (w₁), dans lequel une deuxième augmentation de changement de la distorsion (V) est inférieure, à un angle de champ (w) augmentant au-dessus de la valeur seuil d'angle de champ (wi), à la première augmentation de changement (dV/dw).

7. Dispositif de reproduction à ouvertures multiples selon l'une des revendications précédentes, dans lequel le réseau (14) destiné à détecter la zone d'objet (72) est formé d'une seule ligne.

8. Dispositif de reproduction à ouvertures multiples selon l'une des revendications précédentes, dans lequel la première optique (64a) du premier canal (16a) ou une combinaison de la première optique (64a) et d'une première optique de zone partielle (1006a), qui est associée exclusivement à la première zone partielle (74a), présente une symétrie miroir par rapport à un plan (1008) qui contient l'axe optique (1012) de l'optique (64a) utilisée en commun par les optiques de zone partielle (1006a-b) et s'étend perpendiculairement à une direction d'extension de lignes (146) du réseau (14), de sorte qu'une réfraction de la lumière à travers la première optique (64a) soit symétrique pour un trajet de faisceau (17a) vers la première région partielle (74a) et un trajet de faisceau (17b) vers la deuxième zone partielle (74b), dans lequel la symétrie est présente en l'absence de symétrie de rotation par rapport à celle de l'axe optique (1012).

9. Dispositif de reproduction à ouvertures multiples selon l'une des revendications précédentes, avec un dispositif de déviation de faisceau (18) qui est disposé entre le réseau (14) et la zone d'objet (72) et qui est conçu pour dévier un trajet de faisceau (17a à d) des canaux optiques (64a à d).

10. Dispositif de reproduction à ouvertures multiples selon la revendication 9, dans lequel le dispositif de déviation de faisceau (18) est formé comme un réseau de facettes (68a à d; 68i) qui sont disposées dans une direction d'extension de lignes (z; 146) du réseau (14) de canaux optiques (16a à d; 16N), et dans lequel une facette est associée à chaque canal optique (16a à d).

11. Dispositif de reproduction à ouvertures multiples selon la revendication 9 ou 10, dans lequel le dispositif de déviation de faisceau (18) est formé comme un réseau de facettes (68a à d; 68i) qui sont disposées dans une direction d'extension de lignes (z; 146) du réseau (14) de canaux optiques (16a à d; 16N), et un premier trajet de faisceau d'un premier canal optique (16a à d) et au moins un autre trajet de faisceau d'un autre canal optique (16a à d) sont associés à une facette.

12. Dispositif de reproduction à ouvertures multiples selon l'une des revendications précédentes, dans lequel chaque zone partielle de la zone d'objet est reproduite par au moins deux canaux optiques sur au moins deux zones de capteur d'image.

13. Dispositif de reproduction à ouvertures multiples selon l'une des revendications précédentes, dans lequel une quantité totale de canaux optiques du réseau (14) reproduit une quantité totale de zones partielles de la zone d'objet sur une quantité totale de zones de capteur d'image de l'au moins un capteur d'image (12; 12a à h) et dans lequel la quantité totale de zones partielles reproduit complètement la zone d'objet à capturer.

14. Système de reproduction (9000) avec au moins un premier et au moins un deuxième dispositif de reproduction à ouvertures multiples selon l'une des revendications 1 à 13.

15. Procédé de détection d'une zone d'objet avec un capteur d'image (12) aux étapes suivantes consistant à:

   reproduire une zone d'objet par un réseau (14) de canaux optiques disposés l'un à côté de l'autre, où chaque canal optique (16a à d) présente une optique destinée à reproduire au moins une zone partielle d'une zone d'objet sur une zone de capteur d'image du capteur d'image (12; 12a à h);

reproduire, par une lentille commune, une première zone partielle de la zone d'objet sur une première zone de capteur d'image et reproduire une deuxième zone partielle de la zone d'objet sur une deuxième zone de capteur d'image, qui est différente de la première zone de capteur d'image, par une première optique d'un premier canal optique (16a à d); et

reproduire une troisième zone partielle de la zone d'objet par une deuxième optique d'un deuxième canal optique (16a à d);

de sorte que la première zone partielle et la deuxième zone partielle soient disjointes dans la zone d'objet et soient éloignées l'une de l'autre, et de sorte que la troisième zone partielle vienne en chevauchement de manière incomplète avec la première zone partielle;

de sorte qu'un nombre total des canaux optiques (16a à h) soit configuré pour transmettre entièrement la zone d'objet;

de sorte que la troisième zone partielle soit disposée dans la zone d'objet entre la première zone partielle et la deuxième zone partielle;

de sorte qu'entre la première zone de capteur d'image (58a) et la deuxième zone de capteur d'image (58b) soit disposé un espace vide de technique de construction; et

de sorte que la première zone de capteur d'image soit disposée adjacente à la deuxième zone de capteur d'image, et que la troisième zone de capteur d'image soit disposée adjacente à la première ou la deuxième zone de capteur d'image.

Fig. 1

Fig. 2a

2000'

68a　　　　　　　　　　　　　68b

18

| S1 | S2 |

64a　　　　　　64b　　　　　　64c　　　　　　64d

16d

58a　　　　58b　　　　58c　　　　58d

16d

1　　　　16a　　16b　　2　　3　　16c 16d　　4

Fig. 2b

EP 3 403 392 B1

Fig. 3a

Fig. 3b

Fig. 4a

EP 3 403 392 B1

Fig. 4b

EP 3 403 392 B1

Fig. 5a

Fig. 5b

Fig. 6

6000

EP 3 403 392 B1

56

Fig. 7a

EP 3 403 392 B1

Fig. 7b

Fig. 7c

EP 3 403 392 B1

Fig. 7d

EP 3 403 392 B1

Fig. 7e

EP 3 403 392 B1

Fig. 7f

EP 3 403 392 B1

Fig. 7g

Fig. 7h

EP 3 403 392 B1

EP 3 403 392 B1

8000

16a 16b 16c 16d

1014a
1016

1    1'    2    3    3'    4

Fig. 8a

EP 3 403 392 B1

8000

16a  16b  16c  16d

1014a

1016

1  1'  2  3  3'  4

1004a  1004b

Fig. 8b

Fig. 9a

Fig. 9b

EP 3 403 392 B1

EP 3 403 392 B1

10000

4000a

4000b

18a
(optional)

18b
(optional)

Fig. 10a

Fig. 10b

Fig. 11a

EP 3 403 392 B1

74a

74b

1

1'

74c

2

2'

74d

74g

4

4'

74h

74e

3

3'

74f

Fig. 11b

Fig. 11c

EP 3 403 392 B1

Fig. 12a

Fig. 12b

Fig. 12c

EP 3 403 392 B1

Fig. 13a

Fig. 13b

Fig. 14

Fig. 15a

Fig. 15b

20    22    34b (optional)

16
12
22    34a

# Fig. 16a

20    22    24    18    19a
16    17
12
34a

# Fig. 16b

20    22    34b
16
12    17  18  19b
22    34a

# Fig. 16c

Fig. 17a

Fig. 17b

Fig. 17c

**Fig. 18a**

**Fig. 18b**

Fig. 19a

Fig. 19b

Fig. 19c

Fig. 20a

Fig. 20b

60

22a 36a

32

24

48

18 36b

22b

## Fig. 20c

60

53a

22a 36a 52a

B>A

12 A B 48'

46

22b 16a 16b 36b 52b

53b

## Fig. 20d

Fig. 21

Fig. 22

Fig. 23

100

22

32

22c

Fig. 24a

Fig. 24b

100

22

32

22c

Fig. 24c

Fig. 25a

Fig. 25b

Fig. 26

Fig. 27a

Fig. 27b

Fig. 28

Fig. 29a

Fig. 29b

Fig. 29e

Fig. 29c

Fig. 29d

128i

128i'    128i''    128i'''    128i''''

64i    16i    68i

58i

17i

Fig. 30a

Fig. 30b

Fig. 31

Fig. 32

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011045324 A2